# EUROPEAN PATENT APPLICATION

(11) **EP 4 773 276 A1**
(43) Date of publication of application: **08.07.2026**
(21) Application number: 24895648.4
(22) Date of filing: 09.07.2024
(51) Int. Cl.: H01M 10/052, H01M 10/058

(54) **WRAPPING DEVICE AND WRAPPING METHOD FOR ELECTRODE ASSEMBLY**

(30) Priority: 30.11.2023 CN 202311641480
(71) Applicant: Contemporary Amperex Technology Co., Limited, Ningde, Fujian 352100 (CN)
(72) Inventor: WU, Kai, Ningde, Fujian 352100 (CN); ZHANG, Yongli, Ningde, Fujian 352100 (CN); TANG, Wenxiang, Ningde, Fujian 352100 (CN); SUN, Weiwei, Ningde, Fujian 352100 (CN); PAN, Wensheng, Ningde, Fujian 352100 (CN); FAN, Xiang, Ningde, Fujian 352100 (CN)
(74) Representative: Ziebig Hengelhaupt Intellectual Property Attorneys Patentanwaltskanzlei PartGmbB
(86) International application number: PCT/CN2024/104486
(87) International publication number: WO 2025/112545

(57) **Abstract**

The present application provides a coating device and coating method for an electrode assembly. The electrode assembly includes an electrode main body, the electrode main body has a first direction, a second direction and a third direction that are orthogonal to each other, and includes two main surfaces, two end surfaces, and two side surfaces, and the coating device includes a discharge assembly, a cutting assembly and a first coating assembly. The discharge assembly is used to store and release a material strip, which includes a plurality of coating films connected in sequence along a length direction of the material strip, and each coating film includes two main coating areas spaced apart from each other and a connecting area connected between the two main coating areas. The cutting assembly is used to cut a head end coating film located at a head end of the material strip from the material strip. The first coating assembly is used to coat the first of the two end surfaces with the connecting area of the head end coating film, and to coat each of the two main surfaces with corresponding one of the two main coating areas, so as to form an electrode coating body. Through the above manner, the action complexity of a coating process can be simplified.

## Description

### TECHNICAL FIELD

The present application relates to the technical field of battery assembly, in particular to a coating device and coating method for an electrode assembly.

### BACKGROUND

With the development of battery technologies, batteries are applied in increasingly more fields and gradually replace traditional fossil energy in the field of automotive power. Batteries can store chemical energy and convert it into electrical energy in a controlled manner. In recyclable batteries, active substances can be activated by charging for reuse after discharge.

A battery is often provided with an electrode assembly and a coating film. The coating film has an insulating function and can be used to coat the electrode assembly. During the battery production process, a coating device is required to coat the electrode assembly with the coating film. However, the existing coating device has relatively complex action, which makes it inconvenient to maintain the coating device.

### SUMMARY OF THE INVENTION

In view ofthe above problems, the present application provides a coating device and coating method for an electrode assembly, which can simplify the action complexity of a coating process and facilitate the maintenance of the coating device.

In a first aspect, the present application provides a coating device for an electrode assembly, the electrode assembly includes an electrode main body, the electrode main body has a first direction, a second direction and a third direction that are orthogonal to each other, and includes two main surfaces arranged opposite to each other along the first direction, two end surfaces arranged opposite to each other along the second direction and two side surfaces arranged opposite to each other along the third direction, and the coating device includes a discharge assembly, a cutting assembly and a first coating assembly. The discharge assembly is used to store and release a material strip, which includes a plurality of coating films connected in sequence along a length direction of the material strip, and each coating film includes two main coating areas spaced apart from each other and a connecting area connected between the two main coating areas. The cutting assembly is used to cut the head end coating film located at a head end of the material strip from the material strip. The first coating assembly is used to coat the first of the two end surfaces with the connecting area of the head end coating film, and to coat each of the two main surfaces with corresponding one of the two main coating areas, so as to form an electrode coating body.

Through the above manner, the first coating assembly can drive the electrode assembly to approach the head end coating film, so that the connecting area of the head end coating film contacts and coats the first of the two end surfaces, and the two main coating areas each coat the corresponding one of the two main surfaces. Such an arrangement enables continuous feeding of the coating film, can reduce the arrangement of manipulators, simplifies the action complexity of the coating process, and facilitates maintenance of the coating device.

In some embodiments, the first coating assembly includes an electrode drive mechanism and a main surface coating mechanism. The electrode driving mechanism is used to transfer the electrode assembly along the second direction so that first one of the two end surfaces contacts the connecting area. The main surface coating mechanism is used to continue to drive the electrode assembly along the second direction after the first of the two end surfaces contacts the connecting area, and to make the two main coating areas each coat the corresponding one of the two main surfaces.

Through the above manner, by arranging the electrode drive mechanism and the main surface coating mechanism, the relative position relationship between the two main surfaces and the two coating areas can be adjusted, as well as the relative position relationship between the first of the two end surfaces and the connecting area can be adjusted. When the coating film coats the two main surfaces of the electrode main body and the first of the two end surfaces, the stability of the coating process can be improved, making the coating action more concise and smooth.

In some embodiments, the main surface coating mechanism includes two pressure roller groups arranged side by side and spaced apart from each other. The electrode drive mechanism feeds the electrode assembly and the head end coating film into the space between the two pressure roller groups after the first of the two end surfaces contacts the connecting area, and the two pressure roller groups drive the electrode assembly in a rolling manner and press each of the two main coating areas on corresponding one of the two main surfaces.

Through the above manner, in the process of coating the two main surfaces with the coating film, the arrangement and use of the manipulator can be reduced, the complexity of the action of the coating device for pressing the two main coating areas on the two main surfaces respectively can be simplified, and the maintenance of the coating device can be facilitated.

In some embodiments, at least one of the two pressure roller groups is arranged to be capable of floating along the first direction.

Through the above manner, the distance between the two pressure roller groups can be adjusted, so that the distance between the two pressure roller groups can more accurately match the size of the electrode assembly along the first direction, thereby improving the coating effect.

In some embodiments, one of the two pressure roller groups is an active pressure roller group, or the two pressure roller groups are active pressure roller groups respectively, and a movement direction of a contact point between the active pressure roller group and the main surface is consistent with the movement direction of the electrode drive mechanism.

Through the above manner, the resistance of the pressure roller groups to the movement of the electrode assembly along the second direction can be reduced, and the movement stability of the electrode assembly and the head end coating film entering between the two pressure roller groups can be improved.

In some embodiments, the first coating assembly further includes a first film positioning mechanism and a second film positioning mechanism, the first film positioning mechanism is used to position an end of the head end coating film toward the discharge assembly, the second film positioning mechanism is used to position the other end of the head end coating film away from the discharge assembly, so that before the first of the two end surfaces contacts the connecting area, the connecting area and the two main coating areas of the head end coating film are coplanar with each other, and the second direction is perpendicular to a plane where the connecting area is located.

Through the above manner, by arranging the connecting area and the two main coating areas to be coplanar with each other, the two main coating areas will not block the connecting area, which can reduce the interference of the two main coating areas on the process of the first of the two end surfaces contacting the connecting area, thereby improving the coating efficiency and coating effect.

In some embodiments, the first coating assembly further includes a third film positioning mechanism, the third film positioning mechanism is located on a side of the first film positioning mechanism toward the discharge assembly and is used to position a subsequent coating film adjacent to the head end coating film, and the cutting assembly cuts the material strip between the first film positioning mechanism and the third film positioning mechanism.

Through the above manner, during the cutting process, the first film positioning mechanism and the third film positioning mechanism can position two sides of a preset position, thereby improving the stability of the cutting process and improving the cutting effect.

In some embodiments, the third film positioning mechanism is further arranged to feed the subsequent coating film into the first film positioning mechanism and the second film positioning mechanism after the head end coating film is cut from the material strip.

Through the above manner, the feeding of the coating film can be continuously connected between different positions, thereby improving the stability of the coating process.

In some embodiments, the electrode assembly further includes a tab portion protruding from the first of the two end surfaces, the connecting area is provided with an opening, and the first coating assembly is arranged so that the tab portion penetrates through the opening.

Through the above manner, after the tab portion penetrates through the opening, the tab portion can limit the connecting area, thereby reducing the risk of sliding displacement of the coating film relative to the electrode assembly.

In some embodiments, the discharge assembly includes two discharge mechanisms, the discharge mechanisms store and release the material strips respectively, wherein the material strip corresponding to the first of the two discharge mechanisms serves as a working material strip and is fed into the first coating assembly, the material strip corresponding to the second of the two discharge mechanisms serves as a spare material strip, the coating device further includes a switching assembly, and the switching assembly is used to fix the spare material strip to the working material strip, so that the spare material strip is fed into the first coating assembly under driving of the working material strip.

Through the above manner, when the working material strip is about to be released completely, a coating film on the spare material strip can be automatically fed into the first coating assembly without stopping a machine to change a roll, so as to continuously provide the coating film to the first coating assembly and improve the coating efficiency of the coating device.

In some embodiments, the switching assembly includes two pressing mechanisms and a material strip cutting mechanism. The two pressing mechanisms cooperate with each other to clamp the working material strip and the spare material strip from two sides of the working material strip and the spare material strip. The material strip cutting mechanism cuts the working material strip and the spare material strip in a clamped state so that the working material strip and the spare material strip each form an upstream part and a downstream part located upstream and downstream of a cutting position of the material strip cutting mechanism. The two pressing mechanisms connect the downstream part of the working material strip with the upstream part of the spare material strip.

Through the above manner, when the working material strip is about to be released completely, the coating film on the spare material strip can be automatically fed into the first coating assembly in place of the working material strip without stopping the machine to change the roll, so as to continuously provide the coating film to the first coating assembly and improve the coating efficiency.

In some embodiments, the two pressing mechanisms each include a pressing member, at least one of the two pressing mechanisms includes a pressing drive member, the pressing member includes a first pressing area and a second pressing area separated by a slot, the pressing drive member drives at least one pressing member so that the two first pressing areas cooperate with each other to clamp the working material strip and the spare material strip, the two second pressing areas cooperate with each other to clamp the working material strip and the spare material strip, and the material strip cutting mechanism includes a cutter, which is telescopically arranged in a slot of the first of the two pressing members, and extends into a slot of the second of the two pressing members in the clamped state, thereby cutting the working material strip and the spare material strip.

Through the above manner, the cutter can cut the working material strip and the spare material strip into two parts respectively through one cutting action. Such an arrangement can improve cutting efficiency and simplify the cutting structure.

In some embodiments, the material strip cutting mechanism includes an elastic member, and the elastic member is arranged to elastically support the first of the two pressing members so that the first of the two pressing members elastically retreats in the clamped state, thereby making the cutter extend out of the slot of the first of the two pressing members.

Through the above manner, there is no need to arrange a specific power apparatus to drive the cutter to move relative to the two pressing members, thereby simplifying the cutting structure.

In some embodiments, the first of the two pressing mechanisms is arranged to simultaneously adsorb the downstream part of the working material strip and the upstream part of the spare material strip, and the second of the two pressing mechanisms is arranged to apply connecting tape at a joining position of the downstream part of the working material strip and the upstream part of the spare material strip.

Through the above manner, the connecting efficiency and working stability of the downstream part of the working material strip and the upstream part of the spare material strip can be improved.

In some embodiments, the two pressing mechanisms each include a pressing member, the pressing member of the first of the two pressing mechanisms is arranged to simultaneously adsorb the downstream part of the working material strip and the upstream part of the spare material strip, the second of the two pressing mechanisms includes a pressing drive member, a rotating drive member, and a tape attaching member, the tape attaching member is arranged to carry the connecting tape, and the rotating drive member is arranged to be capable of rotationally driving the tape attaching member and the pressing member of the second of the two pressing mechanisms to switch between a first state and a second state. In the first state, the pressing members in the two pressing mechanisms are arranged opposite to each other, in the second state, the tape attaching member and the pressing member of the first of the two pressing mechanisms are arranged opposite to each other, and the pressing drive member is arranged to drive the pressing members in the two pressing mechanisms to press each other in the first state, and to drive the tape attaching member and the pressing member of the first of the two pressing mechanisms to press each other in the second state.

Through the above manner, the movement stability of the pressing member and the tape attaching member can be improved, and the cutting effect and the connecting effect of the connecting tape can be improved.

In some embodiments, the discharge assembly corresponding to the working material strip is further arranged to collect the upstream part of the working material strip, and the switching assembly further includes a collecting mechanism for collecting the downstream part of the spare material strip.

Through the above manner, the automation level of the coating device can be improved.

In some embodiments, during a process of collecting the upstream part of the working material strip and the downstream part of the spare material strip, the two pressing mechanisms are in a separated state, and the two pressing mechanisms are further arranged to respectively adsorb the downstream part of the working material strip and the upstream part of the spare material strip, and transfer the downstream part of the working material strip and the upstream part of the spare material strip to the first of the two pressing mechanisms after the upstream part of the working material strip and the downstream part of the spare material strip are collected.

Through the above manner, after the two pressing mechanisms release the clamping of the working material strip and the spare material strip, the downstream part of the working material strip and the upstream part of the spare material strip do not loosen or misalign relative to the joining position, so as to improve the accuracy of connecting the downstream part of the working material strip and the upstream part of the spare material strip.

In some embodiments, the two pressing mechanisms each include a pressing member, at least one of the two pressing mechanisms includes a pressing drive member, the pressing member includes a first pressing area and a second pressing area separated from each other, the pressing drive member drives at least one pressing member so that the two first pressing areas cooperate with each other to clamp the working material strip and the spare material strip, the two second pressing areas cooperate with each other to clamp the working material strip and the spare material strip, and the material strip cutting mechanism cuts the working material strip and the spare material strip in a separated area of the first pressing area and the second pressing area.

After cutting is completed, the pressing drive member drives the two pressing members to be separated from each other, the two pressing members respectively adsorb the downstream part of the working material strip and the upstream part of the spare material strip, after the upstream part of the working material strip and the downstream part of the spare material strip are collected, the pressing drive member drives the two pressing members to be separated from each other, and the first of the two pressing mechanisms simultaneously adsorbs the downstream part of the working material strip and the upstream part of the spare material strip.

Through the above manner, the downstream part of the working material strip and the upstream part of the spare material strip can be stably positioned, so as to facilitate the connection of the downstream part of the working material strip and the upstream part of the spare material strip.

In some embodiments, the coating device further includes a positioning assembly, and the positioning assembly is arranged to clamp and fix the electrode coating body output by the first coating assembly from outer sides of the two main coating areas.

Through the above manner, the electrode coating body can be stably separated from the first coating assembly.

In some embodiments, the coating film includes a side coating area connected with the main coating area, the coating device further includes a second coating assembly, the positioning assembly transfers the electrode coating body to the second coating assembly, and the second coating assembly is arranged to drive the side coating area to contact and coat the side surface.

Through the above manner, by arranging the second coating assembly to coat the side surface with the side coating area, the coating effect of the coating film on the electrode main body can be improved.

In some embodiments, the second coating assembly includes a side surface pressing plate, a first pressing plate drive mechanism, and a second pressing plate drive mechanism, the first pressing plate drive mechanism is used to drive the side surface pressing plate along the first direction so that the side surface pressing plate pushes the side coating area to be bent toward the side surface relative to the main coating area, and the second pressing plate drive mechanism is used to drive the side surface pressing plate along the third direction so that the side surface pressing plate presses the side coating area on the side surface.

Through the above manner, the action of bending the side coating area by the second coating assembly and the action of coating the side surface with the side coating area can be smoothly connected, which is beneficial to simplifying the action and structure of the second coating assembly and improving the coating efficiency.

In some embodiments, the coating film includes an end coating area connected with the main coating area, and the second coating assembly is arranged to drive the end coating area to contact and coat the second of the two end surfaces.

Through the above manner, the coating effect of the coating film on the electrode main body can be improved.

In some embodiments, the second coating assembly includes an end surface pressing plate, a first pressing plate drive mechanism, and a third pressing plate drive mechanism, the first pressing plate drive mechanism is used to drive the end surface pressing plate along the first direction so that the end surface pressing plate pushes the end coating area to be bent toward the second of the two end surfaces relative to the main coating area, and the third pressing plate drive mechanism is used to drive the end surface pressing plate along the second direction so that the end surface pressing plate presses the end coating area on the second of the two end surfaces.

Through the above manner, the end surface pressing plate moves along the second direction close to the electrode main body to press the end coating area on the second of the two end surfaces, so that the end coating area coats the second of the two end surfaces.

In some embodiments, the coating film further includes a side coating area and an end coating area connected with the main coating area, wherein the side coating area coats the side surface, and the end coating area coats the second of the two end surfaces. The coating device further includes a first tape attaching assembly, which is used to drive the electrode assembly and first tape to perform a relative movement. The first tape includes a first part and a second part connected with each other. The first tape attaching assembly is arranged to attach the first part of the first tape to the side coating area and the second part of the first tape to the end coating area at a corner formed by the side surface and the second of the two end surfaces.

Through the above manner, the first tape can connect the side coating area and the end coating area together, so that the side coating area and the end coating area can be kept fixed relative to the electrode main body, thereby improving the coating firmness of the coating film to the electrode main body.

In some embodiments, the first tape attaching assembly includes a first unwinding mechanism, a first tape pulling mechanism, and a first cutting mechanism. The first unwinding mechanism is arranged to place and release a first tape roll, the first tape pulling mechanism is arranged to clamp and pull a head end of a released part of the first tape roll, and the first cutting mechanism is arranged to cut the first tape from the released part of the first tape roll.

Through the above manner, the automatic provision of the first tape is facilitated.

In some embodiments, the first tape pulling mechanism includes a first tape clamping cylinder, a first tape pulling motor, and a first tape clamping member, the first tape clamping cylinder is used to drive the first tape clamping member to clamp the head end of the released part, and the first tape pulling motor is used to drive the first tape clamping member to move to pull the released part.

Through the above manner, the released part of the first tape roll can be extended, and the released part of the first tape roll is stretched to facilitate cutting.

In some embodiments, the first unwinding mechanisms and the first cutting mechanisms are two corresponding groups. The first tape attaching assembly includes a switching mechanism, and the switching mechanism includes a material roll holder and a switching motor. The two groups of the first unwinding mechanisms and the first cutting mechanisms are arranged on the material roll holder. The switching motor drives the material roll holder to rotate around a predetermined rotation axis, so that the two groups of the first unwinding mechanisms and the first cutting mechanisms can switch between a spare position and a working position for the first tape pulling mechanism and the first cutting mechanisms to operate. The rotation axis is perpendicular to a plane where the released part is located.

Through the above manner, a quick roll change operation of the first tape roll is facilitated, and the roll change efficiency can be improved.

In some embodiments, the first tape attaching assembly includes a first tape taking mechanism, which is used to adsorb and take away the first tape. The first cutting mechanism includes a first pressing block, a first cutter, and a first cutting cylinder. The first pressing block and the first cutter are relatively fixedly arranged. The first cutting cylinder is arranged to drive the first pressing block to press the released part on the first tape taking mechanism, and drive the first cutter to cut the first tape from the released part.

Through the above manner, the first pressing block can press and position the released part, thereby improving the stability of the cutting process.

In some embodiments, the first tape attaching assembly includes a first tape taking mechanism, which is used to adsorb and take away the first tape. The first tape taking mechanism includes a first tape taking member, a first tape taking motor, a second tape taking motor, a first tape taking holder, and a second tape taking holder. The first tape taking member is used to adsorb the first tape. The first tape taking motor is arranged on the first tape taking holder, and drives the second tape taking holder to move above the released part. The second tape taking motor is arranged on the second tape taking holder, and drives the first tape taking member to approach and move away from a plane where the released part is located.

Through the above manner, the degree of freedom of movement of the first tape taking member can be improved, so as to facilitate the absorption and transfer of the first tape.

In some embodiments, the first tape taking member includes a first sub-tape taking portion and a second sub-tape taking portion. The first sub-tape taking portion is used to adsorb the first part of the first tape and attach the same to the side coating area. The second sub-tape taking portion is used to adsorb the second part of the first tape and attach the same to the end coating area.

Through the above manner, the continuity of the tape taking action and the tape attaching action can be improved.

In some embodiments, the first sub-tape taking portion is a telescopic member. The second tape taking motor drives the first tape taking member along the third direction, and the first sub-tape taking portion presses the first part of the first tape on the side coating area and contracts, so that the second sub-tape taking portion can continue to move along the third direction and fit the end coating area, thereby attaching the second part of the first tape to the end coating area. Or, the second sub-tape taking portion is a telescopic member. The second tape taking motor drives the first tape taking member along the second direction, and the second sub-tape taking portion presses the second part of the first tape on the end coating area and contracts, so that the first sub-tape taking portion can continue to move along the second direction and fit the side coating area, thereby attaching the first part of the first tape to the side coating area.

Through the above manner, the structural flexibility of the first tape taking member can be improved, so that the first tape taking member can adaptively adjust its shape according to the shape of the electrode main body, thereby achieving diversified tape attaching actions.

In some embodiments, the first cutting mechanism is arranged to cut two pieces of first tape from the released part, the number of the first tape taking members is two, and the first tape taking members respectively adsorb the corresponding first tape. The first tape attaching assembly includes the first tape taking mechanism, the first tape taking mechanism is used to adsorb and take away the first tape, and the first tape taking mechanism includes the first tape taking members, a first tape taking motor, a second tape taking motor, a first tape taking holder, a second tape taking holder, a third tape taking holder, and a tape dispensing cylinder. The first tape taking members are used to adsorb the first tape. The first tape taking motor is arranged on the first tape taking holder, and drives the second tape taking holder to move above the released part. The second tape taking motor is arranged on the second tape taking holder, and drives the third tape taking holder and the two first tape taking members to approach and move away from the plane where the released part is located. The tape dispensing cylinder is arranged on the third tape taking holder, and the tape dispensing cylinder is arranged to drive the two first tape taking members away from each other, so that the two first tape taking members respectively correspond to two corners of the electrode assembly spaced apart along the third direction.

Through the above manner, the first tape taking mechanism can adsorb and take away the two pieces of first tape corresponding to each electrode assembly, and then simultaneously and correspondingly attach the two pieces of first tape to the two corners of the electrode assembly spaced apart along the third direction, thereby improving the tape attaching efficiency.

In some embodiments, the coating device further includes a second tape attaching assembly, which is used to drive the electrode assembly and second tape to perform a relative movement, and the second tape includes a first part and a second part connected with each other. The second tape attaching assembly is arranged to attach the first part of the second tape to the main coating area and the second part of the second tape to the side coating area at a corner formed by the side surface and the main surface.

Through the above manner, the side coating area and the main coating area can be kept fixed relative to the electrode main body, thereby improving the coating firmness of the coating film to the electrode main body.

In some embodiments, the number of first parts of the second tape is two, the first parts are located at two ends of the second part of the second tape, and the second tape attaching assembly is arranged to attach each of the two first parts of the second tape to corresponding one of the two main coating areas.

Through the above manner, a contact area between the second tape and the coating film can be increased, thereby improving the fixing effect on the side coating area.

In some embodiments, the second tape attaching assembly includes a second unwinding mechanism, a second tape pulling mechanism, and a second cutting mechanism. The second unwinding mechanism is arranged to place and release a second tape roll. The second tape pulling mechanism is arranged to clamp and pull a head end of a released part of the second tape roll. The second cutting mechanism is arranged to cut the second tape from the released part of the second tape roll.

Through the above manner, the automatic provision of the second tape is facilitated.

In some embodiments, the second tape pulling mechanism includes a second tape clamping cylinder, a second tape pulling motor, and a second tape clamping member. The second tape clamping cylinder is used to drive the second tape clamping member to clamp the head end of the released part, and the second tape pulling motor is used to drive the second tape clamping member to move to pull the released part.

Through the above manner, the released part of the second tape roll can be extended, and the released part of the second tape roll is stretched to facilitate cutting.

In some embodiments, the second unwinding mechanisms and the second cutting mechanisms are two corresponding groups, and are spaced apart along a width direction of the released part. The second tape attaching assembly includes a tape pulling holder, a tape pulling position switching cylinder, and a tape pulling position switching holder, the tape pulling position switching cylinder is arranged on the tape pulling holder, and the second tape pulling mechanism is arranged on the tape pulling position switching holder. The tape pulling position switching cylinder is arranged to drive the tape pulling position switching holder to move along a spaced direction of the two second unwinding mechanisms, so that the second tape pulling mechanism can switch between a spare position and a working position for the second tape pulling mechanism to operate. The spare position and the working position are each provided with one group of the second unwinding mechanism and the second cutting mechanism.

Through the above manner, by arranging the two groups of second unwinding mechanisms and second cutting mechanisms, the interference of a roll change operation for the second tape roll on the tape pulling process can be reduced, and the tape pulling efficiency can be improved. By arranging the tape pulling position switching cylinder to drive the tape pulling position switching holder to move along the spaced direction of the two second unwinding mechanisms, a position of the tape pulling mechanism can correspond to a position of one group of second unwinding mechanism and second cutting mechanism that is working, which facilitates the tape pulling operation.

In some embodiments, the second tape attaching assembly includes a second tape taking mechanism, which is used to adsorb and take away the second tape. The second cutting mechanism includes a second pressing block, a second cutter, and a second cutting cylinder. The second pressing block and the second cutter are relatively fixedly arranged. The second cutting cylinder is arranged to drive the second pressing block to press the released part on the second tape taking mechanism, and drive the second cutter to cut the second tape from the released part.

Through the above manner, the second pressing block can press and position the released part, thereby improving the stability of the cutting process.

In some embodiments, the second tape attaching assembly includes a second tape taking mechanism, which is used to adsorb and take away the second tape. The second tape taking mechanism includes a second tape taking member, a fourth tape taking motor, and a fourth tape taking holder, and the second tape taking member is used to adsorb the second tape. The fourth tape taking motor is arranged on the fourth tape taking holder, drives the second tape taking member to move to be arranged opposite to the released part along a thickness direction of the released part, and drives the second tape taking member to approach and move away from a plane where the released part is located.

Through the above manner, the degree of freedom of movement of the second tape taking member can be improved, so as to facilitate the absorption and transfer of the second tape.

In some embodiments, the second tape taking member includes a third sub-tape taking portion and a fourth sub-tape taking portion. The third sub-tape taking portion is used to adsorb the first part of the second tape and attach the same to the main coating area. The fourth sub-tape taking portion is used to adsorb the second part of the second tape and attach the same to the side coating area.

Through the above manner, the continuity of the tape taking action and the tape attaching action can be improved.

In some embodiments, the fourth sub-tape taking portion is a telescopic member. The fourth tape taking motor drives the second tape taking member along the third direction, and the fourth sub-tape taking portion presses the second part of the second tape on the side coating area and contracts, so that the third sub-tape taking portion can continue to move along the third direction and fit the main coating area, thereby attaching the first part of the second tape to the main coating area.

Through the above manner, the structural flexibility of the second tape taking member can be improved, so that the second tape taking member can adaptively adjust its shape according to the shape of the electrode main body, thereby achieving diversified tape attaching actions.

In some embodiments, the second unwinding mechanisms and the second cutting mechanisms are two corresponding groups, and are spaced apart along a width direction of the released part. The second tape taking mechanism includes a tape taking position switching cylinder and a tape taking position switching holder. The tape taking position switching cylinder is arranged on the fourth tape taking holder, and the second tape taking member is arranged on the tape taking position switching holder. The tape taking position switching cylinder is arranged to drive the tape taking position switching holder to move along a spaced direction of the two second unwinding mechanisms, so that the second tape taking member can switch between a spare position and a working position for the second tape taking mechanism to operate. The spare position and the working position are each provided with one group of the second unwinding mechanism and the second cutting mechanism.

Through the above manner, by arranging the tape taking position switching cylinder to drive the tape taking position switching holder to move along the spaced direction of the two second unwinding mechanisms, a position of the second tape taking member can correspond to a position of one group of second unwinding mechanism and second cutting mechanism that is working, which facilitates the tape taking operation.

In a second aspect, the present application provides a coating method for an electrode assembly, the electrode assembly includes an electrode main body, and the electrode main body has a first direction, a second direction and a third direction that are orthogonal to each other, and includes two main surfaces arranged opposite to each other along the first direction, two end surfaces arranged opposite to each other along the second direction and two side surfaces arranged opposite to each other along the third direction. The coating method includes: controlling a discharge assembly to release a material strip, wherein the material strip includes a plurality of coating films connected in sequence along a length direction of the material strip, and each coating film includes two main coating areas spaced apart from each other and a connecting area connected between the two main coating areas; controlling a cutting assembly to cut a head end coating film located at a head end of the material strip from the material strip; and controlling a first coating assembly to coat the first of the two end surfaces with the connecting area of the head end coating film, and to coat each of the two main surfaces with corresponding one of the two main coating areas, so as to form an electrode coating body. In some embodiments, controlling the first coating assembly to coat the first of the two end surfaces with the connecting area of the head end coating film, and to coat each of the two main surfaces with corresponding one of the two main coating areas includes: controlling an electrode drive mechanism to transfer the electrode assembly along the second direction to make the first of the two end surfaces contact the connecting area, and feed the electrode assembly into the space between two pressure roller groups; and controlling the two pressure roller groups to continue to transfer the electrode assembly along the first direction in a rolling manner and press each of the two main coating areas on corresponding one of the two main surfaces.

In some embodiments, the discharge assembly includes two discharge mechanisms, the discharge mechanisms store and release the material strips respectively, wherein the material strip corresponding to the first of the two discharge mechanisms serves as a working material strip and is fed into the first coating assembly, and the material strip corresponding to the second of the two discharge mechanisms serves as a spare material strip. The coating method further includes: controlling two pressing mechanisms to cooperate with each other to clamp the working material strip and the spare material strip from two sides of the working material strip and the spare material strip; controlling a material strip cutting mechanism to cut the working material strip and the spare material strip in a clamped state so that the working material strip and the spare material strip each form an upstream part and a downstream part located upstream and downstream of a cutting position of the material strip cutting mechanism; and controlling the two pressing mechanisms to connect the downstream part of the working material strip with the upstream part of the spare material strip.

In some embodiments, controlling the two pressing mechanisms to connect the downstream part of the working material strip with the upstream part of the spare material strip includes: controlling the first of the two pressing mechanisms to simultaneously adsorb the downstream part of the working material strip and the upstream part of the spare material strip; and controlling the second of the two pressing mechanisms to apply connecting tape at a joining position of the downstream part of the working material strip and the upstream part of the spare material strip.

In some embodiments, the electrode assembly includes a tab portion protruding from the first of the two end surfaces, and the connecting area is provided with an opening. Controlling the first coating assembly to coat the first of the two end surfaces with the connecting area of the head end coating film includes: controlling the first coating assembly to make the tab portion penetrate through the opening and make the connecting area to contact and coat the first of the two end surfaces.

The foregoing descriptions are merely an overview of the technical solutions in the present application. In order that technical means of the present application can be understood more clearly so that the technical solutions can be implemented according to content of the specification, and in order that the foregoing and other objectives, features, and advantages of the present application can be understood more clearly, specific implementations of the present application are described below.

### DESCRIPTION OF DRAWINGS

By reading the detailed description of the preferred implementations below, various other advantages and benefits will become apparent to those of ordinary skill in the art. The drawings are used for the purpose of illustrating the preferred embodiments only and are not to be considered a limitation to the present application. Moreover, in all of the drawings, like reference numerals represent like components. In the accompanying drawings:
FIG. 1 is a schematic structural diagram of a vehicle to which an electrode assembly is applied according to one or more embodiments.
FIG. 2 is a schematic diagram of a breakdown structure of a battery where an electrode assembly is located according to one or more embodiments.
FIG. 3 is a schematic diagram of a breakdown structure of a battery cell where an electrode assembly is located according to one or more embodiments.
FIG. 4 is a schematic diagram of a partial structure of an electrode assembly according to one or more embodiments.
FIG. 5 is a schematic structural sketch of a coating device according to one or more embodiments.
FIG. 6 is a schematic structural diagram of a coating device coating an electrode assembly to form an electrode coating body according to one or more embodiments.
FIG. 7 is a schematic sketch of a process of a relative movement of an electrode assembly and a coating film according to one or more embodiments.
FIG. 8 is a schematic diagram of a process of forming an electrode coating body by a coating film and an electrode assembly according to one or more embodiments.
FIG. 9 is a schematic structural diagram of a main surface coating mechanism and an electrode coating body according to one or more embodiments.
FIG. 10 is a schematic structural diagram of a switching assembly according to one or more embodiments.
FIG. 11 is a schematic structural diagram of a pressing mechanism shown in FIG. 10.
FIG. 12 is a schematic structural diagram of another pressing mechanism shown in FIG. 10.
FIG. 13 is a schematic diagram of a process of overturning an electrode assembly by a positioning assembly according to one or more embodiments.
FIG. 14 is a schematic structural diagram of a second coating assembly coating an electrode assembly according to one or more embodiments.
FIG. 15 is a schematic structural diagram of a second coating assembly according to one or more embodiments.
FIG. 16 is a schematic diagram of a partial structure of a second coating assembly driving a coating film and an electrode assembly shown in FIG. 14.
FIG. 17 is a schematic structural diagram of a coating film and an electrode assembly shown in FIG. 14.
FIG. 18 is a schematic structural diagram of a coating film and an electrode assembly with first tape and second tape attached according to one or more embodiments.
FIG. 19 is a schematic structural diagram of a first tape attaching assembly according to one or more embodiments.
FIG. 20 is a schematic diagram of a cooperating structure of a first unwinding mechanism, a first tape feeding mechanism, and a first tape roll according to one or more embodiments.
FIG. 21 is a schematic structural diagram of a first tape taking mechanism according to one or more embodiments.
FIG. 22 is a schematic diagram of a partial structure of a first tape pulling mechanism according to one or more embodiments.
FIG. 23 is a schematicstructural diagram of a first cutting mechanismaccording to one or more embodiments.
FIG. 24 is a schematic structural diagram of a first tape taking member adsorbing first tape according to one or more embodiments.
FIG. 25 is a schematic diagram of a cooperating structure of a secondtape attaching assembly and an electrodeassembly according to one or more embodiments.
FIG. 26 is a schematic diagram of a cooperating structure of a second unwinding mechanism, a second cutting mechanism, a second tape roll, and a second tape feeding mechanism according to one or more embodiments.
FIG. 27 is a schematic structural diagram of asecond tape pulling mechanismaccording to one or more embodiments.
FIG. 28 is a schematic structural diagram of a second tape taking mechanism adsorbing second tape according to one or more embodiments.
FIG. 29 is a schematic diagram of a partial structure of a second tape taking mechanism adsorbing second tape shown in FIG. 27.
FIG. 30 is a schematic structural diagram of a second cutting mechanism according to one or more embodiments.
FIG. 31 is a schematic structural diagram of an overturning assembly positioning an electrode assembly according to one or more embodiments.
FIG. 32 is a schematic structural diagram of an electrode assembly according to one or more embodiments.

Reference numerals in the detailed description are as follows:
1000a Vehicle;
100a Battery; 200a Controller; 300a Motor;
10a Box body; 11a First sub-box body; 12a Second sub-box body; 101b Accommodating space; 1 Battery cell;
100 Shell; 110 Accommodating case; 112 Open end; 120 End cover; 200 Electrode assembly;
201 Tab portion; 210 Electrode main body; 211 Main surface; 212a First of two end surfaces; 212b Second of two end surfaces; 212 End surface; 213 Side surface; 220 Electrode module; 221 Positive electrode plate; 222 Diaphragm; 223 Negative electrode plate; 230 Fixing member; 240 Electrode coating body;
300 Coating device; 310 Discharge assembly; 311 Discharge mechanism; 312 Collecting mechanism; 320 Cutting assembly; 330 First coating assembly; 331 Electrode drive mechanism; 332 Main surface coating mechanism; 3321 Spring; 3322 Guide column; 3323 Fixed holder; 3324 Floating holder; 333 Pressure roller group; 3331 Pressure roller; 334 First film positioning mechanism; 3341 First roller; 335 Second film positioning mechanism; 336 Third film positioning mechanism; 3361 Second roller;
340 Switching assembly; 341 Pressing mechanism; 3411 Pressing member; 3412 Pressing drive member; 3413 Slot; 3414 First pressing area; 3415 Second pressing area; 3417 Rotating drive member; 3418 Tape attaching member; 342 Material strip cutting mechanism; 3421 Cutter; 3422 Elastic member; 3423 Supporting holder;
350 Positioning assembly; 351 Moving holder; 352 Clamping arm;
360 Overturning assembly; 361 Main pressing cylinder; 362 Main pressing member; 363 Side pressing cylinder; 364 Side pressing member; 365 Rotating motor; 366 Rotating holder; 367 Shifting motor; 368 Shifting holder;
370 Second coating assembly; 371 Side surface pressing plate; 372 First pressing plate drive mechanism; 373 Second pressing plate drive mechanism; 374 End surface pressing plate; 3741 End limiting block; 3711 Side limiting block; 375 Third pressing plate drive mechanism; 376 First pressing plate cylinder; 3761 Second pressing plate cylinder; 377 Pressing plate drive motor; 378 First pressing plate holder; 379 Second pressing plate holder;
380 First tape attaching assembly; 381 First unwinding mechanism; 382 First tape pulling mechanism; 3821 First tape clamping cylinder; 3822 First tape pulling motor; 3823 First tape clamping member; 383 First cutting mechanism; 3831 First pressing block; 3832 First cutter; 3833 First cutting cylinder; 384 First tape roll; 385 Switching mechanism; 3851 Material roll holder; 3852 Switching motor; 386 First tape taking mechanism; 3861 First tape taking member; 3862 First tape taking motor; 3863 Second tape taking motor; 3864 First tape taking holder; 3865 Second tape taking holder; 3866 First sub-tape taking portion; 3867 Second sub-tape taking portion; 3868 Third tape taking holder; 3869 Tape dispensing cylinder; 387 First tape feeding mechanism;
390 Second tape attaching assembly; 391 Second unwinding mechanism; 392 Second tape pulling mechanism; 3921 Second tape clamping cylinder; 3922 Second tape pulling motor; 3923 Second tape clamping member; 393 Second cutting mechanism; 3931 Second pressing block; 3932 Second cutter; 3933 Second cutting cylinder; 394 Tape pulling holder; 3941 Tape pulling position switching cylinder; 3942 Tape pulling position switching holder; 395 Second tape taking mechanism; 3951 Second tape taking member; 3952 Fourth tape taking motor; 3953 Fourth tape taking holder; 3954 Third sub-tape taking portion; 3955 Fourth sub-tape taking portion; 3956 Tape taking position switching cylinder; 3957 Tape taking position switching holder; 396 Second tape roll; 397 Second tape feeding mechanism;
400 Coating film; 401 Material strip; 402 Working material strip; 403 Downstream part of working material strip; 404 Upstream part of working material strip; 405 Spare material strip; 406 Downstream part of spare material strip; 407 Upstream part of spare material strip; 409 Head end coating film; Subsequent coating film 411; 410 Main coating area; 420 Connecting area; 421 Opening; 430 Side coating area; 440 End coating area;
511 First part of first tape; 512 Second part of first tape; 510 First tape; 521 First part of second tape; 522 Second part of second tape; 520 Second tape;
D1 First direction; D2 Second direction; D3 Third direction; D4 Width direction of released part; D5 Spaced direction of two second unwinding mechanisms; D6 Thickness direction of released part; D7 Length direction of material strip; D8 Movement direction of contact point between active pressure roller group and main surface; D9 Movement direction of electrode drive mechanism.

### DETAILED DESCRIPTION

Embodiments of the technical solutions of the present application will be described in detail below with reference to the accompanying drawings. The following embodiments are only used to more clearly illustrate the technical solution of the present application, and therefore are only used as examples and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms "including" and "having" and any variations thereof in the specification and claims of the present application and the aforementioned BRIEF DESCRIPTION OF DRAWINGS are intended to cover non-exclusive inclusion.

In the description of the embodiments of the present application, the technical terms "first", "second", etc., are used only to distinguish between different objects and are not to be understood as indicating or implying a relative importance or implicitly specifying the number, particular order, or primary and secondary relationship of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. Moreover, the character "/" herein generally indicates that the context objects are in an "or" relationship.

In the description of the embodiments of the present application, the term "a plurality of" refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated apparatus or element must have a specific orientation, be constructed and operate in a specific orientation, and therefore, cannot be understood as a limitation to the present application.

In the description of the embodiments of the present application, unless otherwise specified and limited, the technical terms "mounting", "connection", "connection", and "fixation" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. To those of ordinarily skill in the art, the specific meanings of the above terms in the embodiments of the present application may be understood according to specific circumstances.

With the development of battery technologies, batteries are applied in increasingly more fields and gradually replace traditional fossil energy in the field of automotive power. Batteries can store chemical energy and convert it into electrical energy in a controlled manner. In recyclable batteries, active substances can be activated by charging for reuse after discharge.

A battery is often provided with an electrode assembly and a coating film. The coating film has an insulating function and can be used to coat the electrode assembly. During the battery production process, a coating device is required to coat the electrode assembly with the coating film. However, the existing coating device has relatively complex action, which makes it inconvenient to maintain the coating device.

In order to meet the demand of simplifying the action complexity of the coating process, the material strip is arranged to include a plurality of coating films connected in sequence along the length direction of the material strip, so that the material strip can continuously provide coating films, and the discharge assembly is arranged to store and release the material strip, thereby simplifying the complexity of the action of taking the coating film. A cutting assembly is arranged to cut a head end coating film located at a head end of the material strip from the material strip, so that the coating films can be made independent of each other.

Based on the above considerations, the present application provides a coating device and coating method for an electrode assembly. The electrode assembly includes an electrode main body, the electrode main body has a first direction, a second direction and a third direction that are orthogonal to each other, and includes two main surfaces arranged opposite to each other along the first direction, two end surfaces arranged opposite to each other along the second direction, and two side surfaces arranged opposite to each other along the third direction, and the coating device includes a discharge assembly, a cutting assembly, and a first coating assembly. The discharge assembly is used to store and release a material strip, which includes a plurality of coating films connected in sequence along a length direction of the material strip, and each coating film includes two main coating areas spaced apart from each other and a connecting area connected between the two main coating areas. The cutting assembly is used to cut a head end coating film located at a head end of the material strip from the material strip. The first coating assembly is used to coat the first of the two end surfaces with the connecting area of the head end coating film, and to coat each of the two main surfaces with corresponding one of the two main coating areas, so as to form an electrode coating body. This can enable continuous feeding of the coating film, can reduce the arrangement of manipulators, simplifies the action complexity of the coating process, and facilitates maintenance of the coating device.

A coating device and coating method for an electrode assembly disclosed by the embodiments of the present application are used to coat the electrode assembly with a coating film. The electrode assembly and the coating film are arranged on a battery. The battery can be used in an electrical apparatus in which a battery is used as a power source or various energy storage systems in which a battery is used as an energy storage element. The electrical apparatus can be but is not limited to a mobile phone, a tablet computer, a laptop, an electric toy, an electric tool, a battery vehicle, an electric vehicle, a ship, a spacecraft, etc. The electric toy may include a fixed or mobile electric toy, such as a game console, an electric vehicle toy, an electric ship toy, an electric airplane toy, and the like. The spacecraft may include an airplane, a rocket, a space shuttle, a spaceship, and the like.

For the convenience of description in the following embodiments, an electrical apparatus being a vehicle 1000a according to an embodiment of the present application is taken as an example for the description.

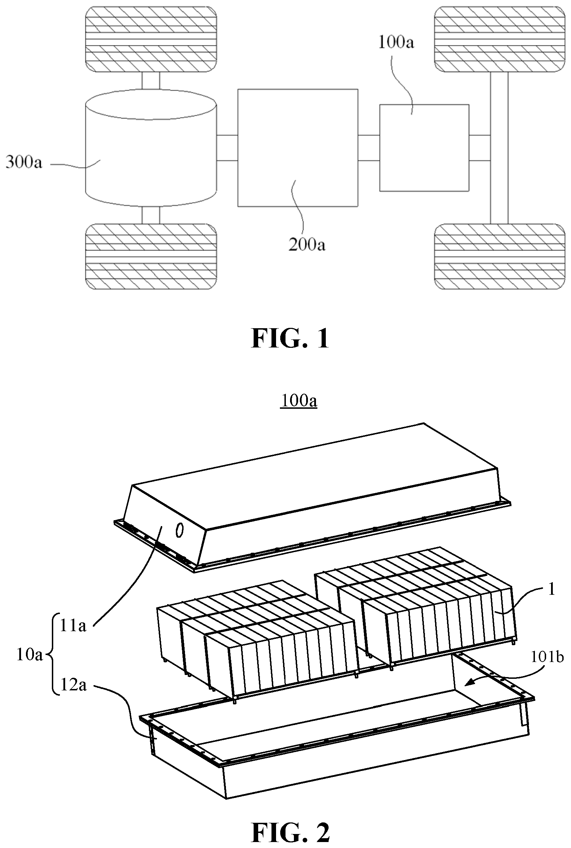

Referring to FIG. 1, the vehicle 1000a may be a fuel vehicle, a gas vehicle, or a new energy vehicle. The new energy vehicle may be an all-electric vehicle, a hybrid electric vehicle, an extended range electric vehicle, or the like. The vehicle 1000a is internally provided with a battery 100a, and the battery 100a may be arranged at a bottom or head or tail of the vehicle 1000a. The battery 100a may be used to supply power to the vehicle 1000a. For example, the battery 100a may be used as an operating power source of the vehicle 1000a. The vehicle 1000a may further include a controller 200a and a motor 300a. The controller 200a is used to control the battery 100a to power the motor 300a, for example, to meet working power demands during starting, navigation, and driving of the vehicle 1000a.

In some embodiments of the present application, the battery 100a not only may serve as an operating power source of the vehicle 1000a, and also may serve as a driving power source of the vehicle 1000a, thus replacing or partially replacing fuel or natural gas to provide driving power for the vehicle 1000a.

In some embodiments, the battery 100a may be an energy storage apparatus. The energy storage apparatus includes an energy storage container, an energy storage cabinet, and the like.

The battery 100a mentioned in the embodiments of the present application refers to a single physical module including one or more battery cells 1 to provide higher voltage and capacity.

In the embodiments of the present application, the battery cell 1 may be a secondary battery. The secondary battery refers to a battery cell 1 that, after being discharged, can activate an active material by charging for continued use. Each battery cell 1 can also be a primary battery.

The battery cell 1 includes but is not limited to a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickel-cadmium battery, a lead storage battery and the like. The battery cell 1 may be in a cylindrical, flat, or rectangular solid shape, or in other shapes.

In some embodiments, the battery 100a may be a battery module. When there are a plurality of battery cells 1, the plurality of battery cells 1 are arranged and fixed to form a battery module.

In some embodiments, referring to FIG. 2, the battery 100a may be a battery pack. The battery pack includes a box body 10a and a battery cell 1. The battery cell 1 or the battery module is accommodated in the box body 10a.

In some embodiments, the box body 10a may serve as a part of a chassis structure of the vehicle 1000a. For example, a part of the box body 10a may become at least a portion of the floor of the vehicle 1000a, or a part of the box body 10a may become at least a part of the cross beam and the longitudinal beam of the vehicle 1000a.

Referring to FIG. 2, the battery 100a includes a box body 10a and a battery cell 1, and the battery cell 1 is accommodated within the box body 10a. The box body 10a is used to provide an accommodating space 101b for the battery cell 1, and the box body 10a may adopt various structures. In some embodiments, the box body 10 may include a first sub-box body 11a and a second sub-box body 12a. The first sub-box body 11a and the second sub-box body 12a are covered by each other, and the first sub-box body 11a and the second sub-box body 12a together define the accommodating space 101b for accommodating the battery cell 1. The second sub-box body 12a may be of a hollow structure with one end open, the first sub-box body 11a may be of a plate-like structure, and the first sub-box body 11a covers the opening side of the second sub-box body 12a, so that the first sub-box body 11a and the second sub-box body 12a together define the accommodating space 101b. Both of the first sub-box body 11a and the second sub-box body 12a may also be of a hollow structure with one side open, and the opening side of the first sub-box body 11a covers the opening side of the second sub-box body 12a. Of course, the box body 10a formed by the first sub-box body 11a and the second sub-box body 12a may be of a variety of shapes, such as a cylinder, a rectangular solid, etc.

In the battery 100a, there may be a plurality of battery cells 1, and the plurality of battery cells 1 may be connected in series connection, or parallel connection, or parallel-series connection. The parallel-series connection means that some of the plurality of battery cells 1 are connected in series and some are connected in parallel. The plurality of battery cells 1 may be directly connected in series, in parallel, or in parallel-series connection, and then the plurality of battery cells 1 are assembled as a whole to be accommodated in the box body 10a. Of course, the battery 100a may also be formed in the manner that the plurality of battery cells 1 are first connected in series, in parallel, or in parallel-series connection to form battery modules, and the plurality of battery modules are then connected in series, in parallel, or in parallel-series connection into a whole, which is accommodated in the box body 10a. The battery 100a may further include other structures. For example, the battery 100a may further include a convergence component for implementing electrical connection between the plurality of battery cells 1.

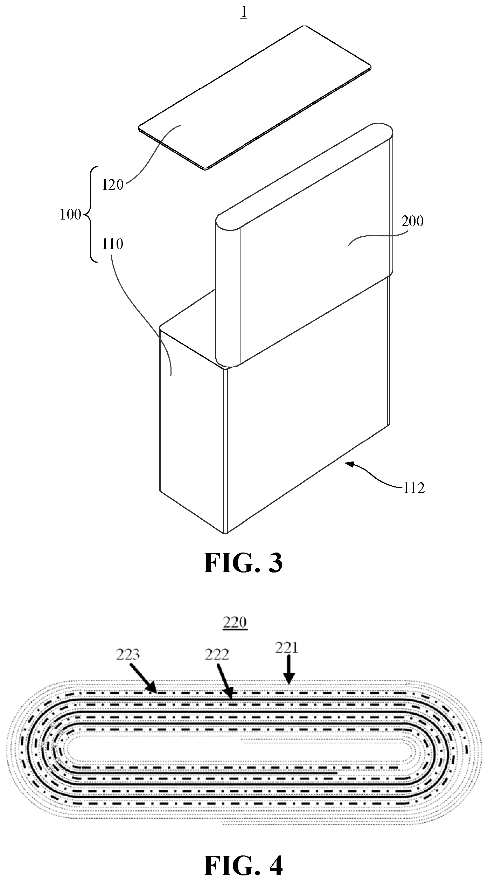

Referring to FIG. 3, the battery cell 1 refers to the smallest unit constituting a battery. In this embodiment, a cylindrical battery cell 1 is taken as an example for description. As shown in Fig. 3, the battery cell 1 includes a shell 100, an electrode assembly 200 and other functional components.

In some implementations, the shell 100 is used to encapsulate components such as the electrode assembly 200 and an electrolyte. The shell 100 may be a steel shell, an aluminum shell, a plastic shell (such as polypropylene), a composite metal shell (such as a copper-aluminum composite shell), an aluminum-plastic film, or the like.

The shell 100 may include an end cover 120 and a accommodating case 110. The end cover 120 is a component that covers an opening of the accommodating case 110 to isolate the internal environment of the battery cell 1 from the external environment. Without limitation, the shape of the end cover 120 may be adaptive to the shape of the accommodating case 110 so as to be matched with the accommodating case 110. Optionally, the end cover 120 may be made of a material (e.g., an aluminum alloy) with a certain hardness and strength, accordingly, the end cover 120 is not easily deformed when being subjected to extrusion and collisions, such that the battery cell 1 can have higher structural strength, and the safety performance can also be improved. Functional components such as electrode terminals may be arranged on the end cover 120. The electrode terminal can be used to be electrically connected with the electrode assembly 200 for outputting or inputting electric energy of the battery cell 1. In some embodiments, the end cover 120 may be further provided with a pressure relief mechanism for relieving internal pressure when the internal pressure or temperature of the battery cell 1 reaches a threshold. The end cover 120 may be made of a variety of materials, including, but not limited to, copper, iron, aluminum, stainless steel, an aluminum alloy, plastic, and the like. In some embodiments, an insulating component may be further arranged on an inner side of the end cover 120 and may be used for isolating an electrical connection component in the accommodating case 110 from the end cover 120, thereby reducing the risk of short circuit. For example, the insulating component may be made of plastic, rubber, and the like.

The accommodating case 110 is an assembly used to be matched with the end cover 120 to form the internal environment of the battery cell 1, wherein the formed internal environment can be used to accommodate the electrode assembly 200, the electrolyte solution and other components. The accommodating case 110 and the end cover 120 may be independent components, and the accommodating case 110 and the end cover 120 may form an internal environment of the battery cell 1 after being connected. Without limitation, the end cover 120 and the accommodating case 110 may also be integrated. Specifically, the end cover 120 and the accommodating case 110 may form a common connection surface before other components enter the case. When the interior of the accommodating case 110 is required to be encapsulated, the accommodating case 110 is covered with the end cover 120. The accommodating case 110 may be of various shapes and various sizes, such as a rectangular solid shape, a cylindrical shape, or a hexagonal prism shape. Specifically, the shape of the accommodating case 110 can be determined according to the specific shape and size of the electrode assembly 200. The accommodating case 110 may be made of a variety of materials, including, but not limited to, copper, iron, aluminum, stainless steel, an aluminum alloy, and the like.

The electrode assembly 200 is a component in the battery cell 1 where an electrochemical reaction occurs. One or more electrode assemblies 200 may be contained in the accommodating case 110.

In some embodiments, the electrode assembly 200 includes a positive electrode, a negative electrode, and a spacer. During the charging and discharging of the battery cell 1, active ions (such as lithium ions) are intercalated and deintercalated back and forth between the positive electrode and the negative electrode. The spacer is arranged between the positive electrode and the negative electrode, and can function to prevent a short circuit between the positive electrode and the negative electrode while enabling the active ions to pass through. As shown in FIG. 4 , the spacer may be a diaphragm 222.

In some embodiments, as shown in FIG. 4, the positive electrode may be a positive electrode plate 221. The positive electrode plate 221 may include a positive electrode current collector and a positive electrode active material arranged on at least one surface of the positive electrode current collector.

By way of example, the positive electrode current collector has two surfaces opposite to each other in a thickness direction of the positive electrode current collector, and the positive electrode active material is arranged on either or both of the two opposite surfaces of the positive electrode current collector.

As an example, a metal foil or a composite current collector may be used as the positive electrode current collector. For example, silver surface-treated aluminum or stainless steel, stainless steel, copper, aluminum, nickel, carbon electrode, carbon, nickel, titanium, or the like may be used as the metal foil. The composite current collector may comprise a polymer material substrate layer and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the positive electrode active material may include at least one of the following materials: a lithium-containing phosphate, a lithium transition metal oxide, and a respective modified compound thereof. However, the present application is not limited to these materials, and other conventional materials that can be used as positive electrode active materials for batteries may also be used. Only a single one of or a combination of two or more of these positive electrode active materials can be used. Examples of lithium-containing phosphates may include, but are not limited to, at least one of lithium iron phosphate (e.g., LiFePO₄ (also abbreviated as LFP)), lithium iron phosphate-carbon composite, lithium manganese phosphate (e.g., LiMnPO₄), lithium manganese phosphate-carbon composite, lithium iron manganese phosphate, and lithium iron manganese phosphate-carbon composite. Examples of lithium transition metal oxides may include, but are not limited to, at least one of lithium cobalt oxide (e.g., LiCoO₂), lithium nickel oxide (e.g., LiNiO₂), lithium manganese oxide (e.g., LiMnO₂, LiMn2O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium nickel cobalt aluminum oxide (e.g., LiNi_{0.85}Co_{0.15}Al_{0.05}O₂)), and a modified compound thereof, etc.

In some embodiments, as shown in FIG. 4, the negative electrode may be a negative electrode plate 223, and the negative electrode plate 223 may include a negative electrode current collector.

As an example, a metal foil, a foam metal, a composite current collector or foamy carbon may be used as the negative electrode current collector. For example, as the metal foil, silver surface-treated aluminum or stainless steel, stainless steel, copper, aluminum, baked carbon, carbon, nickel, titanium, or the like can be used. The foam metal can be nickel foam, copper foam, aluminum foam, alloy foam, etc. The composite current collector may include a high molecular material substrate and a metal layer. The composite current collector can be formed by forming a metal material (copper, copper alloys, nickel, nickel alloys, titanium, titanium alloys, silver and silver alloys, etc.) on a polymer material substrate (such as substrate of polypropylene, polyethylene terephthalate, polybutylene terephthalate, polystyrene, polyethylene, etc.).

For example, the negative electrode plate may include a negative electrode current collector and a negative electrode active material provided on at least one surface of the negative electrode current collector.

For example, the negative electrode current collector has two surfaces opposite to each other in its own thickness direction, and the negative electrode active material is arranged on either one or both of the two opposite surfaces of the negative electrode current collector.

As an example, a negative electrode active material commonly known in the art for the battery cell 1 can be used as the negative active material. As an example, the negative electrode active material may include at least one of the following materials: artificial graphite, natural graphite, soft carbon, hard carbon, a silicon-based material, a tin-based material, lithium titanate, etc. The silicon-based material may be selected from at least one of elemental silicon, silicon-oxygen compound, silicon-carbon complex, silicon-nitrogen complex, and silicon alloy. The tin-based material may be selected from at least one of elemental tin, tin-oxygen compound, and tin alloy. However, the present application is not limited to these materials, and other conventional materials useful as negative electrode active materials for batteries can also be used. One of these negative active materials may be used alone, or two or more of these positive active materials may be used in combination.

In some embodiments, the material of the positive electrode current collector can be aluminum, and the material of the negative electrode current collector can be copper.

In some embodiments, the electrode assembly 200 further includes the spacer arranged between the positive electrode and the negative electrode.

In some implementations, the spacer is a diaphragm 222. The type of the diaphragm 222 is not particularly limited in the present application, and any well-known diaphragm 222 with a porous structure having good chemical stability and mechanical stability can be selected.

As an example, the main material of the diaphragm 222 may be selected from at least one of glass fiber, non-woven fabric, polyethylene, polypropylene, polyvinylidene fluoride, and ceramic. The diaphragm 222 may be a single-layer thin film or a multi-layer composite thin film, and is not particularly limited. When the diaphragm 222 is a multi-layer composite thin film, the material of each layer may be the same or different, and there is no particular limitation. The spacer can be an independent component positioned between the positive electrode and the negative electrode, or can also be attached to the surfaces of the positive electrode and the negative electrode.

In some embodiments, the spacer is a solid electrolyte. The solid electrolyte is arranged between the positive electrode and the negative electrode, and functions to transport ions and isolate the positive electrode from the negative electrode.

In some embodiments, the battery cell 1 further comprises an electrolyte that functions to conduct ions between the positive electrode and the negative electrode. The type of the electrolyte is not specifically limited in the present application and can be selected according to requirements. The electrolyte may be liquid, gel or solid.

The electrolyte solution may be a form of electrolyte. The electrolyte solution may include an electrolyte salt and a solvent.

In some implementations, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solution may also be an ether solvent. The ether solvent may include one or more selected from the group consisting of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether, or crown ether.

The gel electrolyte includes a skeleton network with a polymer as the electrolyte, paired with an ionic liquid-lithium salt.

The solid electrolyte includes a polymer solid electrolyte, an inorganic solid electrolyte, and a composite solid electrolyte.

As an example, the polymer solid electrolyte may be a polyether, polysiloxane, polycarbonate, polyacrylonitrile, polyvinylidene fluoride, polymethyl methacrylate, monoionic polymer, polyionic liquid-lithium salt, cellulose, etc. As an example, the polymer solid electrolyte may be polyethylene oxide.

As an example, the inorganic solid electrolyte may be one or more of an oxide solid electrolyte (crystalline perovskite, sodium superionic conductor, garnet, amorphous LiPON film), a sulfide solid electrolyte (a crystalline lithium superionic conductor (lithium germanium phosphorus sulfide and argyrodite), amorphous sulfide), a halide solid electrolyte, a nitride solid electrolyte, and a hydride solid electrolyte.

As an example, a composite solid electrolyte is formed by adding an inorganic solid electrolyte filler to a polymer solid electrolyte.

In some implementations, the electrode assembly 200 is of a wound structure. The positive electrode plate and the negative electrode plate are wound into the wound structure.

In some implementations, the electrode assembly 200 is provided with a tab portion 201 that can conduct a current out of the electrode assembly 200. The tab portion 201 includes a positive tab and a negative tab. The positive tab and the negative tab may be located at one end of the electrode main body together or located at two ends of the electrode main body respectively.

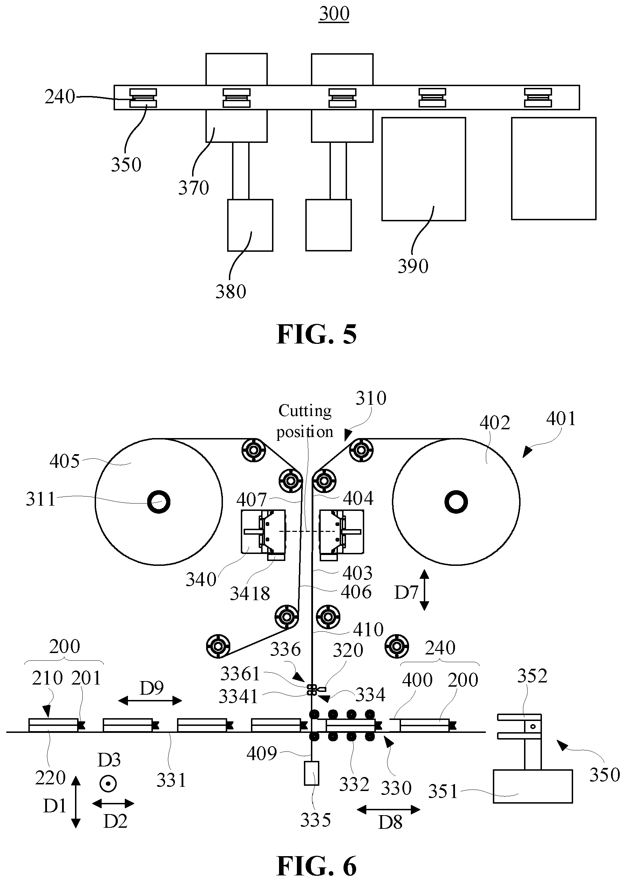

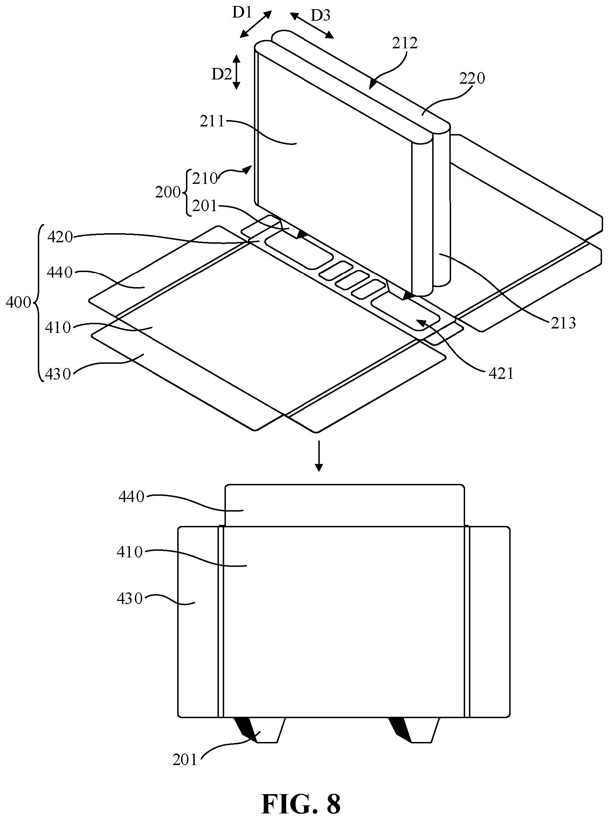

According to some embodiments of the present application, as shown in FIG. 5 to FIG. 8, the electrode assembly 200 depicted in the embodiment of a coating device for the electrode assembly of the present application includes an electrode main body 210, the electrode main body 210 has a first direction D1, a second direction D2 and a third direction D3 that are orthogonal to each other, and includes two main surfaces 211 arranged opposite to each other along the first direction D1, two end surfaces 212 arranged opposite to each other along the second direction D2, and two side surfaces 213 arranged opposite to each other along the third direction D3, and the coating device 300 includes a discharge assembly 310, a cutting assembly 320, and a first coating assembly 330. The discharge assembly 310 is used to store and release the material strip 401, which includes a plurality of coating films 400 connected in sequence along the length direction D7 of the material strip 401, and each coating film 400 includes two main coating areas 410 spaced apart from each other and a connecting area 420 connected between the two main coating areas 410. The cutting assembly 320 is used to cut a head end coating film 409 located at a head end of the material strip 401 from the material strip 401. The first coating assembly 330 is used to coat the first 212a of the two end surfaces 212 with the connecting area 420 of the head end coating film 409, and to coat each of the two main surfaces 211 with corresponding one of the two main coating areas 410, so as to form an electrode coating body 240.

Specifically, the material strip 401 can be placed in a roll on the discharge assembly 310 , and the discharge assembly 310 can gradually release the material strip 401 from the material strip roll, so that the released part of the material strip 401 gradually approaches the first coating assembly 330 . One end of the released part of the material strip 401 is connected with the material strip roll, and the other end of the released part of the material strip 401 is the head end of the material strip 401 , that is, the head end of the material strip 401 is the end of the material strip 401 close to the first coating assembly 330 . In the length direction D7 of the material strip 401, the size of the released part of the material strip 401 is larger than the size of one coating film 400, the head end coating film 409 is the coating film 400 closest to the head end of the material strip 401 on the released part of the material strip 401, and a coating film 400 adjacent to the head end coating film 409 on the material strip 401 is a subsequent coating film 411. In other words, the head end of the material strip 401 is located on the head end coating film 409 to form the electrode coating body 240 . As the previous head end coating film 409 is cut off from the released part of the material strip 401 by the cutting assembly 320 and coats the electrode assembly 200, the subsequent coating film 411 becomes a new head end coating film 409, and the head end of the material strip 401 is located on the new head end coating film 409.

The first 212a of the two end surfaces 212 may be connected between the two main surfaces 211 of the electrode main body 210, so that while the connecting area 420 coats the first 212a of the two end surfaces 212, the two main coating areas 410 can coat the two main surfaces 211 respectively. In some embodiments, the two main coating areas 410 are movable relative to the connecting area 420, so that when the connecting area 420 coats the first 212a of the two end surfaces 212, the two main coating areas 410 can coat the two main surfaces 211 by moving relative to the connecting area 420. The first coating assembly 330 may be arranged to drive the two main coating areas 410 to move respectively relative to the connecting area 420.

The first coating assembly 330 can drive the electrode assembly 200 to approach the head end coating film 409, so that the connecting area 420 of the head end coating film 409 contacts and coats the first 212a of the two end surfaces 212, and the two main coating areas 410 each coat the corresponding one of the two main surfaces 211. Such an arrangement enables continuous feeding of the coating film 400, can reduce the arrangement of manipulators, simplifies the action complexity of the coating process, and facilitates maintenance of the coating device 300.

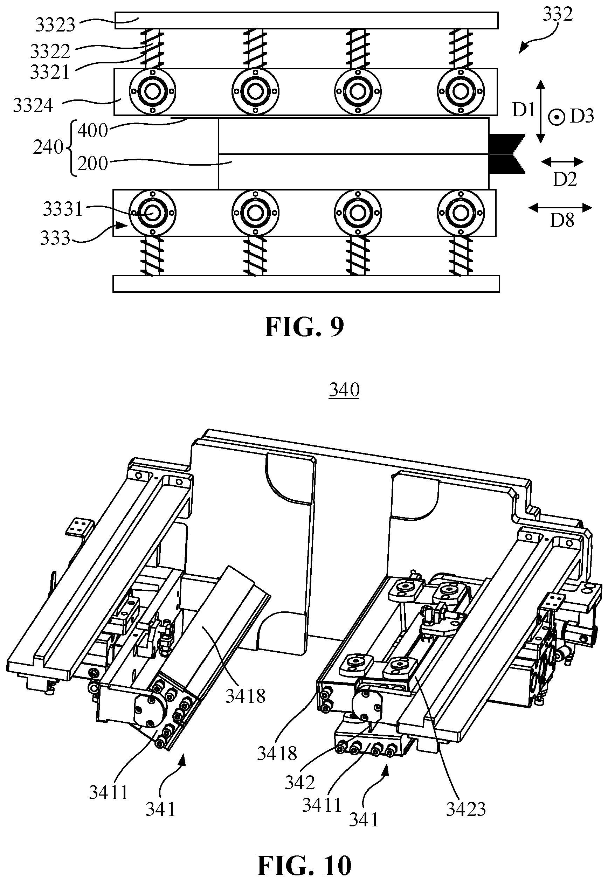

According to some embodiments of the present application, optionally, as shown in FIG. 6 and FIG. 9, the first coating assembly 330 includes an electrode drive mechanism 331 and a main surface coating mechanism 332. The electrode drive mechanism 331 is used to transfer the electrode assembly 200 along the second direction D2 to make the first 212a of the two end surfaces 212 contact the connecting area 420. The main surface coating mechanism 332 is used to continue to drive the electrode assembly 200 along the second direction D2 after the first 212a of the two end surfaces 212 contacts the connecting area 420, and to make each of the two main surfaces 211 be coated with corresponding one of the two main coating areas 410.

The electrode drive mechanism 331 is in a movement state. For example, the electrode drive mechanism 331 may include a conveyor belt, clamp jaws, or a roller. The driving belt may move along the second direction D2 to drive the electrode assembly 200 to move along the second direction D2. The clamp jaws may move along the second direction D2 to clamp the electrode assembly 200 to move along the second direction D2. The tangent direction of the roller at the position where it contacts the electrode assembly 200 is parallel to the second direction D2, so that the roller drives the electrode assembly 200 to move along the second direction D2 by rolling.

Furthermore, the electrode drive mechanism 331 may continuously transfer a plurality of electrode assemblies 200 along the second direction D2. Each head end coating film 409 and an electrode assembly 200 can form an electrode coating body 240.

The main surface coating mechanism 332 can drive the two main coating areas 410 to approach the electrode assembly 200 respectively until the two main coating areas 410 each coat corresponding one of the two main surfaces 211.

When the electrode drive mechanism 331 transfers the electrode assembly 200, the position where the electrode drive mechanism 331 acts on the electrode assembly 200 may include the two main surfaces 211, the two side surfaces 213, and the second 212b of the two end surfaces 212.

By arranging the electrode drive mechanism 331 and the main surface coating mechanism 332, the relative position relationship between the two main surfaces 211 and the two coating areas can be adjusted, as well as the relative position relationship between the first 212a of the two end surfaces 212 and the connecting area 420 can be adjusted. When the coating film 400 coats the two main surfaces 211 of the electrode main body 210 and the first 212a of the two end surfaces 212, the stability of the coating process can be improved, making the coating action more concise and smooth.

According to some embodiments of the present application, optionally, as shown in FIG. 6, FIG. 7, and FIG. 9, the main surface coating mechanism 332 includes two pressure roller groups 333 arranged side by side and spaced apart from each other, the electrode drive mechanism 331 feeds the electrode assembly 200 and the head end coating film 409 into the space between the two pressure roller groups 333 after the first 212a of the two end surfaces 212 contacts the connecting area 420, and the two pressure roller groups 333 drive the electrode assembly 200 in a rolling manner and press each of the two main coating areas 410 on corresponding one of the two main surfaces 211.

The spacing between the two pressure roller groups 333 matches the spacing between the two main surfaces 211 of the electrode assembly 200. In the process of the electrode assembly 200 and the head end coating film 409 entering between the two pressure roller groups 333, the two pressure roller groups 333 can limit the two main coating areas 410 so that the two main coating areas 410 are each pressed on the corresponding one of the two main surfaces 211.

The pressure roller group 333 may include a plurality of pressure rollers 3331, and the tangential direction of the pressure rollers 3331 at the contact position with the electrode assembly 200 is parallel to the second direction D2, so that the pressure rollers 3331 drive the electrode assembly 200 to move along the second direction D2 by rolling.

With such an arrangement, in the process of coating the two main surfaces 211 with the coating film 400, the arrangement and use of the manipulator can be reduced, the complexity of the action of the coating device 300 for pressing the two main coating areas 410 on the two main surfaces 211 respectively can be simplified, and the maintenance of the coating device 300 can be facilitated.

In some embodiments, the electrode drive mechanism 331 is arranged to drive the electrode assembly 200 between the two pressure roller groups 333 along the second direction D2, and at the same time, the rotation speed of the pressure roller 3331 matches the speed at which the electrode drive mechanism 331 drives the electrode assembly 200 along the second direction D2, thereby reducing the resistance of the pressure roller group 333 to the movement of the electrode assembly 200 along the second direction D2.

According to some embodiments of the present application, optionally, as shown in FIG. 6 and FIG. 9, at least one of the two pressure roller groups 333 is arranged to be capable of floating along the first direction D1. With such an arrangement, the distance between the two pressure roller groups 333 can be adaptively adjusted, so that the distance between the two pressure roller groups 333 can more match the size of the electrode assembly 200 along the first direction D1, thereby improving the coating effect.

Further, at least one of the two pressure roller groups 333 is arranged to be capable of floating along the first direction D1 relative to the electrode assembly 200 between the two pressure roller groups 333. In some embodiments, at least one of the two pressure roller groups 333 floats along the first direction D1 through a floating cylinder. In some other embodiments, at least one of the two pressure roller groups 333 floats along the first direction D1 through a spring 3321. For example, the main surface coating mechanism 332 includes the spring 3321, a guide column 3322, a fixed holder 3323 and a floating holder 3324, at least one of the two pressure roller groups 333 is arranged on the floating holder 3324, the guide column 3322 extends along the first direction D1, the spring 3321 is arranged on the guide column 3322 in a sleeving manner and abuts between the fixed holder 3323 and the floating holder 3324, and the fixed holder 3323 and the floating holder 3324 are slidably connected through the guide column 3322.

According to some embodiments of the present application, optionally, as shown in FIG. 6 and FIG. 9, one of the two pressure roller groups 333 is an active pressure roller group, or the two pressure roller groups 333 are active pressure roller groups 333 respectively, and a movement direction D8 of a contact point between the active pressure roller group 333 and the main surface 211 is consistent with a movement direction D9 of the electrode drive mechanism 331.

With such an arrangement, the resistance of the pressure roller groups 333 to the movement of the electrode assembly 200 along the second direction D2 can be reduced, and the movement stability of the electrode assembly 200 and the head end coating film 409 entering between the two pressure roller groups 333 can be improved.

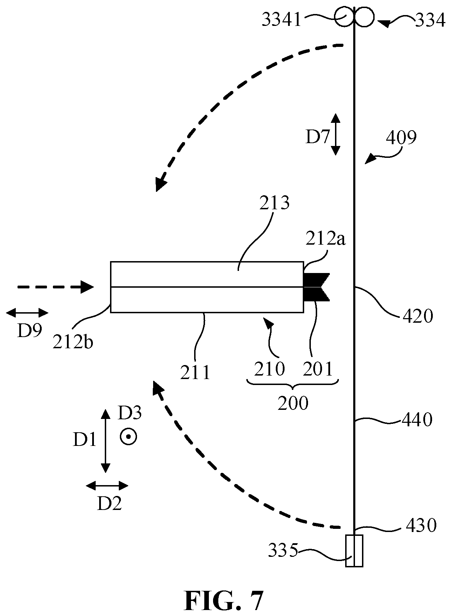

According to some embodiments of the present application, optionally, as shown in FIG. 6 and FIG. 7, the first coating assembly 330 further includes a first film positioning mechanism 334 and a second film positioning mechanism 335, the first film positioning mechanism 334 is used to position an end of the head end coating film 409 toward the discharge assembly 310, the second film positioning mechanism 335 is used to position the other end of the head end coating film 409 away from the discharge assembly 310, so that before the first 212a of the two end surfaces 212 contacts the connecting area 420, the connecting area 420 and the two main coating areas 410 of the head end coating film 409 are coplanar with each other, and the second direction D2 is perpendicular to a plane where the connecting area 420 is located.

For example, the interval between the first film positioning mechanism 334 and the second film positioning mechanism 335 may be arranged to allow the head end coating film 409 to be stretched, thereby making the connecting area 420 and the two main coating areas 410 coplanar with each other. By arranging the connecting area 420 and the two main coating areas 410 to be coplanar with each other, the two main coating areas 410 will not block the connecting area 420, which can reduce the interference of the two main coating areas 410 on the process of the first 212a of the two end surfaces 212 contacting the connecting area 420, thereby improving the coating efficiency and coating effect.

Optionally, the second film positioning mechanism 335 positions the other end of the head end coating film 409 away from the discharge assembly 310 by clamping.

According to some embodiments of the present application, optionally, as shown in FIG. 6, the first coating assembly 330 further includes a third film positioning mechanism 336, the third film positioning mechanism 336 is located on a side of the first film positioning mechanism 334 toward the discharge assembly 310 and is used to position a subsequent coating film 411 adjacent to the head end coating film 409, and the cutting assembly 320 cuts the material strip 401 between the first film positioning mechanism 334 and the third film positioning mechanism 336.

Specifically, the released part of the material strip 401 may include the head end coating film 409 and at least a part of the subsequent coating film 411. The cutting assembly 320 cuts the material strip 401 at a preset position between the first film positioning mechanism 334 and the third film positioning mechanism 336. The preset position between the first film positioning mechanism 334 and the third film positioning mechanism 336 is the boundary between the head end coating film 409 and the subsequent coating film 411. During the cutting process, the first film positioning mechanism 334 and the third film positioning mechanism 336 can position two sides of a preset position, thereby improving the stability of the cutting process and improving the cutting effect.

For example, the first film positioning mechanism 334 and the third film positioning mechanism 336 can perform clamping and positioning at two sides of the preset position respectively. For another example, the first film positioning mechanism 334 includes two first rollers 3341, and a side of the preset position away from the discharge assembly 310 can be clamped between the two first rollers 3341. When the first rollers 3341 rotate, they can transfer the released part of the material strip 401 toward the third film positioning mechanism 336, so that the released part of the material strip 401 can reach the third film positioning mechanism 336. The third film positioning mechanism 336 includes two second rollers 3361, and a side of the preset position close to the discharge assembly 310 can be clamped between the two second rollers 3361. When the second rollers 3361 rotate, they can transfer the released part of the material strip 401 toward the first film positioning mechanism 334, so that the released part of the material strip 401 can reach the first film positioning mechanism 334.

According to some embodiments of the present application, optionally, as shown in FIG. 6, the third film positioning mechanism 336 is further arranged to feed the subsequent coating film 411 into the first film positioning mechanism 334 and the second film positioning mechanism 335 after the head end coating film 409 is cut from the material strip 401.

With such an arrangement, the feeding of the coating film 400 can be continuously connected between different positions, thereby improving the stability of the coating process.

For example, the third film positioning mechanism 336 includes two second rollers 3361 respectively, and the end of the subsequent coating film 411 away from the discharge assembly 310 can be clamped between the two second rollers 3361. When the two second rollers 3361 rotate, they can drive the subsequent coating film 411 to move toward the first film positioning mechanism 334 and the second film positioning mechanism 335, so that the subsequent coating film 411 enters between the first film positioning mechanism 334 and the second film positioning mechanism 335 in turn.

According to some embodiments of the present application, optionally, as shown in FIG. 6 to FIG. 8, the electrode assembly 200 also includes a tab portion 201 protruding from the first 212a of the two end surfaces 212, an opening 421 is provided on the connecting area 420, and the first coating assembly 330 is configured so that the tab portion 201 penetrates through the opening 421.

Due to the existence of the tab portion 201, it is more difficult for the coating film 400 to coat the first 212 a of the two end surfaces 212. By providing the opening 421 on the connecting area 420, the opening 421 can avoid the tab portion 201, which can reduce the interference of the tab portion 201 on the coating process, thereby improving the coating effect of the coating film 400 on the first 212a of the two end surfaces 212.

Afterthe tab portion 201 penetrates through the opening 421, the tab portion 201 can limit the connecting area 420, thereby reducing the risk of sliding displacement of the coating film 400 relative to the electrode assembly 200.

When the electrode assembly 200 is installed into the shell 100, the tab portion 201 and the opening of the shell 100 can be first arranged opposite and spaced apart along the second direction D2, and then the electrode assembly 200 is moved toward the shell 100 along the second direction D2, so that the tab portion 201 and the first 212a of the two end surfaces 212 enter the shell 100 in sequence. The connecting area 420 and the main coating area 410 can converge the electrode assembly 200, so that the connection between the main surface 211 of the electrode assembly 200 and the first 212a of the two end surfaces 212 forms an arc surface, so that the first 212a of the two end surfaces 212 enters the shell 100 more smoothly, which facilitates the electrode assembly 200 to be installed in the shell 100, which is beneficial to improving the assembly efficiency and assembly effect.

Furthermore, the tab portion 201 is not arranged on the two main surfaces 211, the two side surfaces 213 and the second 212b of the two end surfaces 212 of the electrode main body 210, and the coating device 300 controls the coating film 400 to coat the first 212a of the two end surfaces 212 earlier than the coating device 300 controls the coating film 400 to coat the second 212b of the two end surfaces 212 of the electrode main body 210 and the two main surfaces 211 and the two side surfaces 213 of the electrode main body 210. During the process of the coating film 400 coating the electrode main body 210, it is necessary to perform a fixing operation on the edge of the coating film 400 so that the coating film 400 can be fixed on the electrode main body 210. The coating device 300 controls the coating film 400 to first coat the first 212a of the two end surfaces 212, so that the edge of the coating film 400 falls outside the first 212a of the two end surfaces 212, so that the tab portion 201 will not interfere with the fixing operation of the edge of the coating film 400, thereby improving the coating effect of the coating film 400 on the electrode main body 210. In addition, the edge of the coating film 400 falls outside the first 212a of the two end surfaces 212, which can reduce the risk of the edge of the coating film 400 being squeezed and detached from the electrode main body 210 when the first 212a of the two end surfaces 212 enters the shell 100, making it easier to install the electrode assembly 200 into the shell 100.

According to some embodiments of the present application, optionally, as shown in FIG. 6, the discharge assembly 310 includes two discharge mechanisms 311, the discharge mechanisms 311 store and release the material strips respectively, wherein the material strip 401 corresponding to the first of the two discharge mechanisms 311 serves as a working material strip 402 and is fed into the first coating assembly 330. The material strip 401 corresponding to the second of the two discharge mechanisms 311 serves as a spare material strip 405, the coating device 300 further includes a switching assembly 340, and the switching assembly 340 is used to fix the spare material strip 405 to the working material strip 402, so that the spare material strip 405 is fed into the first coating assembly 330 under driving of the working material strip 402.

Specifically, when the material strip roll as the working material strip 402 is about to be released completely from the material strip 401, the switching assembly 340 can fix the released part as the spare material strip 405 on the working material strip 402, so that the spare material strip 405 replaces the working material strip 402 to provide the coating film 400 for the first coating assembly 330. That is to say, the spare material strip 405 becomes the new working material strip 402, and the material strip 401 can be loaded to the place where the working material strip 402 is originally placed to place the new material strip 401, and the newly placed material strip 401 serves as the new spare material strip 405.

With such an arrangement, when the working material strip 402 is about to be released completely, the coating film 400 on the spare material strip 405 can be automatically fed into the first coating assembly 330 without stopping a machine to change the roll, so as to continuously provide the coating film 400 to the first coating assembly 330 and improve the coating efficiency of the coating device 300.

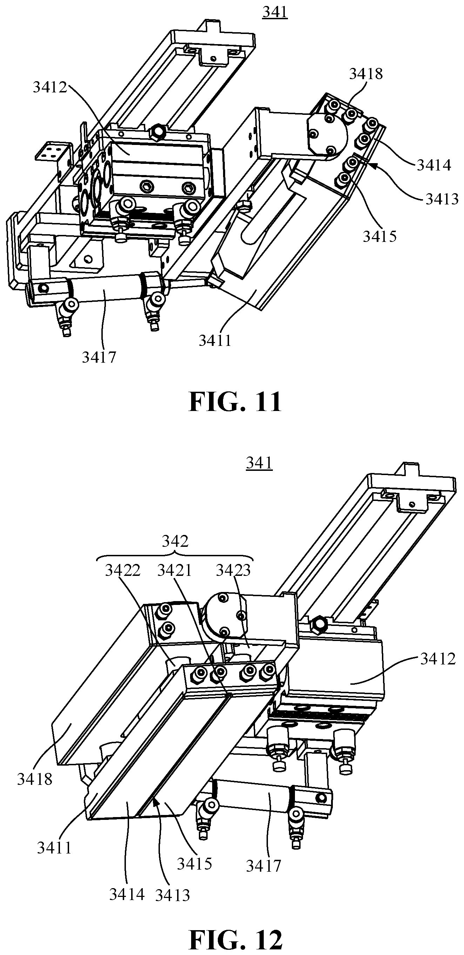

According to some embodiments of the present application, optionally, as shown in FIG. 10 to FIG. 12, the switching assembly 340 includes two pressing mechanisms 341 and a material strip cutting mechanism 342, the two pressing mechanisms 341 cooperate with each other to clamp the working material strip 402 and the spare material strip 405 from two sides of the working material strip 402 and the spare material strip 405, the material strip cutting mechanism 342 cuts the working material strip 402 and the spare material strip 405 in a clamped state so that the working material strip 402 and the spare material strip 405 each form an upstream part and a downstream part located upstream and downstream of a cutting position of the material strip cutting mechanism 342, and the two pressing mechanisms 341 connect the downstream part 403 of the working material strip 402 with the upstream part 407 of the spare material strip 405.

The two pressing mechanisms 341 connect the downstream part 403 of the working material strip 402 with the upstream part 407 of the spare material strip 405, so that the spare material strip 405 is fixed on the working material strip 402. Before the two pressing mechanisms 341 cooperate with each other to clamp the working material strip 402 and the spare material strip 405, a part of the released part of the working material strip 402 and a part of the released part of the spare material strip 405 are arranged to be located between the two pressing mechanisms 341, and the two pressing mechanisms 341 are close to each other so as to be able to clamp the working material strip 402 and the spare material strip 405 from two sides of the working material strip 402 and the spare material strip 405.

The two pressing mechanisms 341 can be the same or different. The installation positions of the two pressing mechanisms 341 correspond to the two discharge mechanisms 311 respectively. When the material strips 401 corresponding to the two discharge mechanisms 311 switch between the working material strip 402 and the spare material strip 405, the actions of the two pressing mechanisms 341 connecting the downstream part 403 of the working material strip 402 with the upstream part 407 of the spare material strip 405 will also be interchanged.

The cutting position of the working material strip 402 and the spare material strip 405 by the material strip cutting mechanism 342 is located at the part where the working material strip 402 and the spare material strip 405 are clamped by the two pressing mechanisms 341. Correspondingly, the material strip cutting mechanism 342 may be arranged inside one of the pressing mechanisms 341.

The downstream part 403 of the working material strip 402 is the part of the working material strip 402 close to the first coating assembly 330 from the cutting position, and the upstream part 407 of the spare material strip 405 is the part of the spare material strip 405 away from the first coating assembly 330 from the cutting position. After the downstream part 403 of the working material strip 402 is connected to the upstream part 407 of the spare material strip 405, the upstream part 407 of the spare material strip 405 can replace the upstream part 404 of the working material strip 402 to provide the coating film 400 for the first coating assembly 330.

With such an arrangement, when the working material strip 402 is about to be released completely, the coating film 400 on the spare material strip 405 can be automatically fed into the first coating assembly 330 in place of the working material strip 402 without stopping the machine to change the roll, so as to continuously provide the coating film 400 to the first coating assembly 330 and improve the coating efficiency.

Furthermore, the head end of the working material strip 402 extends to the first coating assembly 330. Along the extension direction of the released part of the working material strip 402, the two pressing mechanisms 341 and the material strip cutting mechanism 342 are arranged between the first coating assembly 330 and the discharge assembly 310. The switching assembly 340 further includes a collecting mechanism 312, and the released part of the spare material strip 405 can pass between the two pressing mechanisms 341 and further extend to be connected to the collecting mechanism 312.

According to some embodiments of the present application, optionally, as shown in FIG. 10 to FIG. 12, the two pressing mechanisms 341 each include a pressing member 3411, at least one of the two pressing mechanisms 341 includes a pressing drive member 3412, the pressing member 3411 includes a first pressing area 3414 and a second pressing area 3415 separated by a slot 3413, the pressing drive member 3412 drives at least one pressing member 3411 so that the two first pressing areas 3414 cooperate with each other to clamp the working material strip 402 and the spare material strip 405, the two second pressing areas 3415 cooperate with each other to clamp the working material strip 402 and the spare material strip 405, and the material strip cutting mechanism 342 includes a cutter 3421, which is telescopically arranged in a slot 3413 of the first of the two pressing members 3411, and extends into a slot 3413 of the second of the two pressing members 3411 in the clamped state, thereby cutting the working material strip 402 and the spare material strip 405.

The two first pressing areas 3414 and the two second pressing areas 3415 can clamp the working material strip 402 and the spare material strip 405 at the same time to facilitate cutting by the cutter 3421. The cutter 3421 can cut the working material strip 402 and the spare material strip 405 into two parts respectively through one cutting action. Such an arrangement can improve cutting efficiency and simplify the cutting structure.

According to some embodiments of the present application, optionally, as shown in FIG. 10 to FIG. 12, the material strip cutting mechanism 342 includes an elastic member 3422, and the elastic member 3422 is arranged to elastically support the first of the two pressing members 3411 so that the first of the two pressing members 3411 elastically retreats in the clamped state, thereby making the cutter 3421 extend out of the slot 3413 of the first of the two pressing members 3411.

Specifically, the switching assembly 340 also includes a supporting holder 3423, the elastic member 3422 is elastically supported between the first of the two pressing members 3411 and the supporting holder 3423, the cutter 3421 and the supporting holder 3423 are relatively fixedly arranged, and the two pressing members 3411 abut against each other to press the elastic member 3422 to contract, thereby causing the first of the two pressing members 3411 and the cutter 3421 to produce a relative movement. The two pressing members 3411 remain relatively still when they abut against each other, and the cutter 3421 can extend from the slot 3413 of the first of the two pressing members 3411 into the slot 3413 of the second of the two pressing members 3411.

With such an arrangement, there is no need to arrange a specific power apparatus to drive the cutter 3421 to move relative to the two pressing members 3411, thereby simplifying the cutting structure.

According to some embodiments of the present application, optionally, as shown in FIG. 6 and FIG. 10, the first of the two pressing mechanisms 341 is arranged to simultaneously adsorb the downstream part 403 of the working material strip 402 and the upstream part 407 of the spare material strip 405, and the second of the two pressing mechanisms 341 is arranged to apply connecting tape at a joining position of the downstream part 403 of the working material strip 402 and the upstream part 407 of the spare material strip 405.

For example, the first of the two pressing mechanisms 341 can adsorb the downstream portion 403 of the working material strip 402 and the upstream part 407 of the spare material strip 405 by electrostatic adsorption or vacuum negative pressure adsorption.

Such an arrangement can improve the connection efficiency between the downstream portion 403 of the working material strip 402 and the upstream portion 407 of the spare material strip 405. By arranging the first of the two pressing mechanisms 341 to simultaneously adsorb the downstream part 403 of the working material strip 402 and the upstream part 407 of the spare material strip 405, the stability of the joining process can be improved.

After the two pressing mechanisms 341 move away from each other to release the clamping of the working material strip 402 and the spare material strip 405, the upstream part 404 of the working material strip 402 and the downstream part 406 of the spare material strip 405 can be moved out from between the two pressing mechanisms 341, then the two pressing mechanisms 341 approach each other and clamp the downstream part 403 of the working material strip 402 and the upstream part 407 of the spare material strip 405, and further, the first of the two pressing mechanisms 341 is arranged to simultaneously adsorb the downstream part 403 of the working material strip 402 and the upstream part 407 of the spare material strip 405. Then, the two pressing mechanisms 341 move away from each other, and the second of the two pressing mechanisms 341 applies the connecting tape to the joining position between the downstream part 403 of the working material strip 402 and the upstream part 407 of the spare material strip 405.

According to some embodiments of the present application, optionally, as shown in FIG. 6, and FIG. 10 to FIG. 12, the two pressing mechanisms 341 each include a pressing member 3411, the pressing member 3411 of the first of the two pressing mechanisms 341 is arranged to simultaneously adsorb the downstream part 403 of the working material strip 402 and the upstream part 407 of the spare material strip 405, the second of the two pressing mechanisms 341 includes a pressing drive member 3412, a rotating drive member 3417, and a tape attaching member 3418, the tape attaching member 3418 is arranged to carry the connecting tape, and the rotating drive member 3417 is arranged to be capable of rotationally driving the tape attaching member 3418 and the pressing member 3411 of the second of the two pressing mechanisms 341 to switch between a first state and a second state. In the first state, the pressing members 3411 in the two pressing mechanisms 341 are arranged opposite to each other, in the second state, the tape attaching member 3418 and the pressing member 3411 of the first of the two pressing mechanisms 341 are arranged opposite to each other, and the pressing drive member 3412 is arranged to drive the pressing members 3411 in the two pressing mechanisms 341 to press each other in the first state, and to drive the tape attaching member 3418 and the pressing member 3411 of the first of the two pressing mechanisms 341 to press each other in the second state.

With such an arrangement, the movement stability of the pressing member 3411 and the tape attaching member 3418 can be improved, and the cutting effect and the connecting effect of the connecting tape can be improved.

Optionally, the two pressing mechanisms 341 each include a pressing member 3411, the pressing member 3411 of the second of the two pressing mechanisms 341 is arranged to simultaneously adsorb the downstream part 403 of the working material strip 402 and the upstream part 407 of the spare material strip 405, the first of the two pressing mechanisms 341 includes a pressing drive member 3412, a rotating drive member 3417, and a tape attaching member 3418, the tape attaching member 3418 is arranged to carry the connecting tape, and the rotating drive member 3417 is arranged to be capable of rotationally driving the tape attaching member 3418 and the pressing member 3411 of the first of the two pressing mechanisms 341 to switch between a first state and a second state. In the first state, the pressing members 3411 in the two pressing mechanisms 341 are arranged opposite to each other, in the second state, the tape attaching member 3418 and the pressing member 3411 of the second of the two pressing mechanisms 341 are arranged opposite to each other, and the pressing drive member 3412 is arranged to drive the pressing members 3411 in the two pressing mechanisms 341 to press each other in the first state, and to drive the tape attaching member 3418 and the pressing member 3411 of the second of the two pressing mechanisms 341 to press each other in the second state.

According to some embodiments of the present application, optionally, as shown in FIG. 6, the discharge assembly 310 corresponding to the working material strip 402 is further arranged to collect the upstream part 404 of the working material strip 402, and the switching assembly 340 further includes a collecting mechanism 312 for collecting the downstream part 406 of the spare material strip 405.

The discharge assembly 310 can move in an material strip 401, so as to collect the upstream part 404 of the working material strip 402. For example, the discharge assembly 310 can release the material strip 401 on the material strip roll by rotating, and the discharge assembly 310 can also collect the material strip 401 on the material strip roll by rotating in the opposite direction.

One end of the downstream part 406 of the spare material strip 405 away from the discharge assembly 310 can be connected to the collecting mechanism 312, so that the collecting mechanism 312 can collect the downstream part 406 of the spare material strip 405 through a movement. For example, the collecting mechanism 312 includes a roller, and one end of the downstream part 406 of the spare material strip 405 away from the discharge assembly 310 can be wound and connected to the roller, and the roller can collect the downstream part 406 of the spare material strip 405 by rotating.

With such an arrangement, the automation level of the coating device 300 can be improved.

According to some embodiments of the present application, optionally, as shown in FIG. 6, and FIG. 10 to FIG. 12, during a process of collecting the upstream part 404 of the working material strip 402 and the downstream part 406 of the spare material strip 405, the two pressing mechanisms 341 are in a separated state, and the two pressing mechanisms 341 are further arranged to respectively adsorb the downstream part 403 of the working material strip 402 and the upstream part 407 of the spare material strip 405, and transfer the downstream part 403 of the working material strip 402 and the upstream part 407 of the spare material strip 405 to the first of the two pressing mechanisms 341 after the upstream part 404 of the working material strip 402 and the downstream part 406 of the spare material strip 405 are collected.

After the working material strip 402 and the spare material strip 405 are cut from the cutting position, the two pressing mechanisms 341 may adsorb the downstream part 403 of the working material strip 402 and the upstream part 407 of the spare material strip 405 respectively and move away from each other, and thus after the two pressing mechanisms 341 release the clamping of the working material strip 402 and the spare material strip 405, the downstream part 403 of the working material strip 402 and the upstream part 407 of the spare material strip 405 do not loosen or misalign relative to the joining position, so as to improve the accuracy of connecting the downstream part 403 of the working material strip 402 and the upstream part 407 of the spare material strip 405.

According to some embodiments of the present application, optionally, as shown in FIG. 6, and FIG. 10 to FIG. 12, the two pressing mechanisms 341 each include a pressing member 3411, at least one of the two pressing mechanisms 341 includes a pressing drive member 3412, the pressing member 3411 includes a first pressing area 3414 and a second pressing area 3415 separated from each other, the pressing drive member 3412 drives at least one pressing member 3411 so that the two first pressing areas 3414 cooperate with each other to clamp the working material strip 402 and the spare material strip 405, the two second pressing areas 3415 cooperate with each other to clamp the working material strip 402 and the spare material strip 405, and the material strip cutting mechanism 342 cuts the working material strip 402 and the spare material strip 405 in a separated area of the first pressing area 3414 and the second pressing area 3415. After cutting is completed, the pressing drive member 3412 drives the two pressing members 3411 to be separated from each other, the two pressing members 3411 respectively adsorb the downstream part 403 of the working material strip 402 and the upstream part 407 of the spare material strip 405, after the upstream part 404 of the working material strip 402 and the downstream part 406 of the spare material strip 405 are collected, the pressing drive member 3412 drives the two pressing members 3411 to be separated from each other, and the first of the two pressing mechanisms 341 simultaneously adsorbs the downstream part 403 of the working material strip 402 and the upstream part 407 of the spare material strip 405.

With such an arrangement, the downstream part 403 of the working material strip 402 and the upstream part 407 of the spare material strip 405 can be stably positioned, so as to facilitate the connection of the downstream part 403 of the working material strip 402 and the upstream part 407 of the spare material strip 405.

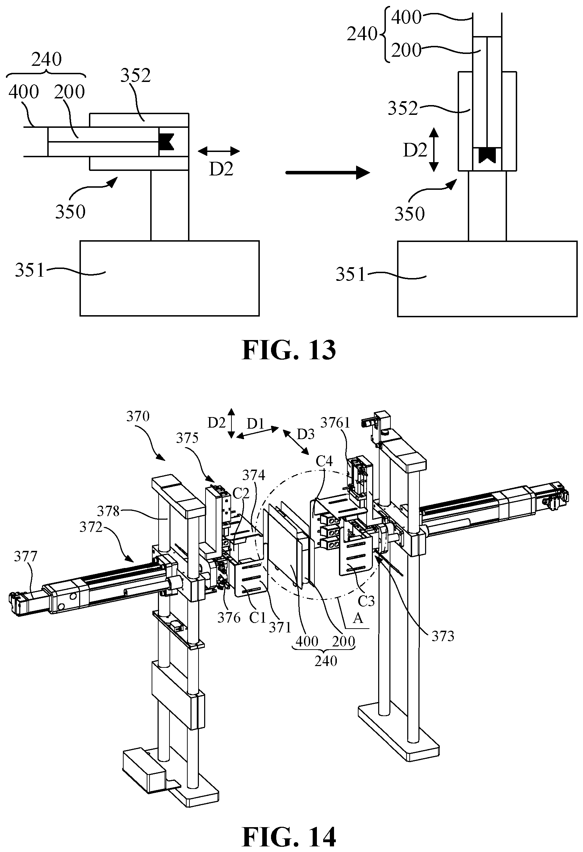

According to some embodiments of the present application, optionally, as shown in FIG. 6 and FIG. 13, the coating device 300 further includes a positioning assembly 350, which is arranged to clamp and fix the electrode coating body 240 output by the first coating assembly 330 from outer sides of the two main coating areas 410.

By arranging the positioning assembly 350 to replace the first coating assembly 330 to position the electrode assembly 200, the electrode coating body 240 can be stably separated from the first coating assembly 330. By arranging the positioning assembly 350 to clamp and fix the electrode coating body 240 output by the first coating assembly 330 from the outer sides of the two main coating areas 410, the positioning assembly 350 can avoid the side surface 213, the side coating area 430, the second 212b of the two end surfaces 212, and the end coating area 440, thereby reducing the interference of the positioning assembly 350 with the subsequent coating process.

Optionally, as shown in FIG. 13, the positioning assembly 350 includes a moving holder 351, a rotary positioning motor, a cylinder and clamping arms 352, and the cylinder can drive the two clamping arms 352 to clamp the second coating assembly 370. The clamping arms 352 can be rotatably connected with the moving holder 351, and the rotary positioning motor can drive the clamping arms 352 to rotate relative to the moving holder 351, thereby driving the electrode coating body 240 to rotate. For example, in an initial stage when the electrode coating body 240 is clamped by the clamping arms 352, the movement direction of the electrode coating body 240 entering between the two clamping arms 352 may be parallel to the second direction D2 of the electrode coating body 240, and then the rotary positioning motor may drive the clamping arms 352 to rotate 90°, so that the second direction D2 of the electrode coating body 240 is perpendicular to the movement direction of the electrode coating body 240 entering between the two clamping arms 352.

According to some embodiments of the present application, optionally, as shown in FIG. 5, FIG. 7 and FIG. 13, the coating film 400 includes a side coating area 430 connected with the main coating area 410, the coating device 300 further includes a second coating assembly 370, the positioning assembly 350 transfers the electrode coating body 240 to the second coating assembly 370, and the second coating assembly 370 is arranged to drive the side coating area 430 to contact and coat the side surface 213.

The positioning assembly 350 can play a role in transportation, so as to drive the electrode coating body 240 to approach the second coating assembly 370, so that the second coating assembly 370 can coat the side surface 213 with the side coating area 430. The second coating assembly 370 can drive the side coating area 430 to move toward the side surface 213, so that the side coating area 430 gradually contacts and coats the side surface 213.

The second coating assembly 370 can adjust the relative position relationship between the electrode assembly 200 and the side coating area 430. By arranging the second coating assembly 370 to coat the side surface 213 with the side coating area 430, the coating effect of the coating film 400 on the electrode main body 210 can be improved.

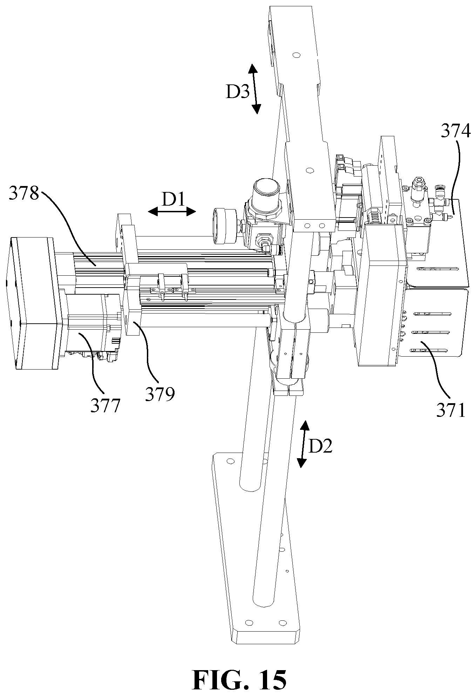

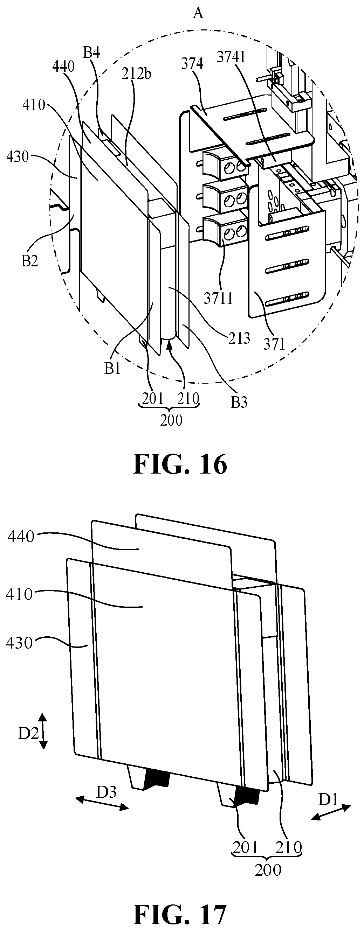

According to some embodiments of the present application, optionally, as shown in FIG. 14 to FIG. 17, the second coating assembly 370 includes a side surface pressing plate 371, a first pressing plate drive mechanism 372, and a second pressing plate drive mechanism 373, the first pressing plate drive mechanism 372 is used to drive the side surface pressing plate 371 along the first direction D1 so that the side surface pressing plate 371 pushes the side coating area 430 to be bent toward the side surface 213 relative to the main coating area 410, and the second pressing plate drive mechanism 373 is used to drive the side surface pressing plate 371 along the third direction D3 so that the side surface pressing plate 371 presses the side coating area 430 on the side surface 213.

After the main coating area 410 coats the main surface 211 of the electrode main body 210, the side coating area 430 and the main coating area 410 may be coplanar or approximately coplanar. The side surface pressing plate 371 moves along the first direction D1 to push the side coating area 430 to be bent relative to the main coating area 410. In the process of being bent relative to the main coating area 410, the side coating area 430 gradually approaches the side surface 213 of the electrode main body 210. After the side surface pressing plate 371 pushes the side coating area 430 to be bent toward the side surface 213 relative to the main coating area 410, the side surface pressing plate 371 and the side surface 213 of the electrode main body 210 can be arranged opposite to each other and spaced apart in the third direction D3, and the side coating area 430 is located between the side surface pressing plate 371 and the side surface 213 of the electrode main body 210. At this time, the side surface pressing plate 371 moves along the third direction D3 toward the electrode main body 210 to press the side coating area 430 on the side surface 213 of the electrode main body 210, so that the side coating area 430 coats the side surface 213 of the electrode main body 210.

With such an arrangement, the action of bending the side coating area 430 by the second coating assembly 370 and the action of coating the side surface 213 with the side coating area 430 can be smoothly connected, which is beneficial to simplifying the action and structure of the second coating assembly 370 and improving the coating efficiency.

Optionally, as shown in FIG. 14 to FIG. 17, each main coating area 410 may be connected with two side coating areas 430, the two side coating areas 430 connected to the first of the two main coating areas 410 may be recorded as B1 and B2, and the two side coating areas 430 connected with the second of the two main coating areas 410 may be recorded as B3 and B4. The second coating assembly 370 includes four side surface pressing plates 371 corresponding to the four side coating areas 430. The four side surface pressing plates 371 can be recorded as C1, C2, C3 and C4. C1, C2, C3 and C4 are used to bend B1, B2, B3 and B4 toward the side surface 213 and press them on the side surface 213 of the electrode main body 210 in a one-to-one correspondence.

Before the four side surface pressing plates 371 respectively move along the first direction D1, the four side coating areas 430 are located between the four side surface pressing plates 371. The direction in which C1 and C2 move along the first direction D1 is opposite to the direction in which C3 and C4 move along the first direction D1, so that C1 and C2 as well as C3 and C4 can approach each other, and then C1 and C2 can respectively bend B1 and B2 toward the side surface 213, and meanwhile C3 and C4 can respectively bend B3 and B4 toward the side surface 213.

Before C1 and C2 move along the third direction D3, C1 and C2 are spaced apart from and opposite to the two side surfaces 213 respectively, B1 is between C1 and one side surface 213, and B2 is between C2 and the other side surface 213. The direction in which C1 moves toward the electrode main body 210 along the third direction D3 is opposite to the direction in which C2 moves toward the electrode main body 210 along the third direction D3, so that C1 and C2 approach each other, so that C1 and C2 press B1 and B2 on the side surface 213 of the electrode main body 210 respectively. Before C1 and C2 move along the third direction D3, C1 and C2 are spaced apart from and opposite to the two side surfaces 213 respectively, B1 is between C1 and one side surface 213, and B2 is between C2 and the other side surface 213. The direction in which C1 moves toward the electrode main body 210 along the third direction D3 is opposite to the direction in which C2 moves toward the electrode main body 210 along the third direction D3, so that C1 and C2 approach each other, so that C1 and C2 press B1 and B2 on the side surface 213 of the electrode main body 210 respectively.

Furthermore, each main coating area 410 is connected with two side coating areas 430, one of the two side coating areas 430 connected with the first of the two main coating areas 410 and one of the two side coating areas 430 connected with the second of the two main coating areas 410 jointly cover one side surface 213 of the electrode main body 210, and the other of the two side coating areas 430 connected with the first of the two main coating areas 410 and the other of the two side coating areas 430 connected with the second of the two main coating areas 410 jointly cover the other side surface 213 of the electrode main body 210. Furthermore, the two side coating areas 430 covering the same side surface 213 of the electrode main body 210 may overlap each other and partially overlap.

According to some embodiments of the present application, optionally, as shown in FIG. 14 to FIG. 17, the coating film 400 includes an end coating area 440 connected with the main coating area 410, and the second coating assembly 370 is arranged to drive the end coating area 440 to contact and coat the second 212b of the two end surfaces 212.

The second coating assembly 370 can adjust the relative position relationship between the electrode assembly 200 and the end coating area 440. By arranging the second coating assembly 370 to coat the second 212b of the two end surfaces 212 with the end coating area 440, the coating effect of the coating film 400 on the electrode main body 210 can be improved.

According to some embodiments of the present application, optionally, as shown in FIG. 14 to FIG. 17, the second coating assembly 370 includes an end surface pressing plate 374, a first pressing plate drive mechanism 372, and a third pressing plate drive mechanism 375, the first pressing plate drive mechanism 372 is used to drive the end surface pressing plate 374 along the first direction D1 so that the end surface pressing plate 374 pushes the end coating area 440 to be bent toward the second 212b of the two end surfaces 212 relative to the main coating area 410, and the third pressing plate drive mechanism 375 is used to drive the end surface pressing plate 374 along the second direction D2 so that the end surface pressing plate 374 presses the end coating area 440 on the second 212b of the two end surfaces 212.

After the main coating area 410 coats the main surface 211 of the electrode main body 210, the end coating area 440 and the main coating area 410 may be coplanar or approximately coplanar. The end surface pressing plate 374 moves along the first direction D1 to push the end coating area 440 to be bent relative to the main coating area 410. In the process of being bent relative to the main coating area 410, the end coating area 440 gradually approaches the second 212b of the two end surfaces 212. After the end surface pressing plate 374 pushes the end coating area 440 to be bent relative to the main coating area 410 toward the second 212b of the two end surfaces 212, the end surface pressing plate 374 and the second 212b of the two end surfaces 212 can be arranged opposite to and spaced apart from each other in the second direction D2, and the end coating area 440 is located between the end surface pressing plate 374 and the second 212b of the two end surfaces 212. At this point, the end surface pressing plate 374 moves along the second direction D2 close to the electrode main body 210 to press the end coating area 440 on the second 212b of the two end surfaces 212, so that the end coating area 440 coats the second 212b of the two end surfaces 212.

Optionally, as shown in FIG. 14 to FIG. 17, each main coating area 410 is connected with an end coating area 440, and the second coating assembly 370 includes two end surface pressing plates 374. The two end surface pressing plates 374 move respectively along the first direction D1 to make the two end surface pressing plates 374 approach each other, and further make the two end coating areas 440 be bent respectively toward the second 212b of the two end surfaces 212. The two end surface pressing plates 374 move respectively along the second direction D2 to enable the two end coating areas 440 to respectively cover the second one 212b of the two end surfaces 212.

In some embodiments, the two end coating areas 440 may overlap each other and partially overlap. One of the two end surface pressing plates 374 can first bend one end coating area 440 toward the second 212b of the two end surfaces 212 and press it on the second 212b of the two end surfaces 212, and the other of the two end surface pressing plates 374 can then bend the other end coating area 440 toward the second 212b of the two end surfaces 212 and press it on the second 212b of the two end surfaces 212.

In some embodiments, the second pressing plate drive mechanism 373 includes a first pressing plate cylinder 376, and the third pressing plate drive mechanism 375 includes a second pressing plate cylinder 3761. The second pressing plate cylinder 3761 is used to provide power for driving the end surface pressing plate 374 along the second direction D2, and the first pressing plate cylinder 376 is used to provide power for driving the side surface pressing plate 371 along the third direction D3. In some other embodiments, the second pressing plate drive mechanism 373 and the third pressing plate drive mechanism 375 can be arranged in linkage. For example, the second pressing plate drive mechanism 373 and the third pressing plate drive mechanism 375 share a cylinder to simultaneously provide power for driving the end surface pressing plate 374 along the second direction D2 and driving the side surface pressing plate 371 along the third direction D3, so that the side surface pressing plate 371 moves along the third direction D3 toward the side coating area 430 while the end surface pressing plate 374 moves along the second direction D2 toward the end coating area 440. In this way, the coating time can be reduced and the coating efficiency can be improved.

Optionally, the end surface pressing plate 374 and the side surface pressing plate 371 do not generate relative displacement in the first direction D1. The first pressing plate drive mechanism 372 can simultaneously drive the end surface pressing plate 374 and drive the side surface pressing plate 371 along the first direction D1. In this way, the coating efficiency can be improved. Furthermore, when the first pressing plate drive mechanism 372 drives the end surface pressing plate 374 along the first direction D1, it can synchronously drive the third pressing plate drive mechanism 375 along the first direction D1. When the first pressing plate drive mechanism 372 drives the side surface pressing plate 371 along the first direction D1, it can synchronously drive the second pressing plate drive mechanism 373 along the first direction D1.

Optionally, as shown in FIG. 14 to FIG. 17, the first pressing plate drive mechanism 372 is provided with a pressing plate drive motor 377, and the pressing plate drive motor 377 is used to provide power for driving the end surface pressing plate 374 and the side surface pressing plate 371 along the first direction D1. Furthermore, the pressing plate drive motor 377 is used to drive the second pressing plate drive mechanism 373, the third pressing plate drive mechanism 375, the end surface pressing plate 374 and the side surface pressing plate 371 along the first direction D1.

Optionally, as shown in FIG. 14 to FIG. 17, the second coating assembly 370 includes a first pressing plate holder 378 and a second pressing plate holder 379, and the second pressing plate holder 379 is slidably arranged on the first pressing plate holder 378 along the first direction D1. The first pressing plate drive mechanism 372 is arranged on the first pressing plate holder 378 and is in drive connection with the second pressing plate holder 379 to drive the second pressing plate holder 379 to move relative to the first pressing plate holder 378 along the first direction D1. The side surface pressing plate 371, the second pressing plate drive mechanism 373, the end surface pressing plate 374 and the third pressing plate drive mechanism 375 may be arranged on the second pressing plate holder 379, and move synchronously with the second pressing plate holder 379 along the first direction D1.

Furthermore, the first pressing plate holder 378 and the second pressing plate holder 379 are relatively fixedly arranged.

Optionally, as shown in FIG. 14 to FIG. 17, an end limiting block 3741 with an adjustable position is arranged on the end surface pressing plate 374, and the end limiting block 3741 is used to abut against the main coating area 410 to limit the electrode assembly 200 in the first direction D1. By adjusting the position of the end limiting block 3741 on the end surface pressing plate 374, electrode assemblies 200 of different sizes can be matched, thereby improving the compatibility of the end surface pressing plate 374 with electrode assemblies 200 of different sizes. Furthermore, the end limiting block 3741 is provided with an arc surface facing the main coating area 410, so as to improve the fit with the main coating area 410.

Optionally, as shown in FIG. 14 to FIG. 17, a side limiting block 3711 with an adjustable position is arranged on the side surface pressing plate 371, and the side limiting block 3711 is used to abut against the main coating area 410 to limit the electrode assembly 200 in the first direction D1. By adjusting the position of the side limiting block 3711 on the side surface pressing plate 371, electrode assemblies 200 of different sizes can be matched, thereby improving the compatibility of the side surface pressing plate 371 with electrode assemblies 200 of different sizes. Furthermore, the side limiting block 3711 is provided with an arc surface facing the main coating area 410, so as to improve the fit with the main coating area 410.

According to some embodiments of the present application, optionally, as shown in FIG. 14 to FIG. 17, the first pressing plate drive mechanism 372 includes a pressing plate drive motor 377, a first pressing plate holder 378, and a second pressing plate holder 379. The pressing plate drive motor 377 is arranged on the first pressing plate holder 378, and drives the second pressing plate holder 379 to move relative to the first pressing plate holder 378. The second pressing plate drive mechanism 373 includes a first pressing plate cylinder 376, which is arranged on the second pressing plate holder 379, and the first pressing plate cylinder 376 drives the side surface pressing plate 371 to move relative to the second pressing plate holder 379. The third pressing plate drive mechanism 375 includes a second pressing plate cylinder 3761, which is arranged on the second pressing plate holder 379, and the second pressing plate cylinder 3761 drives the end surface pressing plate 374 to move relative to the second pressing plate holder 379.

Such an arrangement can improve the degree of freedom of movement of the side surface pressing plate 371 and the end surface pressing plate 374, which is beneficial to improving the coating effect.

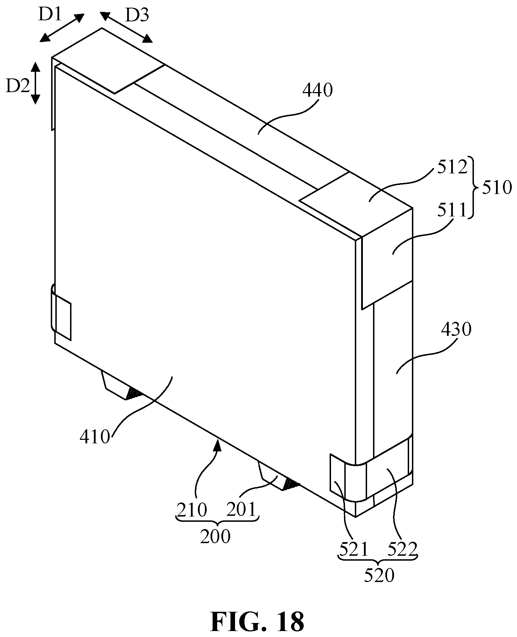

According to some embodiments of the present application, optionally, as shown in FIG. 5, FIG. 7, FIG. 8, and FIG. 18, the coating film 400 further includes a side coating area 430 and an end coating area 440 connected with the main coating area 410, wherein the side coating area 430 coats the side surface 213, the end coating area 440 coats the second 212b of the two end surfaces 212, the coating device 300 further includes a first tape attaching assembly 380, which is used to drive the electrode assembly 200 and first tape 510 to perform a relative movement, the first tape 510 includes a first part and a second part connected with each other, and the first tape attaching assembly 380 is arranged to attach the first part 511 of the first tape 510 to the side coating area 430 and the second part 512 of the first tape 510 to the end coating area 440 at a corner formed by the side surface 213 and the second 212b of the two end surfaces 212.

The first tape 510 can connect the side coating area 430 and the end coating area 440 together, so that the side coating area 430 and the end coating area 440 can be kept fixed relative to the electrode main body 210, thereby improving the coating firmness of the coating film 400 to the electrode main body 210.

Specifically, after the end coating area 440 and the side coating area 430 are pressed on the battery main body, the first tape attaching assembly 380 can drive the electrode assembly 200 to move so that the side coating area 430 and the first part 511 of the first tape 510 are arranged opposite each other, and then the first tape attaching assembly 380 drives the electrode assembly 200 to continue to move so that the first part 511 of the first tape 510 is attached to the side coating area 430. Afterwards, the first tape attaching assembly 380 may drive the electrode assembly 200 to rotate toward the second part 512 of the first tape 510, so that the second part 512 of the first tape 510 gradually approaches and is finally attached to the end coating area 440.

Or, the first tape attaching assembly 380 can drive the electrode assembly 200 to move so that the end coating area 440 and the second part 512 of the first tape 510 are arranged opposite each other, and then the first tape attaching assembly 380 drives the electrode assembly 200 to continue to move so that the second part 512 of the first tape 510 is attached to the end coating area 440. Afterwards, the first tape attaching assembly 380 may drive the electrode assembly 200 to rotate toward the first part 511 of the first tape 510, so that the first part 511 of the first tape 510 gradually approaches and is finally attached to the side coating area 430.

Furthermore, the side coating areas 430 connected to the two main coating areas 410 jointly coat the same side surface 213 of the electrode main body 210, and the first tape 510 can connect the two side coating areas 430 coating the same side surface 213 of the electrode main body 210. The end coating areas 440 connected to the two main coating areas 410 jointly coat the second 212 b of the two end surfaces 212, and the first tape 510 can connect the two end coating areas 440 coating the second 212 b of the two end surfaces 212.

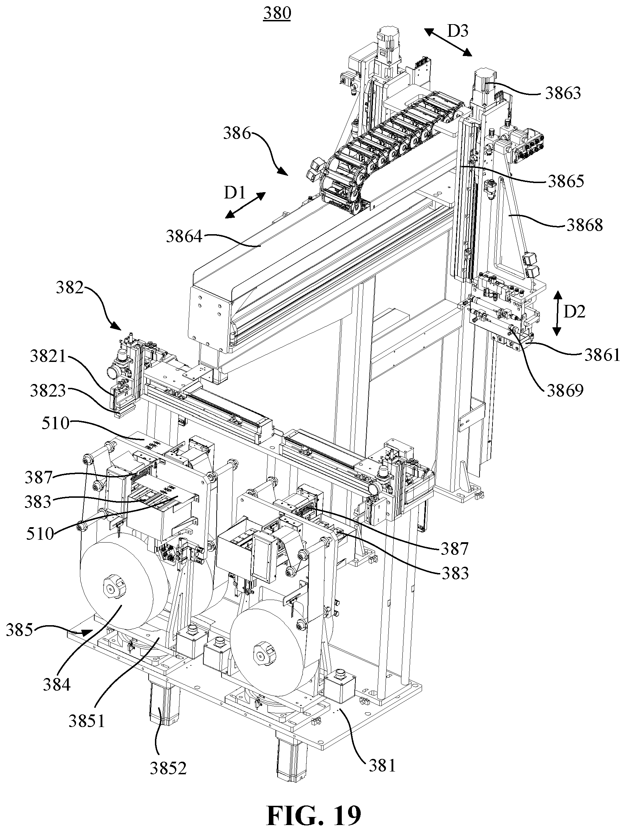

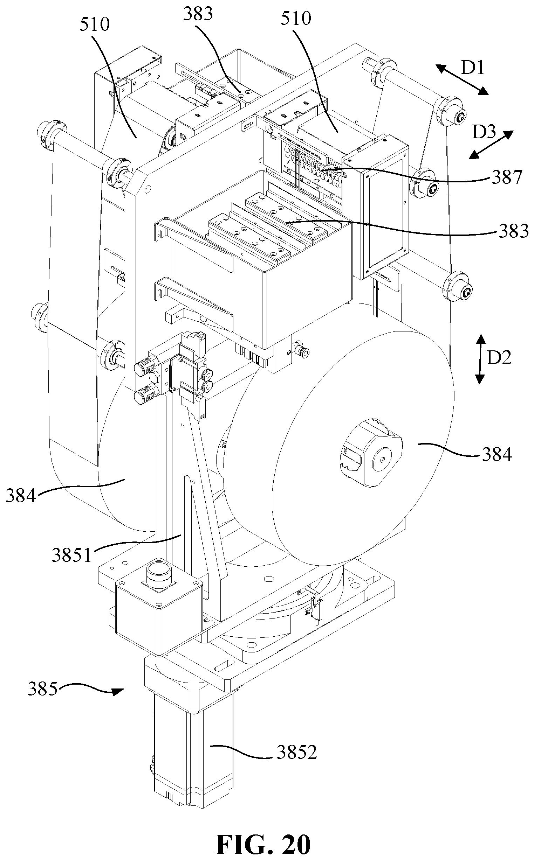

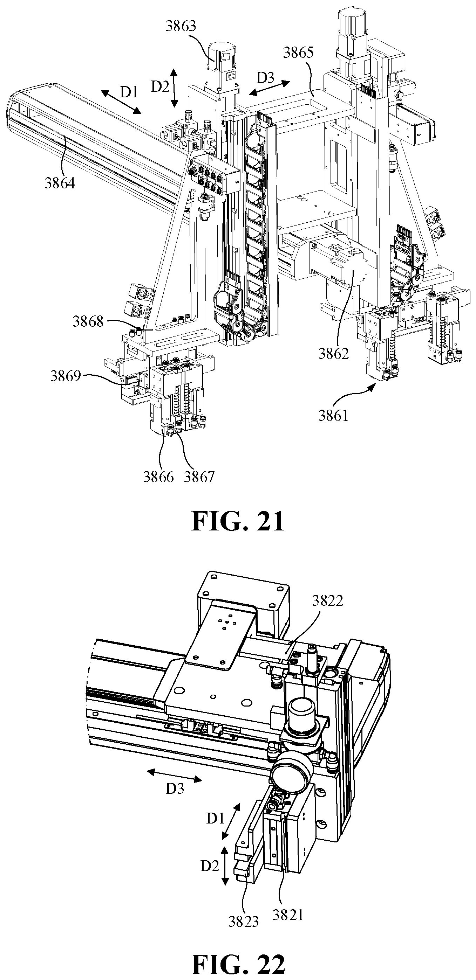

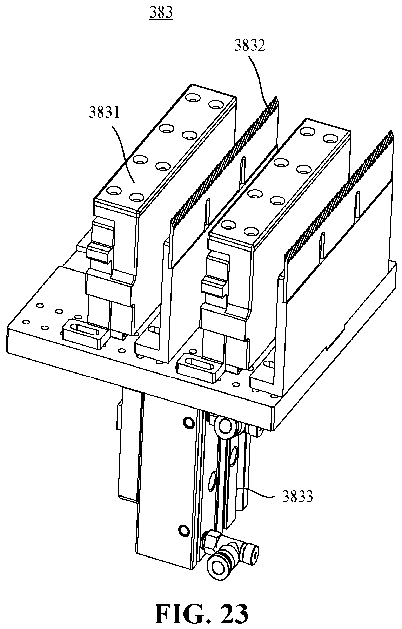

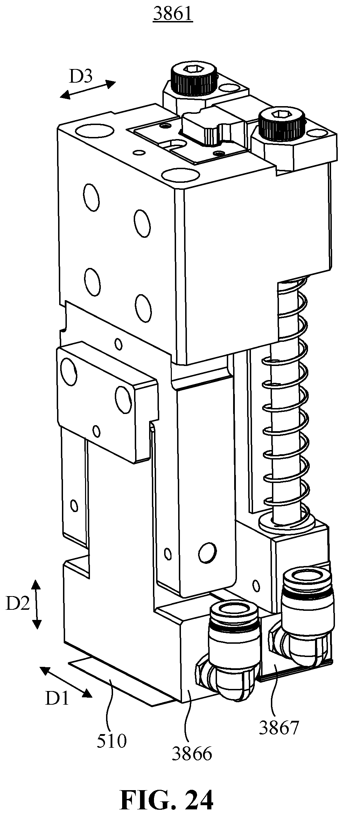

Optionally, as shown in FIG. 19 to FIG. 24, the first tape attaching assembly 380 further includes a first cutting mechanism 383, a first tape taking mechanism 386 and a first tape pulling mechanism 382. The first tape pulling mechanism 382 is used to clamp and pull the head end of the released part of the first tape roll 384, the first cutting mechanism 383 is used to cut the first tape 510 from the released part of the first tape roll 384, and the first tape taking mechanism 386 is used to absorb the first tape 510 and attach it to the coating film 400.

Optionally, as shown in FIG. 19 to FIG. 24, the first tape attaching assembly 380 further includes a first tape feeding mechanism 387, and the first tape feeding mechanism 387 is used to transfer the released part of the first tape roll 384 for cutting by the first cutting mechanism 383. Furthermore, the first tape feeding mechanism 387 includes a roller (not labeled), and the roller is used to transfer the released part of the first tape roll 384.

According to some embodiments of the present application, optionally, as shown in FIG. 19 to FIG. 24, the first tape attaching assembly 380 includes a first unwinding mechanism 381, a first tape pulling mechanism 382, and a first cutting mechanism 383, the first unwinding mechanism 381 is arranged to place and release a first tape roll 384, the first tape pulling mechanism 382 is arranged to clamp and pull a head end of a released part of the first tape roll 384, and the first cutting mechanism 383 is arranged to cut the first tape 510 from the released part of the first tape roll 384.

Such an arrangement is conducive to automatically providing the first tape 510.

According to some embodiments of the present application, optionally, as shown in FIG. 19 to FIG. 24, the first tape pulling mechanism 382 includes a first tape clamping cylinder 3821, a first tape pulling motor 3822, and a first tape clamping member 3823, the first tape clamping cylinder 3821 is used to drive the first tape clamping member 3823 to clamp the head end of the released part, and the first tape pulling motor 3822 is used to drive the first tape clamping member 3823 to move to pull the released part.

The first tape pulling motor 3822 drives the first tape clamping member 3823 to move to pull the released part, so that the released part of the first tape roll 384 can be extended, and the released part of the first tape roll 384 is stretched for easy cutting.

According to some embodiments of the present application, optionally, as shown in FIG. 19 to FIG. 24, the first unwinding mechanisms 381 and the first cutting mechanisms 383 are two corresponding groups. The first tape attaching assembly 380 includes a switching mechanism 385, and the switching mechanism includes a material roll holder 3851 and a switching motor 3852. The two groups of first unwinding mechanisms 381 and first cutting mechanisms 383 are arranged on the material roll holder 3851. The switching motor 3852 drives the material roll holder 3851 to rotate around a predetermined rotation axis, so that the two groups of the first unwinding mechanisms 381 and the first cutting mechanisms 383 can switch between a spare position and a working position for the first tape pulling mechanism 382 and the first cutting mechanisms 383 to operate. The rotation axis is perpendicular to a plane where the released part is located.

A first unwinding mechanism 381 and a first cutting mechanism 383 can form a group. The two first unwinding mechanisms 381 and the two first cutting mechanisms 383 may form two groups accordingly. With such an arrangement, a quick roll change operation of the first tape roll 384 is facilitated, and the roll change efficiency can be improved. Specifically, each time the roll is changed, the switching motor 3852 drives the material roll holder 3851 to rotate 180°.

According to some embodiments of the present application, optionally, as shown in FIG. 19 to FIG. 24, the first tape attaching assembly 380 includes a first tape taking mechanism 386, which is used to adsorb and take away the first tape 510. The first cutting mechanism 383 includes a first pressing block 3831, a first cutter 3832, and a first cutting cylinder 3833. The first pressing block 3831 and the first cutter 3832 are relatively fixedly arranged. The first cutting cylinder 3833 is arranged to drive the first pressing block 3831 to press the released part on the first tape taking mechanism 386, and drive the first cutter 3832 to cut the first tape 510 from the released part.

The first pressing block 3831 can be arranged to press and position the released part of the first tape roll 384, thereby improving the stability of the cutting process.

According to some embodiments of the present application, optionally, as shown in FIG. 19 to FIG. 24, the first tape attaching assembly 380 includes a first tape taking mechanism 386, which is used to adsorb and take away the first tape 510. The first tape taking mechanism 386 includes a first tape taking member 3861, a first tape taking motor 3862, a second tape taking motor 3863, a first tape taking holder 3864, and a second tape taking holder 3865. The first tape taking member 3861 is used to adsorb the first tape 510. The first tape taking motor 3862 is arranged on the first tape taking holder 3864 and drives the second tape taking holder 3865 to move above the released part of the first tape roll 384. The second tape taking motor 3863 is arranged on the second tape taking holder 3865, and drives the first tape taking member 3861 o approach and move away from a plane where the released part of the first tape roll 384 is located.

With such an arrangement, the degree of freedom of movement of the first tape taking member 3861 can be improved, so as to facilitate the absorption and transfer of the first tape 510.

According to some embodiments of the present application, optionally, as shown in FIG. 19 to FIG. 24, the first tape taking member 3861 includes a first sub-tape taking portion 3866 and a second sub-tape taking portion 3867. The first sub-tape taking portion 3866 is used to adsorb the first part 511 of the first tape 510 and attach the same to the side coating area 430. The second sub-tape taking portion 3867 is used to adsorb the second part 512 of the first tape 510 and attach the same to the end coating area 440.

Such an arrangement can improve the continuity of the tape taking action and the tape attaching action.

Optionally, at least one of the first sub-tape taking portion 3866 and the second sub-tape taking portion 3867 has an adsorption surface for contacting and adsorbing the first tape 510, and the first sub-tape taking portion 3866 and the second sub-tape taking portion 3867 are arranged to be relatively movable along a direction perpendicular to the adsorption surface, thereby allowing the first tape 510 adsorbed on the first tape taking member 3861 to be bent. For example, one of the first sub-tape taking portion 3866 and the second sub-tape taking portion 3867 may be driven to move along a direction perpendicular to the adsorption surface.

According to some embodiments of the present application, optionally, as shown in FIG. 19 to FIG. 24, the first sub-tape taking portion 3866 is a telescopic member. The second tape taking motor 3863 drives the first tape taking member 3861 along the third direction D3, and the first sub-tape taking portion 3866 presses the first part 511 of the first tape 510 on the side coating area 430 and contracts, so that the second sub-tape taking portion 3867 can continue to move along the third direction D3 and fit the end coating area 440, thereby attaching the second part 512 of the first tape 510 to the end coating area 440. Or, the second sub-tape taking portion 3867 is a telescopic member. The second tape taking motor 3863 drives the first tape taking member 3861 along the second direction D2, and the second sub-tape taking portion 3867 presses the second part 512 of the first tape 510 on the end coating area 440 and contracts, so that the first sub-tape taking portion 3866 can continue to move along the second direction D2 and fit the side coating area 430, thereby attaching the first part 511 of the first tape 510 to the side coating area 430.

The telescopic member can be telescoped. For example, the telescopic member is elastic, can be elastically telescopic, and can telescope under pressure.

With such an arrangement, the structural flexibility of the first tape taking member 3861 can be improved, so that the first tape taking member 3861 can adaptively adjust its shape according to the shape of the electrode main body 210, thereby achieving diversified tape attaching actions. Specifically, when the first tape 510 is absorbed by the first sub-tape taking portion 3866 and the second sub-tape taking portion 3867, the first tape 510 is in a planar shape, and one of the first sub-tape taking portion 3866 and the second sub-tape taking portion 3867 is compressed so that the first sub-tape taking portion 3866 and the second sub-tape taking portion 3867 are misaligned, thereby causing the first tape 510 to be bent so that it can be attached to the end coating area 440 and the side coating area 430 at the same time.

According to some embodiments of the present application, optionally, as shown in FIG. 19 to FIG. 24, the first cutting mechanism 383 is arranged to cut two pieces of first tape 510 from the released part, the number of the first tape taking members 3861 is two, and the first tape taking members 3861 respectively adsorb the corresponding first tape 510. The first tape attaching assembly 380 includes the first tape taking mechanism 386, the first tape taking mechanism 386 is used to adsorb and take away the first tape 510, the first tape taking mechanism 386 includes the first tape taking members 3861, a first tape taking motor 3862, a second tape taking motor 3863, a first tape taking holder 3864, a second tape taking holder 3865, a third tape taking holder 3868, and a tape dispensing cylinder 3869. The first tape taking member 3861 is used to adsorb the first tape 510. The first tape taking motor 3862 is arranged on the first tape taking holder 3864 and drives the second tape taking holder 3865 to move above the released part of the first tape roll 384. The second tape taking motor 3863 is arranged on the second tape taking holder 3865, and drives the third tape taking holder 3868 and the two first tape taking members 3861 to approach and move away from the plane where the released part of the first tape roll 384 is located. The tape dispensing cylinder 3869 is arranged on the third tape taking holder 3868, and the tape dispensing cylinder 3869 is arranged to drive the two first tape taking members 3861 away from each other, so that the two first tape taking members 3861 respectively correspond to two corners of the electrode assembly 200 spaced apart along the third direction D3.

For example, the first cutting mechanism 383 is provided with two first cutters 3832 corresponding to the same release portion, and the first cutting cylinder 3833 drives the two first cutters 3832 to move synchronously, so that the two first cutters 3832 can cut two pieces of first tape 510 from the same released part each time.

With such an arrangement, the first tape taking mechanism 386 can adsorb and take away the two pieces of first tape 510 corresponding to each electrode assembly 200, and then simultaneously and correspondingly attach the two pieces of first tape 510 to the two corners of the electrode assembly 200 spaced apart along the third direction D3, thereby improving the tape attaching efficiency.

According to some embodiments of the present application, optionally, as shown in FIG. 5, FIG. 7, FIG. 8, and FIG. 18, the coating device 300 further includes a second tape attaching assembly 390, which is used to drive the electrode assembly 200 and second tape 520 to perform a relative movement, the second tape 520 includes a first part and a second part connected with each other, and the second tape attaching assembly 390 is arranged to attach the first part 521 of the second tape 520 to the main coating area 410 and the second part 522 of the second tape 520 to the side coating area 430 at a corner formed by the side surface 213 and the main surface 211.

Before attaching the second tape 520, at least a part of the side coating area 430 is connected to only one of the two main coating areas 410, but not connected to the other of the two main coating areas 410. The second tape 520 can connect the side coating area 430 and the other of the main coating areas 410 together, so that the side coating area 430 and the main coating area 410 can be kept fixed relative to the electrode main body 210, thereby improving the coating firmness of the coating film 400 to the electrode main body 210.

For example, after the side coating area 430 is pressed on the battery main body, the second tape attaching assembly 390 can drive the electrode assembly 200 to move so that the first part 521 of the second tape 520 gradually approaches and is finally attached to the main coating area 410, and then the second tape attaching assembly 390 can drive the electrode assembly 200 to rotate toward the second part 522 of the second tape 520, so that the second part 522 of the second tape 520 gradually approaches and is finally attached to the side coating area 430.

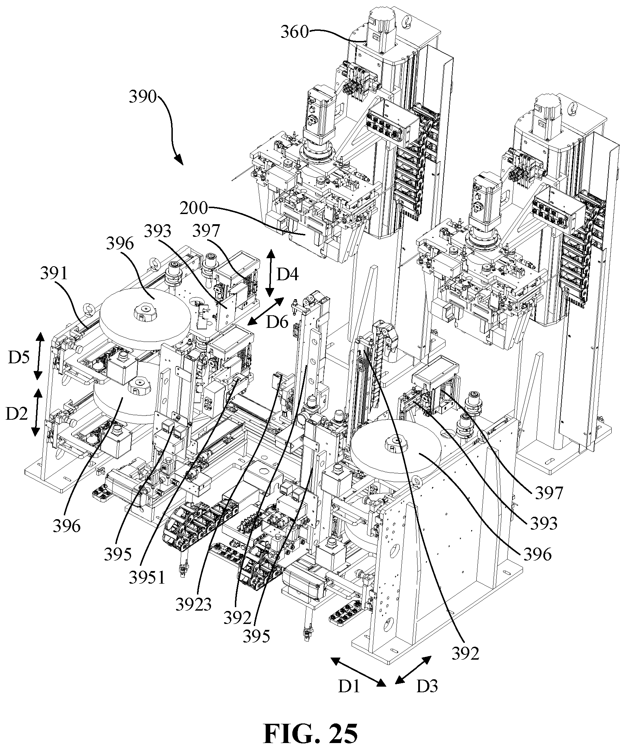

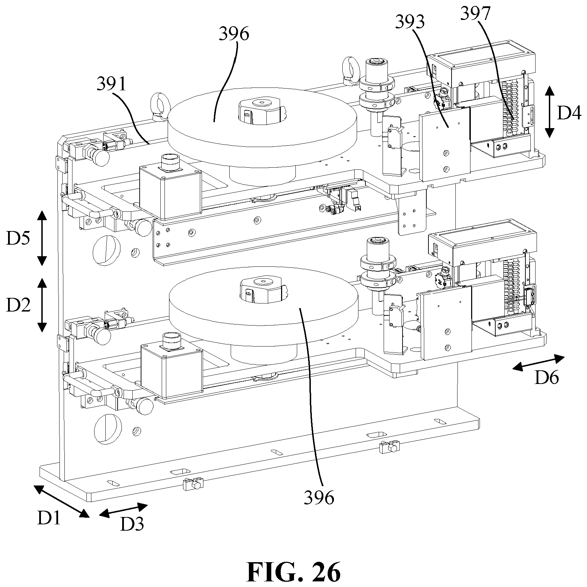

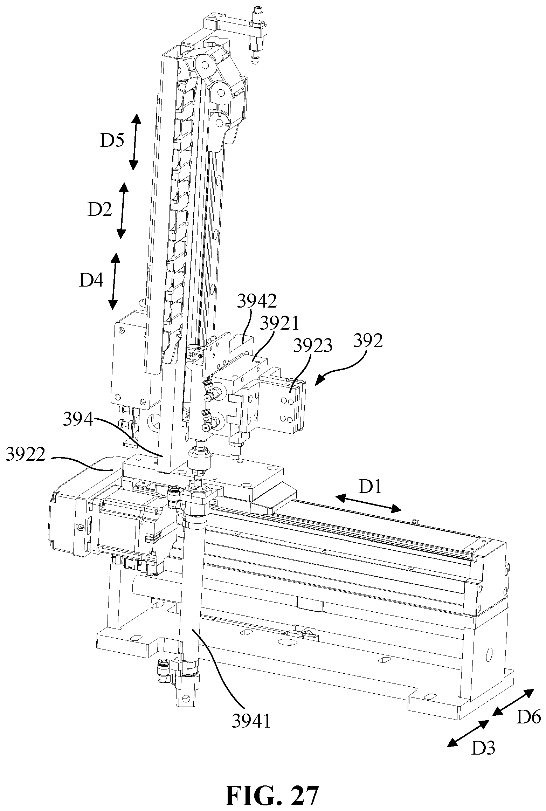

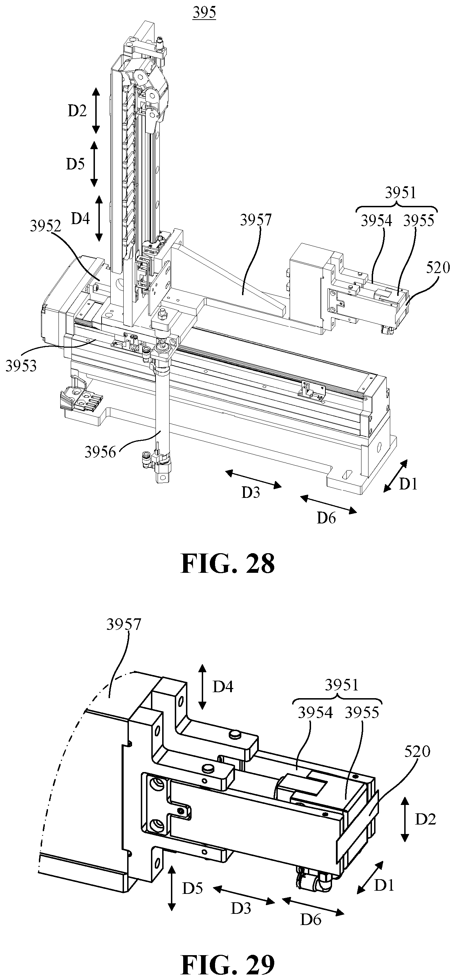

Optionally, as shown in FIG. 25 to FIG. 31, the second tape attaching assembly 390 further includes a second cutting mechanism 393, a second tape taking mechanism 395 and a second tape pulling mechanism 392. The second tape pulling mechanism 392 is used to pull out the second tape 520, the second cutting mechanism 393 is used to cut the second tape 520 from the released part of the second tape roll 396, and the second tape taking mechanism 395 is used to adsorb the second tape 520 and attach it to the coating film 400.

Optionally, as shown in FIG. 25 to FIG. 31, the second tape attaching assembly 390 further includes a second tape feeding mechanism 397, and the second tape feeding mechanism 397 is used to transfer the released part of the second tape roll 396 for cutting by the second cutting mechanism 393. Furthermore, the second tape feeding mechanism 397 includes a roller (not labeled), and the roller is used to transfer the released part of the second tape roll 396.

According to some embodiments of the present application, optionally, as shown in FIG. 25 to FIG. 31, the number of first parts 521 of the second tape 520 is two, the first parts 521 are located at two ends of the second part 522 of the second tape 520, and the second tape attaching assembly 390 is arranged to attach each of the two first parts of the second tape 520 to corresponding one of the two main coating areas 410.

With such an arrangement, a contact area between the second tape 520 and the coating film 400 can be increased, thereby improving the fixing effect on the side coating area 430.

Furthermore, the side coating areas 430 connected to the two main coating areas 410 jointly coat the same side surface 213 of the electrode main body 210, and the second tape 520 can connect the two side coating areas 430 coating the same side surface 213 of the electrode main body 210.

According to some embodiments of the present application, optionally, as shown in FIG. 25 to FIG. 31, the second tape attaching assembly 390 includes a second unwinding mechanism 391, a second tape pulling mechanism 392, and a second cutting mechanism 393. The second unwinding mechanism 391 is arranged to place and release a second tape roll 396. The second tape pulling mechanism 392 is arranged to clamp and pull a head end of a released part of the second tape roll 396. The second cutting mechanism 393 is arranged to cut the second tape 520 from the released part of the second tape roll 396.

Such an arrangement is conducive to automatically providing the second tape 520. According to some embodiments of the present application, optionally, as shown in FIG. 25 to FIG. 31, the second tape pulling mechanism 392 includes a second tape clamping cylinder 3921, a second tape pulling motor 3922, and a second tape clamping member 3923. The second tape clamping cylinder 3921 is used to drive the second tape clamping member 3923 to clamp the head end of the released part of the second tape roll 396, and the second tape pulling motor 3922 is used to drive the second tape clamping member 3923 to move to pull the released part of the second tape roll 396.

The second tape pulling motor 3922 drives the second tape clamping member 3923 to move to pull the released part, so that the released part of the second tape roll 396 can be extended, and the released part of the second tape roll 396 is stretched for easy cutting.

According to some embodiments of the present application, optionally, as shown in FIG. 25 to FIG. 31, the second unwinding mechanisms 391 and the second cutting mechanisms 393 are two corresponding groups and are spaced apart along a width direction D4 of the released part. The second tape attaching assembly 390 includes a tape pulling holder 394, a tape pulling position switching cylinder 3941, and a tape pulling position switching holder 3942, the tape pulling position switching cylinder 3941 is arranged on the tape pulling holder 394, and the second tape pulling mechanism 392 is arranged on the tape pulling position switching holder 3942. The tape pulling position switching cylinder 3941 is arranged to drive the tape pulling position switching holder 3942 to move along a spaced direction D5 of the two second unwinding mechanisms 391, so that the second tape pulling mechanism 392 can switch between a spare position and a working position for the second tape pulling mechanism 392 to operate. The spare position and the working position are each provided with one group of the second unwinding mechanism 391 and the second cutting mechanism 393.

A second unwinding mechanism 391 and a second cutting mechanism 393 can form a group. Two second unwinding mechanisms 391 and two second cutting mechanisms 393 may form two groups accordingly. By arranging the two groups of second unwinding mechanisms 391 and second cutting mechanisms 393, the interference of a roll change operation for the second tape roll 396 on the tape pulling process can be reduced, and the tape pulling efficiency can be improved. Furthermore, two groups of second unwinding mechanisms 391 and second cutting mechanisms 393 are layered in a height direction of the second tape attaching assembly 390.

By arranging the tape pulling position switching cylinder 3941 to drive the tape pulling position switching holder 3942 to move along the spaced direction D5 of the two second unwinding mechanisms 391, a position of the tape pulling mechanism can correspond to a position of one group of second unwinding mechanism 391 and second cutting mechanism 393 that is working, which facilitates the tape pulling operation.

According to some embodiments of the present application, optionally, as shown in FIG. 25 to FIG. 31, the second tape attaching assembly 390 includes a second tape taking mechanism 395, which is used to adsorb and take away the second tape 520. The second cutting mechanism 393 includes a second pressing block 3931, a second cutter 3932, and a second cutting cylinder 3933. The second pressing block 3931 and the second cutter 3932 are relatively fixedly arranged. The second cutting cylinder 3933 is arranged to drive the second pressing block 3931 to press the released part of the second tape roll 396 on the second tape taking mechanism 395, and drive the second cutter 3932 to cut the second tape 520 from the released part of the second tape roll 396.

The second pressing block 3931 can be arranged to press and position the released part of the second tape roll 396, thereby improving the stability of the cutting process.

According to some embodiments of the present application, optionally, as shown in FIG. 25 to FIG. 31, the second tape attaching assembly 390 includes a second tape taking mechanism 395, which is used to adsorb and take away the second tape 520. The second tape taking mechanism 395 includes a second tape taking member 3951, a fourth tape taking motor 3952, and a fourth tape taking holder 3953, and the second tape taking member 3951 is used to adsorb the second tape 520. The fourth tape taking motor 3952 is arranged on the fourth tape taking holder 3953, drives the second tape taking member 3951 to move to a position opposite to the released part of the second tape roll 396 along the thickness direction D6 of the released part of the second tape roll 396, and drives the second tape taking member 3951 to approach and move away from the plane where the released part of the second tape roll 396 is located.

With such an arrangement, the degree of freedom of movement of the second tape taking member 3951 can be improved, so as to facilitate the absorption and transfer of the second tape 520.

According to some embodiments of the present application, optionally, as shown in FIG. 25 to FIG. 31, the second tape taking member 3951 includes a third sub-tape taking portion 3954 and a fourth sub-tape taking portion 3955. The third sub-tape taking portion 3954 is used to adsorb the first part 521 of the second tape 520 and attach the same to the main coating area 410. The fourth sub-tape taking portion 3955 is used to adsorb the second part 522 of the second tape 520 and attach the same to the side coating area 430.

Such an arrangement can improve the continuity of the tape taking action and the tape attaching action.

Optionally, at least one of the third sub-tape taking portion 3954 and the fourth sub-tape taking portion 3955 has an adsorption surface for contacting and adsorbing the second tape 520, and the third sub-tape taking portion 3954 and the fourth sub-tape taking portion 3955 are arranged to be relatively movable along a direction perpendicular to the adsorption surface, thereby allowing the second tape 520 adsorbed on the second tape taking member 3951 to be bent. For example, one of the third sub-tape taking portion 3954 and the fourth sub-tape taking portion 3955 may be driven to move along a direction perpendicular to the adsorption surface.

According to some embodiments of the present application, optionally, as shown in FIG. 25 to FIG. 31, the fourth sub-tape taking portion 3955 is a telescopic member. The fourth tape taking motor 3952 drives the second tape taking member 3951 along the third direction D3, and the fourth sub-tape taking portion 3955 presses the second part 522 of the second tape 520 on the side coating area 430 and contracts, so that the third sub-tape taking portion 3954 can continue to move along the third direction D3 and fit the main coating area 410, thereby attaching the first part 521 of the second tape 520 to the main coating area 410.

The telescopic member can be telescoped. For example, the telescopic member is elastic and can be elastically telescopic.

With such an arrangement, the structural flexibility of the second tape taking member 3951 can be improved, so that the second tape taking member 3951 can adaptively adjust its shape according to the shape of the electrode main body 210, thereby achieving diversified tape attaching actions. Specifically, when the second tape 520 is absorbed by the third sub-tape taking portion 3954 and the fourth sub-tape taking portion 3955, the second tape 520 is in a planar shape, and the fourth sub-tape taking portion 3955 is compressed so that the first sub-tape taking portion 3866 and the second sub-tape taking portion 3867 are misaligned, thereby causing the second tape 520 to be bent so that it can be attached to the main coating area 410 and the side coating area 430 at the same time. Furthermore, the fourth sub-tape taking portion 3955 is located between the two third sub-tape taking portions 3954. During tape attaching, the two third sub-tape taking portions 3954 can be misaligned with the fourth sub-tape taking portion 3955, so that the second tape 520 can be attached to the two main coating areas 410 and the side coating area 430 at the same time.

According to some embodiments of the present application, optionally, as shown in FIG. 25 to FIG. 31, the second unwinding mechanisms 391 and the second cutting mechanisms 393 are two corresponding groups, and are spaced apart along a width direction D4 of the released part of the second tape roll 396. The second tape taking mechanism 395 includes a tape taking position switching cylinder 3956 and a tape taking position switching holder 3957. The tape taking position switching cylinder 3956 is arranged on the fourth tape taking holder 3953, and the second tape taking member 3951 is arranged on the tape taking position switching holder 3957. The tape taking position switching cylinder 3956 is arranged to drive the tape taking position switching holder 3957 to move along a spaced direction D5 of the two second unwinding mechanisms 391, so that the second tape taking member 3951 can switch between a spare position and a working position for the second tape taking mechanism 395 to operate. The spare position and the working position are each provided with one group of the second unwinding mechanism 391 and the second cutting mechanism 393.

Each second unwinding mechanism 391 and a second cutting mechanism 393 can form a group. By arranging the two groups of second unwinding mechanisms 391 and second cutting mechanisms 393, the interference of a roll change operation for the second tape roll 396 on the tape taking process can be reduced, and the tape taking efficiency can be improved. Furthermore, two groups of second unwinding mechanisms 391 and second cutting mechanisms 393 are layered in a height direction of the second tape attaching assembly 390.

By arranging the tape taking position switching cylinder 3956 to drive the tape taking position switching holder 3957 to move along the spaced direction D5 of the two second unwinding mechanisms 391, a position of the second tape taking member 3951 can correspond to a position of one group of second unwinding mechanism 391 and second cutting mechanism 393 that is working, which facilitates the tape taking operation.

According to some embodiments of the present application, optionally, as shown in FIG. 25 to FIG. 31, the second tape attaching assembly 390 includes an overturning assembly 360, and the overturning assembly 360 includes a main pressing cylinder 361, a main pressing member 362, a side pressing cylinder 363 and a side pressing member 364. The main pressing cylinder 361 is arranged to drive the main pressing member 362 to press the main coating area 410 and the main surface 211, and the side pressing cylinder 363 is arranged to drive the side pressing member 364 to press the side coating area 430 and the side surface 213.

The side pressing member 364 and the main pressing members 362 can clamp and position the electrode assembly 200 and the coating film 400. The main pressing member 362 is arranged to avoid the sticking position of the second tape 520 when pressing the main coating area 410 and the main surface 211, and the side pressing member 364 is arranged to avoid the sticking position of the second tape 520 when pressing the side coating area 430 and the side surface 213. Such an arrangement can improve the stability of the tape attaching process.

According to some embodiments of the present application, optionally, as shown in FIG. 25 to FIG. 31, the overturning assembly 360 includes a rotating motor 365 and a rotating holder 366. The main pressing cylinder 361, the main pressing member 362, the side pressing cylinder 363 and the side pressing member 364 are arranged on the rotating holder 366, and the rotating motor 365 is arranged to drive the rotating holder 366 to rotate. The axis of rotation of the rotating holder 366 is parallel to the second direction D2.

Such an arrangement can improve the degree of freedom of movement of the electrode assembly 200 and facilitate sticking the second tape 520 at different positions of the electrode assembly 200. Furthermore, the rotating motor 365 is arranged to drive the rotating holder 366 to rotate 180° so as to attach the second tape 520 to two opposite sides of the electrode assembly 200 respectively.

According to some embodiments of the present application, optionally, as shown in FIG. 25 to FIG. 31, the second tape attaching assembly 390 includes two second unwinding mechanisms 391. The overturning assembly 360 includes a shifting motor 367 and a shifting holder 368. The main pressing cylinder 361, the main pressing member 362, the side pressing cylinder 363, the side pressing member 364, the rotating motor 365, and the rotating holder 366 are arranged on the shifting holder 368. The shifting motor 367 is arranged to drive the shifting holder 368 to move along the spaced direction D5 of the two second unwinding mechanisms 391.

Each second unwinding mechanism 391 and a second cutting mechanism 393 can form a group. By arranging the two groups of second unwinding mechanisms 391 and second cutting mechanisms 393, the interference of a roll change operation for the second tape roll 396 on the tape attaching process can be reduced, and the tape taking efficiency can be improved. Furthermore, two groups of second unwinding mechanisms 391 and second cutting mechanisms 393 are layered in a height direction of the second tape attaching assembly 390.

By arranging the shifting motor 367 to drive the shifting holder 368 to move along the spaced direction D5 of the two second unwinding mechanisms 391, a position of the electrode assembly 200 can correspond to a position of one group of second unwinding mechanism 391 and second cutting mechanism 393 that is working, which facilitates the tape attaching operation.

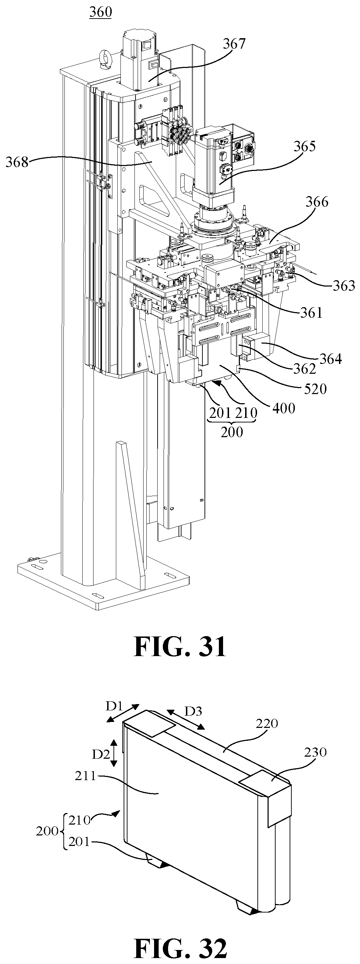

According to some embodiments of the present application, optionally, as shown in FIG. 4 and FIG. 32, the electrode main body 210 includes two electrode modules 220 stacked on each other along the first direction D1, and each electrode module 220 includes a positive electrode plate 221, a diaphragm 222 and a negative electrode plate 223 arranged in sequence.

Such an arrangement is beneficial to improving the space utilization of the electrode assembly 200 and improving the energy storage density of the electrode assembly 200.

Furthermore, the two electrode modules 220 can be connected in series or in parallel via the tab portion 201.

Optionally, the two electrode modules 220 may be fixed together by a fixing member 230 to improve the stability of the coating process. For example, the fixing member 230 is tape.

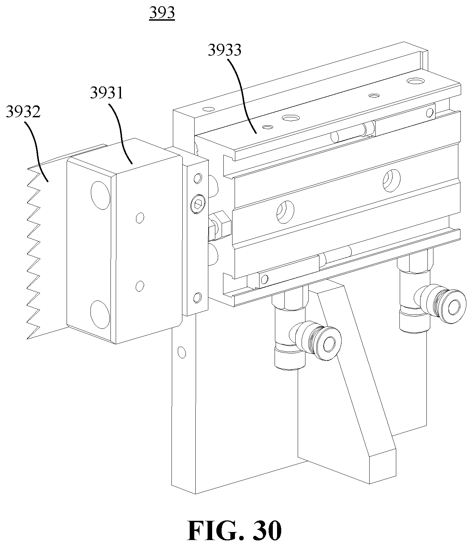

According to some embodiments of the present application, optionally, as shown in FIG. 5 and FIG. 30, the electrode assembly 200 includes an electrode main body 210, the electrode main body 210 has a first direction D1, a second direction D2 and a third direction D3 that are orthogonal to each other, and includes two main surfaces 211 arranged opposite to each other along the first direction D1, two end surfaces 212 arranged opposite to each other along the second direction D2, and two side surfaces 213 arranged opposite to each other along the third direction D3, and the coating device 300 includes a discharge assembly 310, a cutting assembly 320, and a first coating assembly 330. The discharge assembly 310 is used to store and release the material strip 401, which includes a plurality of coating films 400 connected in sequence along the length direction D7 of the material strip 401, and each coating film 400 includes two main coating areas 410 spaced apart from each other and a connecting area 420 connected between the two main coating areas 410. The cutting assembly 320 is used to cut a head end coating film 409 located at a head end of the material strip 401 from the material strip 401. The first coating assembly 330 is used to coat the first 212a of the two end surfaces 212 with the connecting area 420 of the head end coating film 409, and to coat each of the two main surfaces 211 with corresponding one of the two main coating areas 410, so as to form an electrode coating body 240. The first coating assembly 330 includes an electrode drive mechanism 331 and a main surface coating mechanism 332. The electrode drive mechanism 331 is used to transfer the electrode assembly 200 along the second direction D2 to make the first 212a of the two end surfaces 212 contact the connecting area 420. The main surface coating mechanism 332 is used to continue to drive the electrode assembly 200 along the second direction D2 after the first 212a of the two end surfaces 212 contacts the connecting area 420, and to make each of the two main surfaces 211 be coated with corresponding one of the two main coating areas 410. The main surface coating mechanism 332 includes two pressure roller groups 333 arranged side by side and spaced apart from each other, the electrode drive mechanism 331 feeds the electrode assembly 200 and the head end coating film 409 into the space between the two pressure roller groups 333 after the first 212a of the two end surfaces 212 contacts the connecting area 420, and the two pressure roller groups 333 drive the electrode assembly 200 in a rolling manner and press each of the two main coating areas 410 on corresponding one of the two main surfaces 211. At least one of the two pressure roller groups 333 is arranged to be capable of floating along the first direction D1. With such an arrangement, the distance between the two pressure roller groups 333 can be adaptively adjusted, so that the distance between the two pressure roller groups 333 can more match the size of the electrode assembly 200 along the first direction D1, thereby improving the coating effect. One of the two pressure roller groups 333 is an active pressure roller group, or the two pressure roller groups 333 are active pressure roller groups 333 respectively, and a movement direction D8 of a contact point between the active pressure roller group 333 and the main surface 211 is consistent with a movement direction D9 of the electrode drive mechanism 331. The first coating assembly 330 further includes a first film positioning mechanism 334 and a second film positioning mechanism 335, the first film positioning mechanism 334 is used to position an end of the head end coating film 409 toward the discharge assembly 310, the second film positioning mechanism 335 is used to position the other end of the head end coating film 409 away from the discharge assembly 310, so that before the first 212a of the two end surfaces 212 contacts the connecting area 420, the connecting area 420 and the two main coating areas 410 of the head end coating film 409 are coplanar with each other, and the second direction D2 is perpendicular to a plane where the connecting area 420 is located. The first coating assembly 330 further includes a third film positioning mechanism 336, the third film positioning mechanism 336 is located on a side of the first film positioning mechanism 334 toward the discharge assembly 310 and is used to position a subsequent coating film 411 adjacent to the head end coating film 409, and the cutting assembly 320 cuts the material strip 401 between the first film positioning mechanism 334 and the third film positioning mechanism 336. The third film positioning mechanism 336 is further arranged to feed the subsequent coating film 411 into the first film positioning mechanism 334 and the second film positioning mechanism 335 after the head end coating film 409 is cut from the material strip 401. The electrode assembly 200 also includes a tab portion 201 protruding from the first 212a of the two end surfaces 212, an opening 421 is provided on the connecting area 420, and the first coating assembly 330 is configured so that the tab portion 201 penetrates through the opening 421. The discharge assembly 310 includes two discharge mechanisms 311, the discharge mechanisms 311 store and release the material strips respectively, wherein the material strip 401 corresponding to the first of the two discharge mechanisms 311 serves as a working material strip 402 and is fed into the first coating assembly 330. The material strip 401 corresponding to the second of the two discharge mechanisms 311 serves as a spare material strip 405, the coating device 300 further includes a switching assembly 340, and the switching assembly 340 is used to fix the spare material strip 405 to the working material strip 402, so that the spare material strip 405 is fed into the first coating assembly 330 under driving of the working material strip 402. The switching assembly 340 includes two pressing mechanisms 341 and a material strip cutting mechanism 342, the two pressing mechanisms 341 cooperate with each other to clamp the working material strip 402 and the spare material strip 405 from two sides of the working material strip 402 and the spare material strip 405, the material strip cutting mechanism 342 cuts the working material strip 402 and the spare material strip 405 in a clamped state so that the working material strip 402 and the spare material strip 405 each form an upstream part and a downstream part located upstream and downstream of a cutting position of the material strip cutting mechanism 342, and the two pressing mechanisms 341 connect the downstream part 403 of the working material strip 402 with the upstream part 407 of the spare material strip 405. The two pressing mechanisms 341 each include a pressing member 3411, at least one of the two pressing mechanisms 341 includes a pressing drive member 3412, the pressing member 3411 includes a first pressing area 3414 and a second pressing area 3415 separated by a slot 3413, the pressing drive member 3412 drives at least one pressing member 3411 so that the two first pressing areas 3414 cooperate with each other to clamp the working material strip 402 and the spare material strip 405, the two second pressing areas 3415 cooperate with each other to clamp the working material strip 402 and the spare material strip 405, and the material strip cutting mechanism 342 includes a cutter 3421, which is telescopically arranged in a slot 3413 of the first of the two pressing members 3411, and extends into a slot 3413 of the second of the two pressing members 3411 in the clamped state, thereby cutting the working material strip 402 and the spare material strip 405. The material strip cutting mechanism 342 includes an elastic member 3422, and the elastic member 3422 is arranged to elastically support the first of the two pressing members 3411 so that the first of the two pressing members 3411 elastically retreats in the clamped state, thereby making the cutter 3421 extend out of the slot 3413 of the first of the two pressing members 3411. The first of the two pressing mechanisms 341 is arranged to simultaneously adsorb the downstream part 403 of the working material strip 402 and the upstream part 407 of the spare material strip 405, and the second of the two pressing mechanisms 341 is arranged to apply connecting tape at a joining position of the downstream part 403 of the working material strip 402 and the upstream part 407 of the spare material strip 405. The two pressing mechanisms 341 each include a pressing member 3411, the pressing member 3411 of the first of the two pressing mechanisms 341 is arranged to simultaneously adsorb the downstream part 403 of the working material strip 402 and the upstream part 407 of the spare material strip 405, the second of the two pressing mechanisms 341 includes a pressing drive member 3412, a rotating drive member 3417, and a tape attaching member 3418, the tape attaching member 3418 is arranged to carry the connecting tape, and the rotating drive member 3417 is arranged to be capable of rotationally driving the tape attaching member 3418 and the pressing member 3411 of the second of the two pressing mechanisms 341 to switch between a first state and a second state. In the first state, the pressing members 3411 in the two pressing mechanisms 341 are arranged opposite to each other, in the second state, the tape attaching member 3418 and the pressing member 3411 of the first of the two pressing mechanisms 341 are arranged opposite to each other, and the pressing drive member 3412 is arranged to drive the pressing members 3411 in the two pressing mechanisms 341 to press each other in the first state, and to drive the tape attaching member 3418 and the pressing member 3411 of the first of the two pressing mechanisms 341 to press each other in the second state. The discharge assembly 310 corresponding to the working material strip 402 is further arranged to collect the upstream part 404 of the working material strip 402, and the switching assembly 340 further includes a collecting mechanism 312 for collecting the downstream part 406 of the spare material strip 405. During a process of collecting the upstream part 404 of the working material strip 402 and the downstream part 406 of the spare material strip 405, the two pressing mechanisms 341 are in a separated state, and the two pressing mechanisms 341 are further arranged to respectively adsorb the downstream part 403 of the working material strip 402 and the upstream part 407 of the spare material strip 405, and transfer the downstream part 403 of the working material strip 402 and the upstream part 407 of the spare material strip 405 to the first of the two pressing mechanisms 341 after the upstream part 404 of the working material strip 402 and the downstream part 406 of the spare material strip 405 are collected. The two pressing mechanisms 341 each include a pressing member 3411, at least one of the two pressing mechanisms 341 includes a pressing drive member 3412, the pressing member 3411 includes a first pressing area 3414 and a second pressing area 3415 separated from each other, the pressing drive member 3412 drives at least one pressing member 3411 so that the two first pressing areas 3414 cooperate with each other to clamp the working material strip 402 and the spare material strip 405, the two second pressing areas 3415 cooperate with each other to clamp the working material strip 402 and the spare material strip 405, and the material strip cutting mechanism 342 cuts the working material strip 402 and the spare material strip 405 in a separated area of the first pressing area 3414 and the second pressing area 3415. After cutting is completed, the pressing drive member 3412 drives the two pressing members 3411 to be separated from each other, the two pressing members 3411 respectively adsorb the downstream part 403 of the working material strip 402 and the upstream part 407 of the spare material strip 405, after the upstream part 404 of the working material strip 402 and the downstream part 406 of the spare material strip 405 are collected, the pressing drive member 3412 drives the two pressing members 3411 to be separated from each other, and the first of the two pressing mechanisms 341 simultaneously adsorbs the downstream part 403 of the working material strip 402 and the upstream part 407 of the spare material strip 405. The coating device 300 further includes a positioning assembly 350, which is arranged to clamp and fix the electrode coating body 240 output by the first coating assembly 330 from outer sides of the two main coating areas 410. The coating film 400 includes a side coating area 430 connected with the main coating area 410, the coating device 300 further includes a second coating assembly 370, the positioning assembly 350 transfers the electrode coating body 240 to the second coating assembly 370, and the second coating assembly 370 is arranged to drive the side coating area 430 to contact and coat the side surface 213. The second coating assembly 370 includes a side surface pressing plate 371, a first pressing plate drive mechanism 372, and a second pressing plate drive mechanism 373, the first pressing plate drive mechanism 372 is used to drive the side surface pressing plate 371 along the first direction D1 so that the side surface pressing plate 371 pushes the side coating area 430 to be bent toward the side surface 213 relative to the main coating area 410, and the second pressing plate drive mechanism 373 is used to drive the side surface pressing plate 371 along the third direction D3 so that the side surface pressing plate 371 presses the side coating area 430 on the side surface 213. The coating film 400 includes an end coating area 440 connected with the main coating area 410, and the second coating assembly 370 is arranged to drive the end coating area 440 to contact and coat the second 212b of the two end surfaces 212. The second coating assembly 370 includes an end surface pressing plate 374, a first pressing plate drive mechanism 372, and a third pressing plate drive mechanism 375, the first pressing plate drive mechanism 372 is used to drive the end surface pressing plate 374 along the first direction D1 so that the end surface pressing plate 374 pushes the end coating area 440 to be bent toward the second 212b of the two end surfaces 212 relative to the main coating area 410, and the third pressing plate drive mechanism 375 is used to drive the end surface pressing plate 374 along the second direction D2 so that the end surface pressing plate 374 presses the end coating area 440 on the second 212b of the two end surfaces 212. The first pressing plate drive mechanism 372 includes a pressing plate drive motor 377, a first pressing plate holder 378, and a second pressing plate holder 379. The pressing plate drive motor 377 is arranged on the first pressing plate holder 378, and drives the second pressing plate holder 379 to move relative to the first pressing plate holder 378. The second pressing plate drive mechanism 373 includes a first pressing plate cylinder 376, which is arranged on the second pressing plate holder 379, and the first pressing plate cylinder 376 drives the side surface pressing plate 371 to move relative to the second pressing plate holder 379. The third pressing plate drive mechanism 375 includes a second pressing plate cylinder 3761, which is arranged on the second pressing plate holder 379, and the second pressing plate cylinder 3761 drives the end surface pressing plate 374 to move relative to the second pressing plate holder 379. The coating film 400 further includes a side coating area 430 and an end coating area 440 connected with the main coating area 410, wherein the side coating area 430 coats the side surface 213, the end coating area 440 coats the second 212b of the two end surfaces 212, the coating device 300 further includes a first tape attaching assembly 380, which is used to drive the electrode assembly 200 and first tape 510 to perform a relative movement, the first tape 510 includes a first part and a second part connected with each other, and the first tape attaching assembly 380 is arranged to attach the first part 511 of the first tape 510 to the side coating area 430 and the second part 512 of the first tape 510 to the end coating area 440 at a corner formed by the side surface 213 and the second 212b of the two end surfaces 212. The first tape attaching assembly 380 includes a first unwinding mechanism 381, a first tape pulling mechanism 382, and a first cutting mechanism 383, the first unwinding mechanism 381 is arranged to place and release a first tape roll 384, the first tape pulling mechanism 382 is arranged to clamp and pull a head end of a released part of the first tape roll 384, and the first cutting mechanism 383 is arranged to cut the first tape 510 from the released part of the first tape roll 384. The first tape pulling mechanism 382 includes a first tape clamping cylinder 3821, a first tape pulling motor 3822, and a first tape clamping member 3823, the first tape clamping cylinder 3821 is used to drive the first tape clamping member 3823 to clamp the head end of the released part, and the first tape pulling motor 3822 is used to drive the first tape clamping member 3823 to move to pull the released part. The first unwinding mechanisms 381 and the first cutting mechanisms 383 are two corresponding groups. The first tape attaching assembly 380 includes a switching mechanism 385, and the switching mechanism 385 includes a material roll holder 3851 and a switching motor 3852. The two groups of first unwinding mechanisms 381 and first cutting mechanisms 383 are arranged on the material roll holder 3851. The switching motor 3852 drives the material roll holder 3851 to rotate around a predetermined rotation axis, so that the two groups of the first unwinding mechanisms 381 and the first cutting mechanisms 383 can switch between a spare position and a working position for the first tape pulling mechanism 382 and the first cutting mechanisms 383 to operate. The rotation axis is perpendicular to a plane where the released part is located. The first tape attaching assembly 380 includes a first tape taking mechanism 386, which is used to adsorb and take away the first tape 510. The first cutting mechanism 383 includes a first pressing block 3831, a first cutter 3832, and a first cutting cylinder 3833. The first pressing block 3831 and the first cutter 3832 are relatively fixedly arranged. The first cutting cylinder 3833 is arranged to drive the first pressing block 3831 to press the released part on the first tape taking mechanism 386, and drive the first cutter 3832 to cut the first tape 510 from the released part. The first tape attaching assembly 380 includes a first tape taking mechanism 386, which is used to adsorb and take away the first tape 510. The first tape taking mechanism 386 includes a first tape taking member 3861, a first tape taking motor 3862, a second tape taking motor 3863, a first tape taking holder 3864, and a second tape taking holder 3865. The first tape taking member 3861 is used to adsorb the first tape 510. The first tape taking motor 3862 is arranged on the first tape taking holder 3864 and drives the second tape taking holder 3865 to move above the released part. The second tape taking motor 3863 is arranged on the second tape taking holder 3865, and drives the first tape taking member 3861 o approach and move away from a plane where the released part is located. The first tape taking member 3861 includes a first sub-tape taking portion 3866 and a second sub-tape taking portion 3867. The first sub-tape taking portion 3866 is used to adsorb the first part 511 of the first tape 510 and attach the same to the side coating area 430. The second sub-tape taking portion 3867 is used to adsorb the second part 512 of the first tape 510 and attach the same to the end coating area 440. The first sub-tape taking portion 3866 is a telescopic member. The second tape taking motor 3863 drives the first tape taking member 3861 along the third direction D3, and the first sub-tape taking portion 3866 presses the first part 511 of the first tape 510 on the side coating area 430 and contracts, so that the second sub-tape taking portion 3867 can continue to move along the third direction D3 and fit the end coating area 440, thereby attaching the second part 512 of the first tape 510 to the end coating area 440. Or, the second sub-tape taking portion 3867 is a telescopic member. The second tape taking motor 3863 drives the first tape taking member 3861 along the second direction D2, and the second sub-tape taking portion 3867 presses the second part 512 of the first tape 510 on the end coating area 440 and contracts, so that the first sub-tape taking portion 3866 can continue to move along the second direction D2 and fit the side coating area 430, thereby attaching the first part 511 of the first tape 510 to the side coating area 430. The first cutting mechanism 383 is arranged to cut two pieces of first tape 510 from the released part, the number of the first tape taking members 3861 is two, and the first tape taking members 3861 respectively adsorb the corresponding first tape 510. The first tape attaching assembly 380 includes the first tape taking mechanism 386, the first tape taking mechanism 386 is used to adsorb and take away the first tape 510, the first tape taking mechanism 386 includes the first tape taking members 3861, a first tape taking motor 3862, a second tape taking motor 3863, a first tape taking holder 3864, a second tape taking holder 3865, a third tape taking holder 3868, and a tape dispensing cylinder 3869. The first tape taking member 3861 is used to adsorb the first tape 510. The first tape taking motor 3862 is arranged on the first tape taking holder 3864 and drives the second tape taking holder 3865 to move above the released part. The second tape taking motor 3863 is arranged on the second tape taking holder 3865, and drives the third tape taking holder 3868 and the two first tape taking members 3861 to approach and move away from the plane where the released part is located. The tape dispensing cylinder 3869 is arranged on the third tape taking holder 3868, and the tape dispensing cylinder 3869 is arranged to drive the two first tape taking members 3861 away from each other, so that the two first tape taking members 3861 respectively correspond to two corners of the electrode assembly 200 spaced apart along the third direction D3. The coating device 300 further includes a second tape attaching assembly 390, which is used to drive the electrode assembly 200 and second tape 520 to perform a relative movement, the second tape 520 includes a first part and a second part connected with each other, and the second tape attaching assembly 390 is arranged to attach the first part 521 of the second tape 520 to the main coating area 410 and the second part 522 of the second tape 520 to the side coating area 430 at a corner formed by the side surface 213 and the main surface 211. The number of first parts 521 of the second tape 520 is two, the first parts 521 are located at two ends of the second part 522 of the second tape 520, and the second tape attaching assembly 390 is arranged to attach each of the two first parts of the second tape 520 to corresponding one of the two main coating areas 410. The second tape attaching assembly 390 includes a second unwinding mechanism 391, a second tape pulling mechanism 392, and a second cutting mechanism 393. The second unwinding mechanism 391 is arranged to place and release a second tape roll 396. The second tape pulling mechanism 392 is arranged to clamp and pull a head end of a released part of the second tape roll 396. The second cutting mechanism 393 is arranged to cut the second tape 520 from the released part of the second tape roll 396. The second tape pulling mechanism 392 includes a second tape clamping cylinder 3921, a second tape pulling motor 3922, and a second tape clamping member 3923. The second tape clamping cylinder 3921 is used to drive the second tape clamping member 3923 to clamp the head end of the released part, and the second tape pulling motor 3922 is used to drive the second tape clamping member 3923 to move to pull the released part. The second unwinding mechanisms 391 and the second cutting mechanisms 393 are two corresponding groups and are spaced apart along a width direction D4 of the released part. The second tape attaching assembly 390 includes a tape pulling holder 394, a tape pulling position switching cylinder 3941, and a tape pulling position switching holder 3942, the tape pulling position switching cylinder 3941 is arranged on the tape pulling holder 394, and the second tape pulling mechanism 392 is arranged on the tape pulling position switching holder 3942. The tape pulling position switching cylinder 3941 is arranged to drive the tape pulling position switching holder 3942 to move along a spaced direction D5 of the two second unwinding mechanisms 391, so that the second tape pulling mechanism 392 can switch between a spare position and a working position for the second tape pulling mechanism 392 to operate. The spare position and the working position are each provided with one group of the second unwinding mechanism 391 and the second cutting mechanism 393. The second tape attaching assembly 390 includes a second tape taking mechanism 395, which is used to adsorb and take away the second tape 520. The second cutting mechanism 393 includes a second pressing block 3931, a second cutter 3932, and a second cutting cylinder 3933. The second pressing block 3931 and the second cutter 3932 are relatively fixedly arranged. The second cutting cylinder 3933 is arranged to drive the second pressing block 3931 to press the released part on the second tape taking mechanism 395, and drive the second cutter 3932 to cut the second tape 520 from the released part. The second tape attaching assembly 390 includes a second tape taking mechanism 395, which is used to adsorb and take away the second tape 520. The second tape taking mechanism 395 includes a second tape taking member 3951, a fourth tape taking motor 3952, and a fourth tape taking holder 3953, and the second tape taking member 3951 is used to adsorb the second tape 520. The fourth tape taking motor 3952 is arranged on the fourth tape taking holder 3953, drives the second tape taking member 3951 to move to a position opposite to the released part along the thickness direction D6 of the released part, and drives the second tape taking member 3951 to approach and move away from the plane where the released part is located. The second tape taking member 3951 includes a third sub-tape taking portion 3954 and a fourth sub-tape taking portion 3955. The third sub-tape taking portion 3954 is used to adsorb the first part 521 of the second tape 520 and attach the same to the main coating area 410. The fourth sub-tape taking portion 3955 is used to adsorb the second part 522 of the second tape 520 and attach the same to the side coating area 430. The fourth sub-tape taking portion 3955 is a telescopic member. The fourth tape taking motor 3952 drives the second tape taking member 3951 along the third direction D3, and the fourth sub-tape taking portion 3955 presses the second part 522 of the second tape 520 on the side coating area 430 and contracts, so that the third sub-tape taking portion 3954 can continue to move along the third direction D3 and fit the main coating area 410, thereby attaching the first part 521 of the second tape 520 to the main coating area 410. The second unwinding mechanisms 391 and the second cutting mechanisms 393 are two corresponding groups and are spaced apart along a width direction D4 of the released part. The second tape taking mechanism 395 includes a tape taking position switching cylinder 3956 and a tape taking position switching holder 3957. The tape taking position switching cylinder 3956 is arranged on the fourth tape taking holder 3953, and the second tape taking member 3951 is arranged on the tape taking position switching holder 3957. The tape taking position switching cylinder 3956 is arranged to drive the tape taking position switching holder 3957 to move along a spaced direction D5 of the two second unwinding mechanisms 391, so that the second tape taking member 3951 can switch between a spare position and a working position for the second tape taking mechanism 395 to operate. The spare position and the working position are each provided with one group of the second unwinding mechanism 391 and the second cutting mechanism 393.

Optionally, the coating device 300 further includes a conveying device and an assembly device. The conveying device is used to convey a structure to be assembled to each station of the assembly device. The stations of the assembly device at least include a tab welding apparatus, a shell entering apparatus, a tab penetrating apparatus, an electrode terminal welding apparatus and a bottom cover welding apparatus.

The tab welding apparatus is used to weld a plurality of tab sheets of the electrode assembly 200 to form a tab portion 201. The shell entering apparatus is used to install the electrode assembly 200 into the shell 100 from an open end 112. The tab penetrating apparatus is used to clamp the tab portion 201 to penetrate through a through hole when the electrode assembly 200 is installed into the shell. The electrode terminal welding apparatus is used to weld the tab portion 201 penetrating through the through hole to a side of an electrode terminal facing away from an accommodating cavity. The bottom cover welding apparatus is used to weld a bottom cover to the open end 112 of the shell 100.

It should be noted that, in this embodiment, the conveying device includes a conveyor line, which can be a conveying structure formed by a conveyor roller driven by a motor matched with a conveyor belt, or a conveying structure formed by hinging motor-driven conveyor chain links, or an AGV conveyor cart, which can realize conveying in at least one direction and can support and ensure the stability of the structure to be assembled.

The purpose of the tab welding apparatus is to form the tab portion 201 after pre-welding the tab sheet, and an ultrasonic welding device can be selected, which can ensure that the tab is welded in a clamped and stable state. The shell entering apparatus is a pushing mechanism or a clamping mechanism, which can stably make the electrode assembly 200 move toward the open end 112 of the shell 100 and enter the accommodating cavity through the open end 112. Similarly, the tab penetrating apparatus may adopt a clamping structure or a guiding structure, which can guide the tab portion 201 to smoothly penetrate through the through hole without interfering with the shell 100. The electrode terminal welding apparatus is intended to achieve welding between the tab portion 201 and the electrode terminal, and may be a laser welding device by selecting. The bottom cover welding apparatus is intended to achieve circumferential edge welding between the bottom cover and the open end 112 of the shell 100, and is also a laser welding device.

In addition, the assembly device is not limited to including the tab welding apparatus, the shell entering apparatus, the tab penetrating apparatus, the electrode terminal welding apparatus and the bottom cover welding apparatus. Exemplarily, when the electrode assembly 200 includes a plurality of electrode modules 220, for example, two electrode modules 220, the assembly device also includes a matching assembly, which is used to stack the plurality of electrode modules 220 so that the tab sheets of the two electrode modules 220 are roughly opposite to each other, so that the conveying structure can convey the matched electrode modules 220 to the tab welding apparatus for welding the tab sheets, thereby facilitating the formation of the tab portion 201. As another example, in order to ensure the reliability of the battery assembly process, a dust removal station, an NG detection station, etc. may be added between any two adjacent stations, which is not limited in this embodiment.

An electrode assembly described in an embodiment of a coating method for an electrode assembly of the present application includes an electrode main body, and the electrode main body has a first direction, a second direction and a third direction that are orthogonal to each other, and includes two main surfaces arranged opposite to each other along the first direction, two end surfaces arranged opposite to each other along the second direction and two side surfaces arranged opposite to each other along the third direction. The coating method includes: S100: a discharge assembly is controlled to release a material strip, wherein the material strip includes a plurality of coating films connected in sequence along a length direction of the material strip, and each coating film includes two main coating areas spaced apart from each other and a connecting area connected between the two main coating areas. S200: a cutting assembly is controlled to cut a head end coating film located at a head end of the material strip from the material strip. S300: a first coating assembly is controlled to coat the first of the two end surfaces with the connecting area of the head end coating film, and to coat each of the two main surfaces with corresponding one of the two main coating areas, so as to form an electrode coating body.

According to some embodiments of the present application, optionally, controlling the first coating assembly to coat the first of the two end surfaces with the connecting area of the head end coating film, and to coat each of the two main surfaces with the corresponding one of the two main coating areas, so as to form the electrode coating body includes:
S310: an electrode drive mechanism is controlled to transfer the electrode assembly along the second direction to make the first of the two end surfaces contact the connecting area, and feed the electrode assembly into the space between two pressure roller groups.
S320: the two pressure roller groups are controlled to continue to transfer the electrode assembly along the first direction in a rolling manner and press each of the two main coating areas on corresponding one of the two main surfaces.

According to some embodiments of the present application, optionally, the discharge assembly includes two discharge mechanisms, the discharge mechanisms store and release the material strips respectively, wherein the material strip corresponding to the first of the two discharge mechanisms serves as a working material strip and is fed into the first coating assembly, and the material strip corresponding to the second of the two discharge mechanisms serves as a spare material strip. The coating method further includes:
S400: two pressing mechanisms are controlled to cooperate with each other to clamp the working material strip and the spare material strip from two sides of the working material strip and the spare material strip.
S500: a material strip cutting mechanism is controlled to cut the working material strip and the spare material strip in a clamped state so that the working material strip and the spare material strip each form an upstream part and a downstream part located upstream and downstream of a cutting position of the material strip cutting mechanism.
S600: the two pressing mechanisms are controlled to connect the downstream part of the working material strip with the upstream part of the spare material strip.

According to some embodiments of the present application, optionally, controlling the two pressing mechanisms to connect the downstream part of the working material strip with the upstream part of the spare material strip includes:
S610: the first of the two pressing mechanisms is controlled to simultaneously adsorb the downstream part of the working material strip and the upstream part of the spare material strip.
S620: the second of the two pressing mechanisms is controlled to apply connecting tape at a joining position of the downstream part of the working material strip and the upstream part of the spare material strip.

According to some embodiments of the present application, optionally, the electrode assembly includes a tab portion protruding from the first of the two end surfaces, and the connecting area is provided with an opening. Controlling the first coating assembly to coat the first of the two end surfaces with the connecting area of the head end coating film includes:
S330: the first coating assembly is controlled to make the tab portion penetrate through the opening and make the connecting area to contact and coat the first of the two end surfaces.

Regarding the embodiment of the coating method for the electrode assembly of the present application, reference may be made to the relevant contents of the embodiment of the coating equipment of the electrode assembly above, which will not be repeated here.

To sum up, the embodiments of the present application can achieve that the material belt can continuously provide the coating film, simplify the complexity of the material picking action of the coating film, enable continuous feeding of the coating film, reduce the arrangement of manipulators, simplify the action complexity of the coating process, and facilitate maintenance of the coating device..

Finally, it should be noted that: the above examples are merely used for illustrating rather than limiting the technical solutions of the present application. Although the present application has been described in detail with reference to the various afore-mentioned examples, those of ordinary skill in the art should understand that the technical solutions specified in the various aforementioned examples can still be modified, or some or all of the technical features therein can be equivalently substituted; and such modifications or substitutions do not make the essence of the corresponding technical solutions depart from the scope of the technical solutions of the various examples of the present application, which shall fall within the scope of the claims and the specification of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A coating device for an electrode assembly, wherein the electrode assembly comprises an electrode main body, the electrode main body has a first direction, a second direction and a third direction that are orthogonal to each other, and comprises two main surfaces arranged opposite to each other along the first direction, two end surfaces arranged opposite to each other along the second direction, and two side surfaces arranged opposite to each other along the third direction, and the coating device comprises:
a discharge assembly, used to store and release a material strip, wherein the material strip comprises a plurality of coating films connected in sequence along a length direction of the material strip, and each coating film comprises two main coating areas spaced apart from each other and a connecting area connected between the two main coating areas;
a cutting assembly, used to cut a head end coating film located at a head end of the material strip from the material strip; and
a first coating assembly, used to coat the first of the two end surfaces with the connecting area of the head end coating film, and to coat each of the two main surfaces with corresponding one of the two main coating areas, so as to form an electrode coating body.

2. The coating device according to claim 1, wherein the first coating assembly comprises:
an electrode drive mechanism, used to transfer the electrode assembly along the second direction to make the first of the two end surfaces contact the connecting area; and
a main surface coating mechanism, used to continue to drive the electrode assembly along the second direction after the first of the two end surfaces contacts the connecting area, and to make each of the two main surfaces be coated with corresponding one of the two main coating areas.

3. The coating device according to claim 2, wherein the main surface coating mechanism comprises two pressure roller groups arranged side by side and spaced apart from each other, the electrode drive mechanism feeds the electrode assembly and the head end coating film into the space between the two pressure roller groups after the first of the two end surfaces contacts the connecting area, and the two pressure roller groups drive the electrode assembly in a rolling manner and press each of the two main coating areas on corresponding one of the two main surfaces.

4. The coating device according to claim 3, wherein at least one of the two pressure roller groups is arranged to be capable of floating along the first direction.

5. The coating device according to claim 3, wherein one of the two pressure roller groups is an active pressure roller group, or the two pressure roller groups are active pressure roller groups respectively, and a movement direction of a contact point between the active pressure roller group and the main surface is consistent with a movement direction of the electrode drive mechanism.

6. The coating device according to claim 2 or 3, wherein the first coating assembly further comprises a first film positioning mechanism and a second film positioning mechanism, the first film positioning mechanism is used to position an end of the head end coating film toward the discharge assembly, the second film positioning mechanism is used to position the other end of the head end coating film away from the discharge assembly, so that before the first of the two end surfaces contacts the connecting area, the connecting area and the two main coating areas of the head end coating film are coplanar with each other, and the second direction is perpendicular to a plane where the connecting area is located.

7. The coating device according to claim 6, wherein the first coating assembly further comprises a third film positioning mechanism, the third film positioning mechanism is located on a side of the first film positioning mechanism toward the discharge assembly and is used to position a subsequent coating film adjacent to the head end coating film, and the cutting assembly cuts the material strip between the first film positioning mechanism and the third film positioning mechanism.

8. The coating device according to claim 7, wherein the third film positioning mechanism is further arranged to feed the subsequent coating film into the first film positioning mechanism and the second film positioning mechanism after the head end coating film is cut from the material strip.

9. The coating device according to claim 1, wherein the electrode assembly further comprises a tab portion protruding from the first of the two end surfaces, the connecting area is provided with an opening, and the first coating assembly is arranged so that the tab portion penetrates through the opening.

10. The coating device according to claim 1, wherein the discharge assembly comprises two discharge mechanisms, the discharge mechanisms store and release the material strips respectively, wherein the material strip corresponding to the first of the two discharge mechanisms serves as a working material strip and is fed into the first coating assembly, the material strip corresponding to the second of the two discharge mechanisms serves as a spare material strip, the coating device further comprises a switching assembly, and the switching assembly is used to fix the spare material strip to the working material strip, so that the spare material strip is fed into the first coating assembly under driving of the working material strip.

11. The coating device according to claim 10, wherein the switching assembly comprises two pressing mechanisms and a material strip cutting mechanism, the two pressing mechanisms cooperate with each other to clamp the working material strip and the spare material strip from two sides of the working material strip and the spare material strip, the material strip cutting mechanism cuts the working material strip and the spare material strip in a clamped state so that the working material strip and the spare material strip each form an upstream part and a downstream part located upstream and downstream of a cutting position of the material strip cutting mechanism, and the two pressing mechanisms connect the downstream part of the working material strip with the upstream part of the spare material strip.

12. The coating device according to claim 11, wherein the two pressing mechanisms each comprise a pressing member, at least one of the two pressing mechanisms comprises a pressing drive member, the pressing member comprises a first pressing area and a second pressing area separated by a slot, the pressing drive member drives at least one pressing member so that the two first pressing areas cooperate with each other to clamp the working material strip and the spare material strip, the two second pressing areas cooperate with each other to clamp the working material strip and the spare material strip, and the material strip cutting mechanism comprises a cutter, which is telescopically arranged in a slot of the first of the two pressing members, and extends into a slot of the second of the two pressing members in the clamped state, thereby cutting the working material strip and the spare material strip.

13. The coating device according to claim 12, wherein the material strip cutting mechanism comprises an elastic member, and the elastic member is arranged to elastically support the first of the two pressing members so that the first of the two pressing members elastically retreats in the clamped state, thereby making the cutter extend out of the slot of the first of the two pressing members.

14. The coating device according to claim 11, wherein the first of the two pressing mechanisms is arranged to simultaneously adsorb the downstream part of the working material strip and the upstream part of the spare material strip, and the second of the two pressing mechanisms is arranged to apply connecting tape at a joining position of the downstream part of the working material strip and the upstream part of the spare material strip.

15. The coating device according to claim 14, wherein the two pressing mechanisms each comprise a pressing member, the pressing member of the first of the two pressing mechanisms is arranged to simultaneously adsorb the downstream part of the working material strip and the upstream part of the spare material strip, the second of the two pressing mechanisms comprises a pressing drive member, a rotating drive member, and a tape attaching member, the tape attaching member is arranged to carry the connecting tape, the rotating drive member is arranged to be capable of rotationally driving the tape attaching member and the pressing member of the second of the two pressing mechanisms to switch between a first state and a second state, in the first state, the pressing members in the two pressing mechanisms are arranged opposite to each other, in the second state, the tape attaching member and the pressing member of the first of the two pressing mechanisms are arranged opposite to each other, and the pressing drive member is arranged to drive the pressing members in the two pressing mechanisms to press each other in the first state, and to drive the tape attaching member and the pressing member of the first of the two pressing mechanisms to press each other in the second state.

16. The coating device according to claim 14, wherein the discharge assembly corresponding to the working material strip is further arranged to collect the upstream part of the working material strip, and the switching assembly further comprises a collecting mechanism for collecting the downstream part of the spare material strip.

17. The coating device according to claim 16, wherein during a process of collecting the upstream part of the working material strip and the downstream part of the spare material strip, the two pressing mechanisms are in a separated state, and the two pressing mechanisms are further arranged to respectively adsorb the downstream part of the working material strip and the upstream part of the spare material strip, and transfer the downstream part of the working material strip and the upstream part of the spare material strip to the first of the two pressing mechanisms after the upstream part of the working material strip and the downstream part of the spare material strip are collected.

18. The coating device according to claim 14, wherein the two pressing mechanisms each comprise a pressing member, at least one of the two pressing mechanisms comprises a pressing drive member, the pressing member comprises a first pressing area and a second pressing area separated from each other, the pressing drive member drives at least one pressing member so that the two first pressing areas cooperate with each other to clamp the working material strip and the spare material strip, the two second pressing areas cooperate with each other to clamp the working material strip and the spare material strip, and the material strip cutting mechanism cuts the working material strip and the spare material strip in a separated area of the first pressing area and the second pressing area; and
after cutting is completed, the pressing drive member drives the two pressing members to be separated from each other, the two pressing members respectively adsorb the downstream part of the working material strip and the upstream part of the spare material strip, after the upstream part of the working material strip and the downstream part of the spare material strip are collected, the pressing drive member drives the two pressing members to be separated from each other, and the first of the two pressing mechanisms simultaneously adsorbs the downstream part of the working material strip and the upstream part of the spare material strip.

19. The coating device according to claim 1, wherein the coating device further comprises a positioning assembly, and the positioning assembly is arranged to clamp and fix the electrode coating body output by the first coating assembly from outer sides of the two main coating areas.

20. The coating device according to claim 19, wherein the coating film comprises a side coating area connected with the main coating area, the coating device further comprises a second coating assembly, the positioning assembly transfers the electrode coating body to the second coating assembly, and the second coating assembly is arranged to drive the side coating area to contact and coat the side surface.

21. The coating device according to claim 20, wherein the second coating assembly comprises a side surface pressing plate, a first pressing plate drive mechanism, and a second pressing plate drive mechanism, the first pressing plate drive mechanism is used to drive the side surface pressing plate along the first direction so that the side surface pressing plate pushes the side coating area to be bent toward the side surface relative to the main coating area, and the second pressing plate drive mechanism is used to drive the side surface pressing plate along the third direction so that the side surface pressing plate presses the side coating area on the side surface.

22. The coating device according to claim 21, wherein the coating film comprises an end coating area connected with the main coating area, and the second coating assembly is arranged to drive the end coating area to contact and coat the second of the two end surfaces.

23. The coating device according to claim 22, wherein the second coating assembly comprises an end surface pressing plate, a first pressing plate drive mechanism, and a third pressing plate drive mechanism, the first pressing plate drive mechanism is used to drive the end surface pressing plate along the first direction so that the end surface pressing plate pushes the end coating area to be bent toward the second of the two end surfaces relative to the main coating area, and the third pressing plate drive mechanism is used to drive the end surface pressing plate along the second direction so that the end surface pressing plate presses the end coating area on the second of the two end surfaces.

24. The coating device according to claim 1, wherein the coating film further comprises a side coating area and an end coating area connected with the main coating area, wherein the side coating area coats the side surface, the end coating area coats the second of the two end surfaces, the coating device further comprises a first tape attaching assembly, which is used to drive the electrode assembly and first tape to perform a relative movement, the first tape comprises a first part and a second part connected with each other, and the first tape attaching assembly is arranged to attach the first part of the first tape to the side coating area and the second part of the first tape to the end coating area at a corner formed by the side surface and the second of the two end surfaces.

25. The coating device according to claim 24, wherein the first tape attaching assembly comprises a first unwinding mechanism, a first tape pulling mechanism, and a first cutting mechanism, the first unwinding mechanism is arranged to place and release a first tape roll, the first tape pulling mechanism is arranged to clamp and pull a head end of a released part of the first tape roll, and the first cutting mechanism is arranged to cut the first tape from the released part of the first tape roll.

26. The coating device according to claim 25, wherein the first tape pulling mechanism comprises a first tape clamping cylinder, a first tape pulling motor, and a first tape clamping member, the first tape clamping cylinder is used to drive the first tape clamping member to clamp the head end of the released part, and the first tape pulling motor is used to drive the first tape clamping member to move to pull the released part.

27. The coating device according to claim 25, wherein the first unwinding mechanisms and the first cutting mechanisms are two corresponding groups; the first tape attaching assembly comprises a switching mechanism, and the switching mechanism comprises a material roll holder and a switching motor; the two groups of the first unwinding mechanisms and the first cutting mechanisms are arranged on the material roll holder; the switching motor drives the material roll holder to rotate around a predetermined rotation axis, so that the two groups of the first unwinding mechanisms and the first cutting mechanisms can switch between a spare position and a working position for the first tape pulling mechanism and the first cutting mechanisms to operate; and the rotation axis is perpendicular to a plane where the released part is located.

28. The coating device according to claim 25, wherein the first tape attaching assembly comprises a first tape taking mechanism, which is used to adsorb and take away the first tape; the first cutting mechanism comprises a first pressing block, a first cutter, and a first cutting cylinder; the first pressing block and the first cutter are relatively fixedly arranged; and the first cutting cylinder is arranged to drive the first pressing block to press the released part on the first tape taking mechanism, and drive the first cutter to cut the first tape from the released part.

29. The coating device according to claim 25, wherein the first tape attaching assembly comprises a first tape taking mechanism, which is used to adsorb and take away the first tape; the first tape taking mechanism comprises a first tape taking member, a first tape taking motor, a second tape taking motor, a first tape taking holder, and a second tape taking holder; the first tape taking member is used to adsorb the first tape; the first tape taking motor is arranged on the first tape taking holder, and drives the second tape taking holder to move above the released part; and the second tape taking motor is arranged on the second tape taking holder, and drives the first tape taking member to approach and move away from a plane where the released part is located.

30. The coating device according to claim 29, wherein the first tape taking member comprises a first sub-tape taking portion and a second sub-tape taking portion; the first sub-tape taking portion is used to adsorb the first part of the first tape and attach the same to the side coating area; and the second sub-tape taking portion is used to adsorb the second part of the first tape and attach the same to the end coating area.

31. The coating device according to claim 30, wherein the first sub-tape taking portion is a telescopic member; the second tape taking motor drives the first tape taking member along the third direction, and the first sub-tape taking portion presses the first part of the first tape on the side coating area and contracts, so that the second sub-tape taking portion can continue to move along the third direction and fit the end coating area, thereby attaching the second part of the first tape to the end coating area; or,
the second sub-tape taking portion is a telescopic member; the second tape taking motor drives the first tape taking member along the second direction, and the second sub-tape taking portion presses the second part of the first tape on the end coating area and contracts, so that the first sub-tape taking portion can continue to move along the second direction and fit the side coating area, thereby attaching the first part of the first tape to the side coating area.

32. The coating device according to claim 31, wherein the first cutting mechanism is arranged to cut two pieces of first tape from the released part, the number of the first tape taking members is two, and the first tape taking members respectively adsorb the corresponding first tape; the first tape attaching assembly comprises the first tape taking mechanism, the first tape taking mechanism is used to adsorb and take away the first tape, and the first tape taking mechanism comprises the first tape taking members, a first tape taking motor, a second tape taking motor, a first tape taking holder, a second tape taking holder, a third tape taking holder, and a tape dispensing cylinder; the first tape taking members are used to adsorb the first tape; the first tape taking motor is arranged on the first tape taking holder, and drives the second tape taking holder to move above the released part; the second tape taking motor is arranged on the second tape taking holder, and drives the third tape taking holder and the two first tape taking members to approach and move away from the plane where the released part is located; and the tape dispensing cylinder is arranged on the third tape taking holder, and the tape dispensing cylinder is arranged to drive the two first tape taking members away from each other, so that the two first tape taking members respectively correspond to two corners of the electrode assembly spaced apart along the third direction.

33. The coating device according to claim 24, wherein the coating device further comprises a second tape attaching assembly, which is used to drive the electrode assembly and second tape to perform a relative movement, the second tape comprises a first part and a second part connected with each other, and the second tape attaching assembly is arranged to attach the first part of the second tape to the main coating area and the second part of the second tape to the side coating area at a corner formed by the side surface and the main surface.

34. The coating device according to claim 33, wherein the number of first parts of the second tape is two, the first parts are located at two ends of the second part of the second tape, and the second tape attaching assembly is arranged to attach each of the two first parts of the second tape to corresponding one of the two main coating areas.

35. The coating device according to claim 33 or 34, wherein the second tape attaching assembly comprises a second unwinding mechanism, a second tape pulling mechanism, and a second cutting mechanism; the second unwinding mechanism is arranged to place and release a second tape roll; the second tape pulling mechanism is arranged to clamp and pull a head end of a released part of the second tape roll; and the second cutting mechanism is arranged to cut the second tape from the released part of the second tape roll.

36. The coating device according to claim 35, wherein the second tape pulling mechanism comprises a second tape clamping cylinder, a second tape pulling motor, and a second tape clamping member; and the second tape clamping cylinder is used to drive the second tape clamping member to clamp the head end of the released part, and the second tape pulling motor is used to drive the second tape clamping member to move to pull the released part.

37. The coating device according to claim 35, wherein the second unwinding mechanisms and the second cutting mechanisms are two corresponding groups, and are spaced apart along a width direction of the released part; the second tape attaching assembly comprises a tape pulling holder, a tape pulling position switching cylinder, and a tape pulling position switching holder, the tape pulling position switching cylinder is arranged on the tape pulling holder, and the second tape pulling mechanism is arranged on the tape pulling position switching holder; the tape pulling position switching cylinder is arranged to drive the tape pulling position switching holder to move along a spaced direction of the two second unwinding mechanisms, so that the second tape pulling mechanism can switch between a spare position and a working position for the second tape pulling mechanism to operate; and the spare position and the working position are each provided with one group of the second unwinding mechanism and the second cutting mechanism.

38. The coating device according to claim 35, wherein the second tape attaching assembly comprises a second tape taking mechanism, which is used to adsorb and take away the second tape; the second cutting mechanism comprises a second pressing block, a second cutter, and a second cutting cylinder; the second pressing block and the second cutter are relatively fixedly arranged; and the second cutting cylinder is arranged to drive the second pressing block to press the released part on the second tape taking mechanism, and drive the second cutter to cut the second tape from the released part.

39. The coating device according to claim 35, wherein the second tape attaching assembly comprises a second tape taking mechanism, which is used to adsorb and take away the second tape; the second tape taking mechanism comprises a second tape taking member, a fourth tape taking motor, and a fourth tape taking holder, and the second tape taking member is used to adsorb the second tape; and the fourth tape taking motor is arranged on the fourth tape taking holder, drives the second tape taking member to move to be arranged opposite to the released part along a thickness direction of the released part, and drives the second tape taking member to approach and move away from a plane where the released part is located.

40. The coating device according to claim 39, wherein the second tape taking member comprises a third sub-tape taking portion and a fourth sub-tape taking portion; the third sub-tape taking portion is used to adsorb the first part of the second tape and attach the same to the main coating area; and the fourth sub-tape taking portion is used to adsorb the second part of the second tape and attach the same to the side coating area.

41. The coating device according to claim 40, wherein the fourth sub-tape taking portion is a telescopic member; the fourth tape taking motor drives the second tape taking member along the third direction, and the fourth sub-tape taking portion presses the second part of the second tape on the side coating area and contracts, so that the third sub-tape taking portion can continue to move along the third direction and fit the main coating area, thereby attaching the first part of the second tape to the main coating area.

42. The coating device according to claim 39, wherein the second unwinding mechanisms and the second cutting mechanisms are two corresponding groups, and are spaced apart along a width direction of the released part; the second tape taking mechanism comprises a tape taking position switching cylinder and a tape taking position switching holder; the tape taking position switching cylinder is arranged on the fourth tape taking holder, and the second tape taking member is arranged on the tape taking position switching holder; the tape taking position switching cylinder is arranged to drive the tape taking position switching holder to move along a spaced direction of the two second unwinding mechanisms, so that the second tape taking member can switch between a spare position and a working position for the second tape taking mechanism to operate; and the spare position and the working position are each provided with one group of the second unwinding mechanism and the second cutting mechanism.

43. A coating method for an electrode assembly, wherein the electrode assembly comprises an electrode main body, the electrode main body has a first direction, a second direction and a third direction that are orthogonal to each other, and comprises two main surfaces arranged opposite to each other along the first direction, two end surfaces arranged opposite to each other along the second direction, and two side surfaces arranged opposite to each other along the third direction, and the coating method comprises:
controlling a discharge assembly to release a material strip, wherein the material strip comprises a plurality of coating films connected in sequence along a length direction of the material strip, and each coating film comprises two main coating areas spaced apart from each other and a connecting area connected between the two main coating areas;
controlling a cutting assembly to cut a head end coating film located at a head end of the material strip from the material strip; and
controlling a first coating assembly to coat the first of the two end surfaces with the connecting area of the head end coating film, and to coat each of the two main surfaces with corresponding one of the two main coating areas, so as to form an electrode coating body.

44. The coating method according to claim 43, wherein controlling the first coating assembly to coat the first of the two end surfaces with the connecting area of the head end coating film, and to coat each of the two main surfaces with corresponding one of the two main coating areas comprises:
controlling an electrode drive mechanism to transfer the electrode assembly along the second direction to make the first of the two end surfaces contact the connecting area, and feed the electrode assembly into the space between two pressure roller groups; and
controlling the two pressure roller groups to continue to transfer the electrode assembly along the first direction in a rolling manner and press each of the two main coating areas on corresponding one of the two main surfaces.

45. The coating method according to claim 43, wherein the discharge assembly comprises two discharge mechanisms, the discharge mechanisms store and release the material strips respectively, wherein the material strip corresponding to the first of the two discharge mechanisms serves as a working material strip and is fed into the first coating assembly, and the material strip corresponding to the second of the two discharge mechanisms serves as a spare material strip; and
the coating method further comprises:
controlling two pressing mechanisms to cooperate with each other to clamp the working material strip and the spare material strip from two sides of the working material strip and the spare material strip;
controlling a material strip cutting mechanism to cut the working material strip and the spare material strip in a clamped state so that the working material strip and the spare material strip each form an upstream part and a downstream part located upstream and downstream of a cutting position of the material strip cutting mechanism; and
controlling the two pressing mechanisms to connect the downstream part of the working material strip with the upstream part of the spare material strip.

46. The coating method according to claim 45, wherein controlling the two pressing mechanisms to connect the downstream part of the working material strip with the upstream part of the spare material strip comprises:
controlling the first of the two pressing mechanisms to simultaneously adsorb the downstream part of the working material strip and the upstream part of the spare material strip; and
controlling the second of the two pressing mechanisms to apply connecting tape at a joining position of the downstream part of the working material strip and the upstream part of the spare material strip.

47. The coating method according to claim 43, wherein the electrode assembly comprises a tab portion protruding from the first of the two end surfaces, and the connecting area is provided with an opening; and
controlling the first coating assembly to coat the first of the two end surfaces with the connecting area of the head end coating film comprises:
controlling the first coating assembly to make the tab portion penetrate through the opening and make the connecting area to contact and coat the first of the two end surfaces.
